# EUROPEAN PATENT SPECIFICATION

(11) **EP 4 391 904 B1**
(45) Date of publication and mention of the grant of the patent: **29.07.2026**
(21) Application number: 22765942.2
(22) Date of filing: 24.08.2022
(51) Int. Cl.: B01D 15/10, G01F 1/64, G01F 15/14, G01F 25/10, G01N 27/02, G01N 30/60, G01N 30/86, G01N 30/88

(54) **METHOD OF MONITORING A CHEMICAL PROCESS IN A COLUMN APPARATUS AND A COLUMN APPARATUS**
VERFAHREN ZUR ÜBERWACHUNG EINES CHEMISCHEN VERFAHRENS IN EINER SÄULENVORRICHTUNG UND SÄULENVORRICHTUNG
PROCÉDÉ DE SURVEILLANCE D'UN PROCESSUS CHIMIQUE DANS UN APPAREIL À COLONNE ET APPAREIL À COLONNE

(30) Priority: 25.08.2021 GB 202112181
(43) Date of publication of application: 03.07.2024
(73) Proprietor: Industrial Tomography Systems Ltd, Manchester M3 3JZ (GB)
(72) Inventor: WEI, Hsin-Yu, Manchester, Greater Manchester M3 3JZ (GB); PRIMROSE, Kenneth, Manchester, Greater Manchester M3 3JZ (GB); HAZINEH, Wadoud, Manchester, Greater Manchester M3 3JZ (GB); AMRANI, Mohamed El-Hassan, Manchester, Greater Manchester M3 3JZ (GB)
(74) Representative: Marks & Clerk LLP
(86) International application number: PCT/GB2022/052177
(87) International publication number: WO 2023/026045

(56) References cited:
- DE-A1- 102009 031 873
- DE-A1- 102019 126 013
- GB-A- 2 456 050
- JP-A- 2006 194 751
- US-A- 3 759 816
- SON YONGHO ET AL: "Experimental investigation of liquid distribution in a packed column with structured packing under permanent tilt and roll motions using electrical resistance tomography", CHEMICAL ENGINEERING SCIENCE, OXFORD, GB, vol. 166, 19 March 2017 (2017-03-19), pages 168 - 180, XP085000706, ISSN: 0009-2509, DOI: 10.1016/J.CES.2017.03.044
- WU HAO ET AL: "Liquid distribution and hold-up measurement in counter current flow packed column by electrical capacitance tomography", CHEMICAL ENGENEERING JOURNAL, ELSEVIER, AMSTERDAM, NL, vol. 353, 3 July 2018 (2018-07-03), pages 519 - 532, XP085443898, ISSN: 1385-8947, DOI: 10.1016/J.CEJ.2018.07.016
- ZHAO TONG ET AL: "Investigation of pulsing flow regime transition and pulse characteristics in trickle-bed reactor by electrical resistance tomography", CHEMICAL ENGINEERING SCIENCE, vol. 130, 1 July 2015 (2015-07-01), GB, pages 8 - 17, XP055917587, ISSN: 0009-2509, DOI: 10.1016/j.ces.2015.03.010
- SINGH BRAJESH K. ET AL: "Feasibility of Electrical Resistance Tomography for measurements of liquid holdup distribution in a trickle bed reactor", CHEMICAL ENGENEERING JOURNAL, vol. 358, 1 February 2019 (2019-02-01), AMSTERDAM, NL, pages 564 - 579, XP055917596, ISSN: 1385-8947, DOI: 10.1016/j.cej.2018.10.009

## Description

The present application relates to a method of monitoring a chemical process in a column apparatus and a column apparatus. More particularly, the application relates to a method of monitoring a chemical process using a measurement system which comprises a set of electrodes. The chemical process may be a separation process, reaction process or isolation process.

Chemical processes in a column apparatus are known in the art and can be used for a variety of purposes. For example, a separation process in a column apparatus can be used to separate a component of a mixture from another component of the mixture. The separation process can be performed by packing a column with a stationary phase and flowing a mobile phase comprising the mixture through the stationary phase in the column. A component of the mobile phase will have a particular affinity for the stationary phase, so will take a longer or shorter time to pass through the column compared to a different component with a different affinity for the stationary phase. In this way, the different components of the mobile phase can be separated. Such a separation process may be referred to as chromatography or column chromatography.

A reaction process in a column apparatus can be used to synthesise a target molecule (also referred to as a target reagent), for example an oligonucleotide, protein, enzyme, antigen etc. The reaction process relies upon specific binding interactions between the target molecule and a complementary binding partner. The column is packed with a stationary phase. A complementary binding partner is selected based upon the desired target molecule (e.g. antibodies used in combination with an antigen, or complementary oligonucleotides) and attached to the stationary phase. By flowing a mobile phase containing the target molecule (or a component thereof) through the stationary phase, the target molecule (or component thereof) selectively binds to the complementary binding partner in the stationary phase. In this way, a target molecule can be selectively removed from a mixture with high specificity. Such a reaction process can be performed multiple times to iteratively synthesise a chain molecule. An example of such a synthesis process is oligonucleotide synthesis. Rather than synthesising a target molecule, a target molecule may be isolated (e.g. from a mixture) in a similar manner, in a process referred to as an isolation process. The isolation of a target molecule from a mixture may be considered a type of separation process. The synthesised or isolated target molecule can subsequently be removed from the stationary phase in a washing phase.

Typically, the fluid exiting the column (known as the eluate) is collected and analysed after the chemical process is complete, and information regarding the chemical process determined based on the analysis. However, the column and the chemical process taking place therein are a somewhat closed process. Furthermore, any disruption to the column and its contents during the chemical process may reduce the effectiveness of the process. It may be beneficial to provide a method of monitoring such a process without affecting the effectiveness of the process.

In "Experimental investigation of liquid distribution in a packed column with structured packing under permanent tilt and roll motions using electrical resistance tomography", Son et al. investigate liquid distribution in a pilot-scale packed column under offshore conditions, including three permanent tilt angles and four roll motions. In "Liquid distribution and hold-up measurement in counter current flow packed column by electrical capacitance tomography", Wu et al. describe ERT for use in analysing the distribution of a liquid phase across the packing of a gas-liquid packed column. In "Investigation of pulsing flow regime transition and pulse characteristics in trickle-bed reactor by electrical resistance tomography", Zhao et al. describe the use of ERT to noninvasively visualize the liquid distribution in a lab scale trickle bed reactor. In "Feasibility of electrical resistance tomography for measurements of liquid holdup distribution in a trickle bed reactor", Singh et al. describe using ERT to measure time-averaged liquid holdup distributions in trickle bed reactors. GB2456050A describes a chromatographic apparatus including a pair of electrodes, the electrodes adapted to be connected to a circuit for measuring the capacitance of the electrodes. The entire interior of the chromatography column that is suitable for containing the chromatographic bed is disposed between the electrodes, such that the capacitance measurement of the measurement circuit enables determination of the permittivity of the material within the chromatography column. In particular, the determined permittivity of the material within the chromatography column will be an average permittivity for the entire body of material that is disposed between the electrodes. US359816 describes monitoring a chromatographic separation by observing at a solid detection electrode with reference to a reference electrode any detectable constitution and concentration dependent electrical quantity.

In the present invention described herein there is a method of monitoring a chemical process in a column apparatus according to independent claim 1.

In a further example described herein there is a method of monitoring a chemical process in a column apparatus using a measurement system; the column apparatus configured to contain a solid stationary phase, receive a liquid mobile phase, and enable flow of the mobile phase through the stationary phase in a flow direction; the measurement system comprising a set of electrodes arranged at a sensing location of the column apparatus. The method comprises: providing the solid stationary phase within the column apparatus; causing the liquid phase to flow through the stationary phase in a flow direction; applying an electrical stimulation to the set of electrodes; receiving an electrical signal from the set of electrodes; and determining one or more characteristics of a chemical interaction between the solid stationary phase, and the liquid mobile phase by processing the electrical signal received from the set of electrodes.

The term chemical interaction is intended to encompass the various chemical processes disclosed herein. More generally, the term chemical interaction is intended to encompass any chemically selective intermolecular interaction. Examples of such chemically selective intermolecular interactions include covalent bonding, ionic bonding, hydrogen bonding or polar interactions. A chemically selective intermolecular interaction is an interaction in which the intrinsic properties of individual molecules are the dominant phenomenon. For example, hydrogen bonding may occur between any pair of suitably structured molecules, and is an example of a chemically selective intermolecular interaction. On the other hand, surface tension and viscosity are only apparent in large groupings of molecules, and are not examples of chemically selective intermolecular interactions.

It will further be understood that a chemical interaction between the solid stationary phase and the liquid mobile phase includes a chemical interaction between any component of the solid stationary phase and any component of the liquid mobile phase. For example, the solid stationary phase may comprise resin beads having proteins or oligonucleotides bonded thereto. The liquid mobile phase may comprise a liquid containing a mixture of molecules (e.g. proteins, oligonucleotide, impurities, etc.). A chemical interaction between the solid stationary phase and the liquid mobile phase includes a chemical interaction between a component attached to the solid stationary phase and any component of the liquid mobile phase (e.g. a protein, oligonucleotide, or impurity, etc.). Such an interaction may allow a selective reaction to take place.

It will still further be understood that a chemical interaction between the solid stationary phase and the liquid mobile phase is not the same as a purely physical interaction between a liquid mobile phase and an inert solid stationary phase. For example, trickle-bed reactors may cause a mobile liquid phase and a mobile gas phase to flow relative to each other within a packed column. However, in such an arrangement, the purpose of the stationary packing is generally to promote a larger surface area at which the liquid and gas phases can interact. As such, whereas monitoring may be possible of the distribution of liquid within such a trickle-bed reactor, such monitoring provides no information as to the progress of any chemical reaction. Moreover, since there is typically no chemical interaction between the liquid phase and solid phase, monitoring of such interactions would not be possible.

In a yet further embodiment described herein there is a method of monitoring a chemical process in a column apparatus using a measurement system; the column apparatus being configured to contain a solid stationary phase, receive a liquid mobile phase, and enable flow of the mobile phase through the stationary phase in a flow direction; the measurement system comprising a set of electrodes arranged at a sensing location of the column apparatus. The method comprises: providing the solid stationary phase within the column apparatus; causing a first liquid mobile phase to flow through the stationary phase in a flow direction; causing a second liquid mobile phase to flow through the stationary phase in the flow direction; applying an electrical stimulation to the set of electrodes; receiving an electrical signal from the set of electrodes; and determining one or more characteristics of a transition between the first liquid mobile phase and the second liquid mobile phase by processing the electrical signal received from the set of electrodes.

Determining one or more characteristics of a transition may allow the interface between different phases of a multi-phase chemical process to accurately be monitored. Moreover, the identification or characterisation of a transition may allow the interface between different liquid mobile phases to be characterised. That is, rather than only being able to identify the presence or absence of a liquid, the above described methods can provide sufficient sensitivity to identify a transition between different liquids, and to generate process insights on the basis of such an identification. It will be appreciated that a multi-phase chemical process may also be referred to as a chemical process.

In electrical impedance tomography (EIT) the penetrating waves are generated by the injection of electrical signals into the region of interest (e.g. by applying an electrical stimulation using electrodes). Monitoring the electrical signals received by electrodes arranged at the sensing location provides a non-invasive method of determining properties of the material within the sensing location (i.e. the mobile phase and/or stationary phase). Monitoring the electrical signals received by electrodes arranged at the sensing location also provides a non-invasive method of monitoring the chemical process occurring inside the column apparatus. As such, information regarding the chemical process and materials in the column which would normally be hidden to a user can be determined. In particular, the information can be attained while the chemical process is underway, resulting in real-time information relating to the chemical process.

The use of EIT is particularly beneficial when used to monitor chemical processes, because many chemical processes depend, at least in part, the electrostatic environment within a material and the electrostatic interaction between different components of the material. Such electrostatic environments and interactions can affect the propagation of electrical signals through the material. Therefore, monitoring received electrical signals can provide information relating to the environment and interactions within the material, and hence provide information relating to the chemical process. The electrical signal may comprise multiple electrical signals, for example an electrical signal from each of multiple pairs of electrodes of the set of electrodes. The sensing location may comprise a volume of the column apparatus defined by the location of the electrodes. For example, the electrodes may be arranged at a plane of the column apparatus (e.g. a plane perpendicular to the flow direction) and the sensing location may be a volume which generally corresponds to the arrangement of the electrodes (e.g. the sensing location may be a volume centred at a plane of the column apparatus).

The following features may be applied to any of the above described methods.

The chemical process may comprise a separation process, reaction process or isolation process. The separation process may comprise the separation of one or more components in the mobile phase from one or more other components of the mobile phase. The reaction process may comprise a reaction between a component of the mobile phase and a component of the stationary phase. The reaction process may be used to synthesise a target component based on the reaction. The isolation process may comprise the isolation of a component of the mobile phase using chemical interactions between the component and a component of the stationary phase. The chemical process may comprise chromatography or oligonucleotide synthesis.

Separation and/or isolation may be achieved by selection of a stationary phase having differential affinities with components of the mobile phase.

The method may comprise: causing a first liquid mobile phase to flow through the stationary phase in a flow direction; causing a second liquid mobile phase to flow through the stationary phase in the flow direction; and determining one or more characteristics of a transition between the first liquid mobile phase and the second liquid mobile phase by processing the electrical signal received from the set of electrodes.

The set of electrodes is a first set of electrodes and the sensing location is a first sensing location. The column apparatus further comprises a second set of electrodes arranged at a second sensing location spaced from the first sensing location in the flow direction. The method further comprises receiving an electrical signal from the second set of electrodes; and determining the one or more characteristics is further based on processing the electrical signal received from the second set of electrodes.

By monitoring the electrical signals at multiple sensing locations of the column apparatus, information regarding the chemical process and/or the materials therein (i.e. the stationary phase and/or mobile phase) can be determined. As the mobile phase flows through the column apparatus, by monitoring the column apparatus at multiple sensing locations, it can be determined where in the column the mobile phase has reached. Due to the flowing nature of the mobile phase, the chemical process will be at a different level of completion in different locations in the column. Therefore, by monitoring at multiple locations, different aspects of the chemical process (e.g. different sub-processes, for example specific chemical interactions) can be monitored as they occur. Furthermore, the properties of the material within the column may change in different locations. For example, the stationary phase may have different properties (e.g. density or porosity) in different locations. In another example, the mobile phase may contain different components at different locations due to certain components being introduced or removed upstream of a particular sensing location due to interactions with the stationary phase. These differences in the mobile phase and/or stationary phase in different locations may be determined by monitoring at multiple sensing locations.

The electrical signal may be received from one or more pairs of electrodes of the second set of electrodes The electrical signal may additionally or alternatively be received from one or more pairs of electrodes wherein a first of the pair of electrodes is in the first set of electrodes and a second of the pair of electrodes is in the second set of electrodes.

The one or more characteristics may comprise a spatial distribution of the mobile phase and/or stationary phase within the first and second sensing location.

The method may further comprise determining a spatial distribution of the mobile phase and/or stationary phase within the first and second sensing location.

The spatial distribution of the mobile phase may represent a flow profile or flow distribution of the mobile phase through the first and second sensing location. The spatial distribution of the stationary phase may comprise a density profile of the stationary phase within the first and/or second sensing location. Said density profile may be used to further determine a porosity and/or uniformity of the stationary phase in the sensing location.

Under ideal conditions, the flow profile may be substantially equal in the first and second sensing locations. By monitoring tomograms in a sensing location, a flow profile may be determined. By monitoring tomograms in multiple sensing locations, the flow profile throughout the column apparatus may be determined. It may be determined that a flow profile in one or more sensing locations is sub-optimal, for example due to sub-optimal packing of the stationary phase. It is typically beneficial to determine sub-optimal flow profiles such that this can be accounted for in the chromatography process and/or such that the condition of the stationary phase may be improved or corrected.

The method may further comprise generating a quality indication associated with the stationary phase within the first and second sensing location based on the one or more characteristics.

The method may further comprise generating a quality indication associated with the stationary phase within the first and second sensing location based on the determined spatial distribution.

The quality indication may represent a quality of the stationary phase compared to an ideal stationary phase. For example, the quality indication may comprise an indication of optimal or sub-optimal characteristics associated with the stationary phase. The quality indication may represent the suitability of a stationary phase for a specific chemical process. When the stationary phase is a packed medium (e.g. a plurality of bodies packed in the column apparatus), the quality indication may comprise a quality of said packing.

Characteristics of the stationary phase which may be used to determine the quality indication include: density, porosity, uniformity. Said characteristics can be represented by a spatial distribution of the stationary phase. An ideal stationary phase may comprise, for example, a plurality of beads arranged with a uniform porosity. As such, a determination of a non-uniform porosity may represent a sub-optimal quality indication. Similarly, an ideal stationary phase may have a specific density and/or specific porosity, and so determination of a density and/or porosity not equal to the specific density and/or specific porosity may represent a sub-optimal quality indication.

Characteristics of the mobile phase which may be used to determine the quality indication may include: flow profile, flow distribution. An ideal stationary phase may enable the mobile phase to flow through the column with a specific flow profile or flow distribution. A sub-optimal flow profile or flow distribution is typically caused by sub-optimal stationary phase, for example a stationary phase with sub-optimal porosity, density, uniformity. As such, a determination of a flow profile or flow distribution not equal to the specific flow profile or flow distribution may represent a sub-optimal flow profile or flow distribution and hence a sub-optimal quality indication.

Determining the one or more characteristics may further comprise: generating first impedance data associated with the first sensing location based on the electrical signal received from the first set of electrodes; generating second impedance data associated with the second sensing location based on the electrical signal received from the second set of electrodes; and determining the one or more characteristics based on a comparison between the first impedance data and second impedance data.

Determining the one or more characteristics may further comprise: comparing the electrical signal received from the first set of electrodes and the electrical signal received from the second set of electrodes; and determining the one or more characteristics based on the comparison.

Determining the one or more characteristics may further comprise: generating impedance data associated with sub-regions of a volume defined by the first sensing region and second sensing region based on the electrical signal received from the first set of electrodes and the electrical signal received from the second set of electrodes; constructing a three-dimensional volumetric representation the volume based on the impedance data; and determining the one or more characteristics based on the three-dimensional volumetric representation.

The volume may comprise the first sensing region, the second sensing region, and a region between the first and second sensing regions. The volume corresponds to a volume within the column. To generate the electrical signals used in this method, an inter-location sensing scheme can be used. Using an inter-location sensing scheme, information regarding the chemical process, stationary phase and/or mobile phase can be gained both at the first and second sensing locations, but also between the first and second sensing locations. This may overcome blind-spot issues, where important features between sensing locations can go undetected.

The three-dimensional volumetric representation may be referred to as a volumetric representation or a three-dimensional map. The volumetric representation can be used to determine the spatial distribution of the mobile phase (e.g. a flow profile or flow distribution), the spatial distribution of the stationary phase (e.g. a density, porosity or uniformity of the stationary phase). The volumetric representation can be used to determine a position within the volume which the mobile phase has reached, for example a position along the flow direction which the mobile phase has flowed to at the time of performing the method. The volumetric representation can be used to determine a measure of completion of the chemical process at various positions within the volume. For example, it can be determined from the volumetric representation that the process is complete in a first portion of the volume, currently occurring in a second portion of the volume and/or not yet started in a third portion of the volume.

The method may further comprise applying an electrical stimulation to the second set of electrodes. As such, an electrical stimulation can be applied to the second set of electrodes and an electrical signal received from the second set of electrodes. An intra-location sensing scheme may be used wherein a first electrical stimulation is provided to the first set of electrodes and a first electrical signal is received from the first set of electrodes, and a second electrical stimulation is provided to the second set of electrodes and a second electrical signal is received from the second set of electrodes. Intra-location sensing enables properties at different locations of the column to be monitored while providing control over where in the column (e.g. at which sensing location(s)) electrical stimulation is provided.

Applying an electrical stimulation to the second set of electrodes may comprise applying an electrical stimulation to a pair of electrodes of the second set of electrodes.

Additionally, or alternatively, the electrical stimulation may be applied to a pair of electrodes wherein a first of the pair of electrodes is in the first set of electrodes and a second of the pair of electrodes is in the second set of electrodes.

The method may further comprise: applying the electrical stimulation to the first set of electrodes and/or the second set of electrodes in a first period of time; receiving the electrical signal from the first and/or second sets of electrodes in the first period of time; applying a second electrical stimulation to the first set of electrodes and/or the second set of electrodes in a second period of time following the first period of time; receiving an electrical signal from the first and/or second sets of electrodes in the second period of time; and determining the one or more characteristics based on the electrical signals received in the first and second periods of time.

In this way, electrical signals associated with the first and/or second sensing locations can be monitored over time. By monitoring a sensing location over time, an indication of changes in the chemical process and/or material in the sensing location can be determined. This yields a method which is sensitive to real-time changes in the chemical process. In particular, real-time changes such as chemical interactions (e.g. the forming or breaking of bonds) can result in a change in the electrostatic environment in the material in the column apparatus. Therefore, by monitoring the electrical signals using this method, such changes can be detected substantially instantaneously in a non-invasive manner.

The method may further comprise applying additional electrical stimulation in one or more additional periods of time and receiving an electrical signal in the one or more additional periods of time. A continuous or discrete set of data points may hence be generated, representing electrical signals over a series of time periods.

The one or more characteristics may comprise a measure of completion of the chemical process in the first and/or second sensing locations.

The one or more characteristics of the chemical interaction between the solid stationary phase and the liquid mobile phase may comprise the measure of completion of the chemical process.

The method may further comprise generating a measure of completion of the chemical process in the first and/or second sensing locations.

Monitoring a sensing location over time can provide information relating to the completion of a chemical process, because changes or stability in the monitored electrical signals can represent a measure of completion (or incompletion). The measure of completion may represent one of the following: the chemical process has not yet begun, the chemical process is occurring, the chemical process is complete, the chemical process is predicted to occur at a specific time, the chemical process is predicted to finish at a specific time, the chemical process is occurring at a particular rate. The measure of completion may be related to a dynamic bonding capacity of the column. The measure of completion can be used to validate an effectiveness of a reaction process.

Determining the measure of completion may comprise: determining a rate of change based on the electrical signal from the first or second set of electrodes in the first period of time and the electrical signal from the same first or second set of electrodes in the second period of time; and if the rate of change is less than a threshold, determining that the process has not started or is complete; and/or if the rate of change is greater than a threshold, determining that the process is incomplete; and/or determining a process rate based on the rate of change.

When a chemical process is occurring in a sensing location, the electrostatic environment in that location will typically change. When a chemical process is complete in a sensing location, the electrostatic environment in that sensing location will typically be unchanging. Therefore, by determining the rate of change of an electrical signal over time, an indication can be gained as to whether or not a process is complete. If the rate of change is small, for example indicating that the difference between the first period of time and second period of time is substantially zero, this can indicate that the process has reached steady-state and therefore has either not started or is complete. If the rate of change is non-zero this can indicate that the process is still occurring, for example because the environment in the sensing location changed between the first and second time periods. The rate of change of the electrical signal received between the first and second time periods can be used to indicate a rate at which the process is occurring. A larger rate change generally corresponds to a faster process (e.g. a higher process rate).

The method may further comprise: applying electrical stimulation to the first and/or second sets of electrodes at a plurality of time periods. The plurality of time periods may comprise the first and second time periods and a time period in which the chemical process is known to occur; receiving electrical signals from the first set of electrodes at the plurality of time periods; generating a first relationship between the electrical signals from the first set of electrodes; receiving electrical signals from the second set of electrodes at the plurality of time periods; generating a second relationship between the electrical signals from the second set of electrodes; and determining the one or more characteristics based on the first and second relationships.

By monitoring the received electrical signals in two sensing locations over time, changes over time can be monitored. The electrical signals received from the first and second set of electrodes at the plurality of time periods each comprise a dataset, each data point representing a received electrical signal at a particular time period. A relationship can be generated which describes the relationship between data points of the dataset. The relationship may be represented graphically.

A relationship may indicate the rate of change within its respective sensing location over time. As such, comparing the relationships from two sensing locations over time can indicate differences in the environment and/or chemical process over time in those two sensing locations.

In a first example, a difference between the first and second relationships may represent a difference in spatial distribution of the stationary phase in the first and second sensing locations. A significant difference between the relationships in the first and second sensing locations may represent a significant difference in, for example, packing density in the first and second sensing locations. In a second example, a difference between the first and second relationships may represent a different process rate in the first and second sensing locations.

Determining the one or more characteristics based on the first and second relationships may comprise comparing the first and second relationships with each other. Determining the one or more characteristics based on the first and second relationships may comprise comparing each of the first and second relationships with a predetermined relationship.

The predetermined relationship may be a theoretical data relationship, for example a Gaussian relationship, or may be a relationship of a dataset generated using an ideal chemical process and/or with an ideal mobile and secondary phase. The comparison may comprise determining, for each relationship and/or the predetermined relationship, a statistical property of the dataset (for example, peak height, peak width, skew, gradient, deviation). The comparison may comprise comparing the statistical property of the first relationship with the statistical property of the second relationship, or comparing the statistical property of the first/second relationship with the statistical property of the predetermined relationship. The comparison may comprise providing the first and/or second relationship to a machine learning model which has been trained to determine the one or more characteristics based upon the relationship.

The method of may further comprise providing a pulse of a mobile phase to the column, wherein the plurality of time periods comprises a time period in which the pulse passes through the first and second sensing locations.

By providing a pulse of mobile phase to the column and monitoring the electrical signals over a period of time in which the mobile phase travels through the sensing location(s), the interaction (e.g. the chemical process) between the mobile phase and the stationary phase can be monitored in a controlled manner. As such, characteristics such as the spatial distribution and/or process rate can be monitored and determined in a controlled manner, for example in a calibration step. The pulse may comprise a predetermined amount of a fluid, when no fluid was previously flowing through the column. Alternatively, the pulse may comprise introducing a particular component (e.g. a marker) to the mobile phase for a predetermined amount of time. The predetermined amount and/or predetermined amount of time are selected such that the pulse passes through the sensing locations in a relatively short amount of time, enabling changes in the sensing locations to be monitored in the same relatively short amount of time.

The one or more characteristics may comprise a spatial distribution of the mobile phase and/or stationary phase within the first and/or second sensing location. Determining the one or more characteristics may further comprise: generating impedance data associated with sub-regions of the first sensing location or second sensing location based on the electrical signal received from the first or second set of electrodes, respectively; segmenting the impedance data into a first portion associated with one or more sub-regions of the first or second sensing location and a second portion associated with one or more different sub-regions of the same first or second sensing location; comparing the impedance data of the first portion with the impedance data of the second portion; and determining the characteristic based upon the comparison.

The method may comprise determining a spatial distribution of the mobile phase and/or stationary phase within the first and/or second sensing location. Determining the spatial distribution may further comprise: generating impedance data associated with sub-regions of the first sensing location or second sensing location based on the electrical signal received from the first or second set of electrodes, respectively; segmenting the impedance data into a first portion associated with one or more sub-regions of the first or second sensing location and a second portion associated with one or more different sub-regions of the same first or second sensing location; comparing the impedance data of the first portion with the impedance data of the second portion; and determining the spatial distribution based upon the comparison.

The impedance data associated with sub-regions of the sensing location may be referred to as a tomogram. While a tomogram typically refers to an image formed from said impedance data, an image need not be generated. Rather, the tomogram may itself be a data set representative of the spatial variation in impedance within the sensing location, represented by impedance data of sub-regions of the sensing location. A tomogram in the form of a data set may be used to determine the characteristic without generation of an image. However, in other implementations, an image may be generated and used to determine the characteristic.

The first and second portion may be, for example, halves of the tomogram, with the first portion representing a sector of the tomogram and the second portion representing a different sector of the tomogram. More portions may be used, for example the tomogram may be segmented into quadrants.

Segmenting the impedance data into multiple portions enables any non-uniformity in spatial distribution to be identified. For example, if the impedance data in a first portion is different to the impedance data in a second portion, this may indicate that the flow profile of the mobile phase through the first portion is different to the flow profile of the mobile phase through the second portion. It may also be determined, by comparing the impedance data of multiple portions, that the density or porosity of the stationary phase is different in the first portion compared to the second portion, for example based directly on the impedance data or based on a determination that the flow profile is different in different portions.

The method may further comprise: applying the electrical stimulation to the set of electrodes in a first period of time; receiving the electrical signal from the set of electrodes in the first period of time; applying a second electrical stimulation to the set of electrodes in a second period of time following the first period of time; receiving an electrical signal from the set of electrodes in the second period of time; determining the one or more characteristics based on the electrical signals received in the first and second periods of time.

The one or more characteristics may comprise a spatial distribution of the mobile phase and/or stationary phase within the sensing location. Determining the one or more characteristics may further comprise: generating impedance data associated with sub-regions of the sensing location based on the electrical signal received from the set of electrodes; segmenting the impedance data into a first portion associated with one or more sub-regions of the sensing location and a second portion associated with one or more different sub-regions of the sensing location; comparing the impedance data of the first portion with the impedance data of the second portion; and determining the characteristic based upon the comparison.

The method may further comprise determining a spatial distribution of the mobile phase and/or stationary phase within the sensing location. Determining the spatial distribution may comprise: generating impedance data associated with sub-regions of the sensing location based on the electrical signal received from the set of electrodes; segmenting the impedance data into a first portion associated with one or more sub-regions of the sensing location and a second portion associated with one or more different sub-regions of the sensing location; comparing the impedance data of the first portion with the impedance data of the second portion; and determining the spatial distribution based upon the comparison.

The method may further comprise controlling the chemical process based on the one or more characteristics. By determining characteristics associated with the stationary phase, mobile phase and/or chemical process, the chemical process can be optimized. The chemical process can be optimized by taking advantage of and/or compensating for features of the chemical process, stationary phase and/or mobile phase that have been determined using the above methods. Controlling the chemical process may comprise adjusting one or more parameters associated with the chemical process. The parameters may relate to the time taken to perform the chemical process, the composition of the mobile phase introduced to the column, a pressure applied to the column (e.g. the increase or decrease the speed of flow of the mobile phase through the column).

The one or more characteristics may comprise a measure of completion of the chemical process. Controlling the chemical process may comprise adjusting an end time of the chemical process based on the measure of completion.

For example, it may be determined that a process has not yet finished, in which case it may be beneficial to delay the end time of the process. It may be determined that a process has not yet started, in which case it may be beneficial to further delay the end time of the process. It may be determined that a process has completed, in which case it may be beneficial to bring forward the end time of the process (e.g. shortening the duration of the process). The measure of completion may be related to a dynamic bonding capacity of the column. As such, the measure of completion may be used to validate an effectiveness of a reaction process. The end time of the reaction process may be adjusted based on this validation. Using these methods, the chemical process may be optimized so as to be performed for only as long as necessary. This may result in savings in time and/or in usage of chemical components, for example by reducing the length of time of a process. This may also result in an increased efficiency of the chemical process, for example if the chemical process was previously being ended prior to the process being complete.

The one or more characteristics may comprise a spatial distribution of the mobile phase and/or stationary phase. The method may further comprising determining a spatial distribution of the mobile phase and/or stationary phase.

Controlling the chemical process may comprise: providing an indication that the spatial distribution is sub-optimal; and/or adjusting a start time and/or end time of the chemical process based on the spatial distribution.

Providing an indication that the spatial distribution is sub-optimal may comprise indicating, for example to an operator, that the spatial distribution is sub-optimal. The indication may comprise, for example, an indication of a fault. The indication may include a request for re-calibrating the stationary phase. For example, the stationary phase may be re-packed in a more optimal way following such an indication, or may be replaced. Adjusting the start time and/or end time of the chemical process based on the spatial distribution may increase the efficiency of the chemical process. For example, if the spatial distribution of the mobile phase indicates a non-uniform flow profile, it may be beneficial to delay the end time of the chemical process to ensure that the mobile phase has flowed through all sub-regions of a sensing location before ending the chemical process.

The chemical process may be controlled in real time. That is, applying electrical stimulation, receiving an electrical signal, determining the one or more characteristics and controlling the chemical process based thereon can all be performed as the chemical process takes place. This is in contrast to other known methods of controlling such a chemical process in a column apparatus, wherein characteristics may be determined during a first occurrence of the chemical process, and adjustments to the chemical process are determined and applied to a subsequent chemical process. The methods described herein provide a way of controlling and optimizing chemical processes in real-time. This may lead to savings in time and in usage of components, for example because a chemical process need only be performed for as long as required.

The applied electrical stimulation may comprise a first electrical stimulation with a first frequency and a second electrical stimulation with a second frequency. The first frequency may be selected based on a characteristic of the mobile phase. The second frequency may be selected based on a characteristic of the stationary phase. The first or second frequency may be selected based on a characteristic of a target reagent of the chemical process.

The first and/or second frequency may be selected based upon a frequency-dependent characteristic of the mobile phase and/or stationary phase and/or target reagent. The first and/or second frequency may be selected based upon a frequency-dependent characteristic of a component of the mobile phase and/or stationary phase and/or target reagent. For example, the characteristic may be a sensitivity of the mobile phase and/or stationary phase and/or target reagent to the first or second frequency. The first frequency may be selected such that the mobile phase is sensitive to the first frequency. The second frequency may be selected such that the mobile phase is sensitive to the second frequency. By using multiple frequencies of electrical stimulation, and by tuning said frequencies to the stationary phase, mobile phase and/or target reagent, different aspects of the chemical process may each be monitored with increased sensitivity by targeting the mobile phase, stationary phase and/or target reagent with increased sensitivity.

In an example described herein, said example not forming part of the present invention, there is an apparatus comprising: a column apparatus configured to contain a stationary phase, receive a mobile phase, and enable flow of the mobile phase through the stationary phase in a flow direction; a measurement system comprising a set of electrodes arranged at a sensing location of the column apparatus, means for applying electrical stimulation to electrodes of the set of electrodes and means for receiving an electrical signal from electrodes of set of electrodes; and a processor configured to perform any of the methods of the above described example.

The means for applying electrical stimulation to electrodes may comprise, for example, a current source. Applying the electrical stimulation can comprise applying an electrical stimulation to a pair of electrodes of the set of electrodes. The electrical signal may be received in response to the electrical signal applied to a pair of electrodes. Applying the electrical stimulation may further comprise applying an electrical signal to a second pair of electrodes of the set of electrodes, and receiving another electrical signal in response. Applying the electrical stimulation may comprise applying electrical stimulation in an ordered manner to each of a plurality of pairs of electrodes in the set of electrodes. Similarly, receiving the electrical signal may comprise receiving an electrical signal from a pair of electrode of the set of electrodes. Receiving the electrical signal may further comprise receiving an electrical signal from a second pair of electrodes of the set of electrodes. Receiving the electrical signal may comprise receiving an electrical signal in an ordered manner from each of a plurality of pairs of electrodes in the set of electrodes. The means for applying an electrical stimulation and receiving an electrical signal may comprise means for applying and receiving in a first period of time and a second period of time. A single cycle of applying an electrical stimulation and receiving an electrical signal in a period of time may be referred to as a measurement or a frame. As such, the apparatus can take multiple measurements or frames associated with multiple time periods. The apparatus may further comprise computer storage means configured to store measurements before and/or after processing by the processor.

In the present invention described herein there is an apparatus according to independent claim 17.

The means for applying electrical stimulation to electrodes may comprise, for example, a current source. Applying the electrical stimulation comprises applying an electrical stimulation to a pair of electrodes of the first and/or second set of electrodes. Applying the electrical stimulation may further comprise applying an electrical signal to a second pair of electrodes of the first and/or second set of electrodes. Applying the electrical stimulation may comprise applying electrical stimulation in an ordered manner to each of a plurality of pairs of electrodes of the first and/or second set of electrodes. The electrical signal may be received in response to the electrical signal applied to the electrodes. Receiving the electrical signal comprises receiving an electrical signal from a pair of electrode of the first and/or second set of electrodes. Receiving the electrical signal may further comprise receiving an electrical signal from a second pair of electrodes of the first and/or second set of electrodes. Receiving the electrical signal may comprise receiving an electrical signal in an ordered manner from each of a plurality of pairs of electrodes in the first and/or second set of electrodes.

When the electrical stimulation is applied to electrodes of the first set of electrodes, the electrical signal can be received from electrodes of the first set of electrodes (in an intra-location sensing scheme) and/or from the electrodes of the second set of electrodes (in an inter-location sensing scheme). When the electrical stimulation is applied to electrodes of the second set of electrodes, the electrical signal can be received from electrodes of the first set of electrodes (in an inter-location sensing scheme) and/or from the electrodes of the second set of electrodes (in an intra-location sensing scheme).

The means for applying an electrical stimulation and receiving an electrical signal may comprise means for applying and receiving in a first period of time and a second period of time. A single cycle of applying an electrical stimulation and receiving an electrical signal in a period of time may be referred to as a measurement or a frame. As such, the apparatus can take multiple measurements or frames associated with multiple time periods.

The apparatus may further comprise computer storage means configured to store measurements before and/or after processing by the processor.

The first set of electrodes and/or second set of electrodes may be arranged: on an inner wall of the column apparatus; on a lid of the column apparatus; and/or on a probe inserted into the column apparatus.

In some cases, it might be desirable to easily and rapidly change the internal conditions and characteristics of the column. For example, it might be desirable to change the stationary phase and/or the geometry of the process under measurement. This can be facilitated by a variant measurement system also described herein. The variant measurement system comprises a removable column, configured to mechanically and electrically engage with a receiving housing. In combination, the housing and removable column cooperate to operate equivalently to the previously-described measurement systems. Consequently, columns of varying physical and chemical configurations can be exchanged quickly and easily as required. Optional features of the methods described herein may be applied to either a fixed column apparatus, or a removable column apparatus

According to a first example there is provided an apparatus comprising: a removable column extending along an axial direction defining a measurement volume, the removable column comprising a plurality of column electrodes arranged about the measurement volume and a corresponding plurality of column contacts, partially defining an outer surface of the removable column, each one of the plurality of column contacts being in electrical communication with a corresponding one of the plurality of column electrodes. The apparatus further comprises a housing configured to receive the removable column, the housing comprising a plurality of housing contacts, each one of the housing contacts being arranged to engage a corresponding one of the column contacts, when the column is received within the housing. The apparatus further comprises an energisation source and a detector, the plurality of housing contacts being switchably connected to the energisation source and the detector. In use, the apparatus is configured to apply, by the energisation source, an electrical stimulation to the plurality of column electrodes, detect, by the detector, an electrical signal from the plurality of column electrodes, and determine one or more characteristics of a material within the measurement volume by processing the electrical signal detected by the detector.

According to a second example there is provided an apparatus comprising a removable column extending along an axial direction defining a measurement volume, the removable column comprising an insulating liner. The apparatus further comprises a housing, configured to receive the removable column, the housing comprising a plurality of housing electrodes, and an energisation source and a detector, the plurality of housing electrodes being switchably connected to the energisation source and the detector. In use, the apparatus is configured to apply by the energisation source, an electrical stimulation to the plurality of housing electrodes; detect, by the detector, an electrical signal from the plurality of housing electrodes; and determine one or more characteristics of a material within the measurement volume by processing the electrical signal detected by the detector.

Advantageously, an arrangement comprising a removable column (in accordance with either of the examples described above) facilitates much greater ease of cleaning and process preparation (e.g. packing) compared with equivalent processes performed *in situ* for a fixed column design. In addition, the housing provides a removable, repeatable contact to an energisation source and detector - this means that appropriate connection is repeatable and convenient, without the extensive cabling previously necessary. A further benefit is that a removable column allows easy inspection of the condition of the column contents before and after a process.

Further optional features which may be combined with either of the removable column arrangements described above, as appropriate, will now be described.

The apparatus may comprise a controller. The controller may be configured to process the electrical signal detected by the detector to determine the one or more characteristics of the material within the measurement volume.

The apparatus may be referred to as a tomography apparatus. The tomography apparatus may comprise an electrical resistance tomography (ECT) apparatus, an electrical impedance tomography (EIT) apparatus, or an electrical capacitance tomography (ECT) apparatus.

The removable column may have a circular cross-section. Advantageously, the circular cross-section of the removable column facilitates a high degree of compatibility with widely-available fittings (e.g. pipes, valves, flanges).

The housing may define an inner receiving surface configured to receive the removable column. The housing contacts or housing electrodes may partially define the inner receiving surface of the housing.

The column electrodes or housing electrodes may be arranged along the axial direction of the column.

A separation between adjacent electrodes along the axial direction may be substantially equal to an axial extent of the electrodes.

The column electrodes or housing electrodes may be arranged circumferentially with respect to the axial direction of the removable column.

Azimuthal angles subtended by each of the electrodes and the gaps between the electrodes may be substantially equal.

Where the removable column comprises an insulating liner, the housing electrodes may be arranged within the housing structure with reference to the column. The housing electrodes may be arranged along the (or parallel to) axial and/or circumferential direction of the column. The housing electrodes may engage with an outer surface of the column.

The column electrodes or housing electrodes could be arranged in any combination of the axial and circumferential directions. For example, the electrodes could be arranged helically or in planar arrangements (as detailed below).

The column electrodes or housing electrodes may define one or more planes arranged perpendicularly to the axial direction of the column.

The column electrodes or housing electrodes may define a plurality of planes perpendicular to the axial direction, the planes being separated along the axial direction from each other.

The column electrodes or housing electrodes may be centred around the planes. That is to say, their centroids may substantially coplanar with respect to said planes. The planes may be separated in the axial direction from an adjacent one of the planes. The extent of electrodes about each plane may define a distinct volume referred to as a sensing location. That is, the location and extent of a sensing location may be defined by the axial location and extent of a group of electrodes arranged in a plane.

Advantageously, the multiple sensing locations allow material characteristics to be further determined over the column volume, at multiple locations. In practice, this might allow the progress of a reaction to be monitored.

The column electrodes or housing electrodes may be of substantially uniform size and shape.

The column contacts may be arranged such that the column contacts are on the same radial line as their corresponding column electrodes.

The removable column may comprise an insulative material.

The removable column may comprise Polymethyl methacrylate (PMMA).

Cooperating mechanical features may be configured to at least one of guide and secure the removable column when it is received in the housing.

The housing may comprise a retaining feature at an end opposite to that which is configured to receive the column initially on insertion, the retaining feature being configured to prevent over-insertion of the removable column within the housing in the axial direction.

The removable column and housing may comprise cooperating mechanical features configured to guide installation of the removable column into the housing.

During insertion of the removable column the housing contacts and column contacts must align sufficiently for electrical contact. Advantageously, cooperating mechanical features such as keys and keyways prevent relative rotation between the housing and removable column during insertion, hence guiding proper installation.

The removable column and housing may further comprise a ball detent connection system, configured to detachably engage the plurality of column contacts and the plurality of housing contacts.

Advantageously, the ball detent mechanism assures proper mechanical, and hence electrical contact, between the housing contacts and the column contacts.

The column electrodes are configured to be in direct contact with the measurement volume of the removable column.

Advantageously, direct contact with the measurement volume facilitates electrical communication with any material under test, as required by electrical impedance (EIT) tomography and electrical resistance tomography (ERT).

The column electrodes or housing electrodes may comprise an insulative coating.

Column electrodes or housing electrodes comprising an insulative coating may be preferred for use in electrical capacitance tomography (ECT), where a direct electrical connection is not required between the electrodes and the material under test.

The tomography apparatus of the first or second examples may be configured to perform the method of any of the above described methods.

According to a third example there is provided a removable column, for use in a tomography apparatus, the column defining a measurement volume and being configured to be removably inserted into a housing of the tomography apparatus during use, the removable column comprising: a plurality of column electrodes arranged about the measurement volume; and a corresponding plurality of column contacts, partially defining an outer surface of the removable column, each one of the plurality of column contacts being in electrical communication with a corresponding one of the plurality of column electrodes. In use, each one of the column contacts is configured to engage with a corresponding one of a plurality of housing contacts provided by the housing of the tomography apparatus, such that the tomography apparatus can perform tomography measurements on a material within the measurement volume.

The removable column of the third example may be suitable for use with a tomography apparatus according the first example.

According to a fourth example there is provided a tomography apparatus comprising a housing, the housing defining a volume configured to receive a removable column, the housing comprising: a plurality of housing contacts, each one of the housing contacts being configured to engage a corresponding one of a plurality of column contacts provided at an outer surface of the removable column, when the removable column is received within the housing; an energisation source and a detector, the plurality of housing contacts being switchably connected to the energisation source and the detector. In use, the housing is configured to; receive the removable column, the removable column extending along an axial direction, defining a measurement volume, and comprising the plurality of column electrodes arranged about the measurement volume, each one of the plurality of column contacts being in electrical communication with a corresponding one of the plurality of column electrodes; apply, by the energisation source, an electrical stimulation to the plurality of column electrodes; detect, by the detector, an electrical signal from the plurality of column electrodes; and determine one or more characteristics of a material within the measurement volume by processing the electrical signal detected by the detector.

The housing of the fourth example may be suitable for use with the removable column of the third example.

According to a fifth example there is provided a tomography apparatus comprising a housing, the housing defining a volume configured to receive a removable column, the housing comprising: a plurality of housing electrodes; an energisation source and a detector, the plurality of housing electrodes being switchably connected to the energisation source and the detector. In use, the housing is configured to; receive the removable column, the removable column comprising an insulating liner, and extending along an axial direction, defining a measurement volume; apply, by the energisation source, an electrical stimulation to the plurality of housing electrodes; detect, by the detector, an electrical signal from the plurality of housing electrodes; and determine one or more characteristics of a material within the measurement volume by processing the electrical signal detected by the detector.

The tomography apparatus of the fourth or fifth examples may further comprise one or more of the features described above with reference to the first or second examples.

According to a sixth example there is provided a method of monitoring a chemical process using the apparatus of any of the above described aspects, the method comprising: applying, by the energisation source, an electrical stimulation, to the plurality of column electrodes or housing electrodes; detecting, by the detector, an electrical signal from the plurality of column electrodes or housing electrodes; and determining one or more characteristics of a material within the measurement volume by processing the electrical signal detected by the detector.

The method may further comprise inserting the removable column into the housing.

The method may further comprise packing a stationary phase into the removable column.

The packing may be performed before insertion of the removable column into the housing.

The method may further comprise enabling flow of a mobile phase through the measurement volume.

The method may further comprise removing the used removable column after completion of a measurement.

The method of claim may further comprise cleaning the used removable column whilst inserted in the housing by enabling flow of a cleaning agent through the measurement volume.

The method may further comprise, after removal of the removable column from the housing, inserting a second removable column into the housing; and monitoring a second chemical process within a measurement volume defined by the second removable column by: applying, by the energisation source, a second electrical stimulation, to a plurality of column electrodes of the second removable column, or the plurality of housing electrodes; detecting, by the detector, a second electrical signal from the plurality of column electrodes of the second removable column, or the plurality of housing electrodes; and determining one or more characteristics of a material within the measurement volume of the second removable column by processing the second electrical signal detected by the detector.

The method may further comprise packing a stationary phase into the second removable column. Additionally, the packing may be performed before insertion of the second removable column into the housing. Then, the user may enable flow of a mobile phase through the measurement volume. After termination of a measurement, the used second removable column may be removed.

The method may comprise the use of a tomography apparatus comprising a removable column to perform any of the features described in combination with any of the methods described above.

Features described in relation to one example described above may be combined with any other examples where appropriate.

Features of the invention will now be described, by way of example, with reference to the accompanying drawings in which:
Figure 1 schematically illustrates a measurement system not forming part of the present invention;
Figure 2 schematically illustrates a measurement system according to the present invention;
Figure 3 depicts a method of monitoring a chemical process;
Figure 4 shows a part of the measurement system shown in Figure 1 in more detail;
Figure 5 shows a part of the measurement system shown in Figure 1 in more detail;
Figures 6A and 6B depict tomograms associated with two stages of a chemical process;
Figure 7 schematically illustrates a tomogram segmented into quadrants;
Figures 8A and 8B depict the conductivity of four quadrants of a tomogram over time;
Figure 9 depicts the conductivity of multiple sensing locations during a chemical process;
Figure 10 depicts the conductivity of multiple sensing locations during the onset of a wash stage of a chemical process;
Figures 11A and 11B depict the conductivity of multiple sensing locations during a falling edge transition of a chemical process in a column with optimal packing characteristics;
Figures 12A and 12B depict the conductivity of multiple sensing locations during a falling edge transition of a chemical process in a column with sub-optimal packing characteristics;
Figures 13A and 13B depict the conductivity of multiple sensing locations during a calibration process in a column with optimal packing characteristics;
Figures 14A and 14B depict the conductivity of multiple sensing locations during a calibration process in a column with sub-optimal packing characteristics;
Figures 15A and 15B illustrate volumetric representations of the conductivity within a volume of a column;
Figure 16 schematically illustrates a measurement system with a removable column;
Figure 17 schematically illustrates an alternative measurement system with a removable column;
Figure 18A depicts an axial-sectioned view of an embodiment of a removable column measurement system;
Figure 18B depicts a simplified radially-sectioned view of an embodiment of a removable column measurement system;
Figure 19 depicts an axial-sectioned view of part of an embodiment of a removable column measurement system in an alternative configuration;
Figure 20 depicts a method of operating a removable column measurement system;
Figure 21 schematically illustrates an alternative housing structure; and
Figure 22 schematically illustrates an alternative measurement system for ECT measurements.

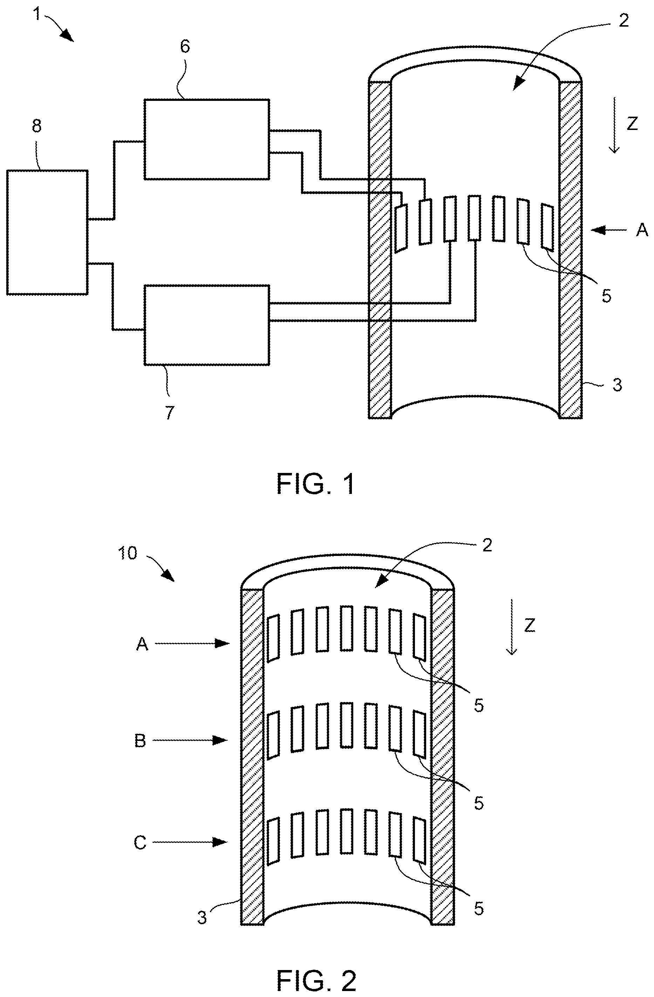

Referring to Figure 1, a measurement system 1 is shown. The measurement system 1 is arranged to monitor a chemical process occurring in a column apparatus 3, which may be referred to as a column 3. The column 3 generally takes the form of a hollow cylindrical vessel such as a pipe in which chemical processes may take place, and may be formed from glass. The chemical process takes place in a material 2 (e.g. a mixture of materials) contained in the column 3. The column 3 in Figure 1 is shown in cut-out form, such that the inner wall of the column 3 can be seen.

As part of the chemical process, a fluid (i.e. a liquid) is flowed through the column 3, for example in the direction of the arrow Z. The direction of flow of the fluid may be referred to as a flow direction Z. The fluid is referred to as a mobile phase. The column 3 is also filled with a medium referred to as a stationary phase, which remains substantially stationary with respect to the column 3. The stationary phase permits flow of the fluid through the stationary phase and hence through the column. During a process where the mobile phase flows through the stationary phase, the material 2 in the column 3 may be said to comprise the stationary phase and the mobile phase. The stationary phase can take the form of a discontinuous medium (e.g. a foam), a plurality of bodies (e.g. a plurality of beads, for example resin beads, or a powder, for example silica powder) or one or more membranes. By flowing a mobile liquid phase through a stationary solid phase within the column, an isolation/separation process (e.g. chromatography) or reaction process (e.g. oligonucleotide synthesis) may be performed.

The measurement system 1 comprises an electrical impedance tomography (EIT) sensor which has a plurality of electrodes 5. The EIT sensor may be referred to simply as a sensor. The electrodes 5 are arranged around the column 3 at sensing location A of the column 3. The electrodes 5 are generally centred at a plane of the column 3 which is perpendicular to the flow direction Z. The plane hence defines a sensing location A which is probed by the electrodes 5. Whereas a plane has zero depth, the sensing location A has depth in the flow direction Z, for example because the electrodes 5 have depth in the flow direction Z and, as described in more detail below, the electrical stimulation applied to the electrodes permeates in all directions into the material 2 adjacent the electrodes 5. As such, the sensing location A may be considered a volume which is defined by (e.g. centred about) the plane.

Each of the electrodes 5 is formed from a conductive material, allowing electrical contact to be made between the electrodes 5 and the material 2 within the column 3. The electrodes 5 may be made from an erosion resistant material, such as, for example, stainless steel. The electrodes 5 may be inlaid into the column 3 such that the inner wall of the column 3 which is not covered by an electrode is formed from the same material as the column 3 e.g. glass. Alternatively, the electrodes 5 may be mounted on a collar which is fitted to the inner wall of the column 3. The internal surface of the collar (e.g. the surface which would be in contact with the material 2 in the column 3) which is not covered by the electrodes 5 may be formed from an erosion resistant material. For example, the internal surface of the collar may be formed from a polyether ether ketone (PEEK) or another polyurethane material that has a sufficient chemical resistivity

As the mobile phase flows through the column, the material 2 in the sensing location A consists of the stationary phase (and any filling medium, e.g. air) for a first period of time, for example while the mobile phase flows from an upstream position in the column 3 towards the sensing location A. The material 2 in the sensing location A comprises both the stationary phase and the mobile phase for a second period of time, for example when the mobile phase reaches the sensing location A and flows through the sensing location A. Finally, for a third period of time the material 2 in the sensing location A mainly comprises the stationary phase, although may also contain a filling medium, residual fluid from the mobile phase, or one or more components isolated from the mobile phase. As such, the measurement system 1 can monitor the chemical process by probing (i.e. taking measurements relating to) the stationary phase and mobile phase during the chemical process. The monitoring method is substantially non-invasive so does not affect the chemical process itself.

The measurement system 1 further comprises a current source 6 operable to apply an electrical stimulation to a pair of (or multiple pairs of) electrodes 5, a voltage monitor 7 operable to receive an electrical signal from a pair of (or multiple pairs of) electrodes 5 following the permeation of the electrical signal through the material 2, and a controller 8. The controller 8 may be a programmable logic controller (PLC), such as, for example, a PLC manufactured by Bachmann electronic GmbH, Feldkirch, Austria. The controller 8 controls the current source 6 and the voltage monitor 7. The controller 8 also performs processing as described further below in more detail.

Figure 2 depicts an alternative measurement system 10 arranged to monitor a chemical process occurring in a column apparatus 3. In particular, this measurement system 10 comprises multiple sets of electrodes 5, each arranged at a different sensing location A, B, C. By arranging electrodes 5 at multiple sensing locations, more information can be determined relating to the chemical process and/or to the material 2 in the column 3.

The column 3 is of the type described with reference to Figure 1 and like parts are labelled accordingly. For example, the column 3 contains a stationary phase and permits the flow of a mobile phase through the stationary phase in a flow direction Z. The material 2 in the column 3 hence comprises the stationary phase and the mobile phase, although the mobile phase may only be present in certain sensing locations depending on how far through the column 3 the flow has progressed. The column 3 in Figure 2 is shown in cut-out form, such that the inner wall of the column 3 can be seen.

The measurement system 10 is configured to monitor the chemical process at a plurality of sensing locations A, B, C which are, in this instance, centred about parallel planes in the column 3. That is, a first set of electrodes are arranged at a first plane which defines a first sensing region A, a second set of electrodes 5 are arranged at a second plane which defines a second sensing region B and a third set of electrodes 5 are arranged at a third plane which defines a third sensing location C. Similar to the arrangement depicted in Figure 1, the planes are generally parallel to a flow direction Z in which the mobile phase flows through the column 3.

Although not shown in Figure 2, the measurement system 10 also comprises means for applying an electrical stimulation to a pair of electrodes 5 and means for receiving an electrical signal from a pair of electrodes 5. There are a number of different schemes which may be used to apply an electrical stimulation and receive an electrical signal.

In a first type of scheme, an electrical stimulation can be applied to a pair of energisation electrodes 5 at the same sensing location (e.g. the first sensing location A) and an electrical signal can be received from a pair of monitor electrodes 5 at the same sensing location (i.e. the first sensing location A). This first type of scheme may be referred to as an intra-location sensing scheme. In the specific implementation where the sensing locations A, B, C are arranged in planes, the scheme may be referred to as an intraplane sensing scheme. Using intra-location stimulation and monitoring, the position in the column 3 at which electrical stimulation is applied can be selected and controlled.

In a second type of scheme, an electrical stimulation can be applied to a pair of energisation electrodes in a first sensing location (e.g. the first sensing location A) and an electrical signal can be received from a pair of monitor electrodes 5 in a different sensing location (e.g. the second sensing location B). This second type of scheme may be referred to as an inter-location sensing scheme, for example because the electrical stimulation is applied between locations. In the specific implementation where the sensing locations A, B, C are arranged in planes, the scheme may be referred to as an inter-plane sensing scheme. Using inter-location stimulation and monitoring, the material 2 in the two different sensing locations (e.g. the first and second sensing locations A, B) and the volume of material 2 between the sensing locations (e.g. the material 2 between the first and second sensing locations A, B) is monitored. An inter-location sensing scheme can be used to overcome blind-spot issues, such that important features and interactions between sensing locations can be detected.

Another example of an inter-location sensing scheme is one in which an electrical stimulation is applied to a pair of energisation electrodes, wherein a first of the pair of energisation electrodes is in a first sensing location (e.g. the first sensing location A) and a second of the pair of energisation electrodes is in a second sensing location (e.g. the second sensing location B). Correspondingly, an electrical signal can be received from a pair of monitor electrodes, wherein a first of the pair of monitor electrodes is in a first sensing location (e.g. the first sensing location A) and a second of the pair of monitor electrodes is in a second sensing location (e.g. the second sensing location B).

Intra-location sensing schemes can be used in combination with one or more of the types of inter-location sensing schemes, for example a series of measurements can be taken using intra-location sensing followed by taking a series of measurements using one or more of the inter-location sensing schemes.

The material 2 in the column 3 can have different properties along the column 3. For example, a stationary phase contained in the column 3 may have different properties (e.g. packing characteristics) at an upstream sensing location (e.g. first sensing location A) compared to a downstream sensing location (e.g. second sensing location B).

Alternatively, the mobile phase may have different properties at a downstream sensing location (e.g. this sensing location C) compared to an upstream sensing location (e.g. second sensing location B), for example if reactions have altered or removed a component of the mobile phase between the upstream and downstream sensing location. By monitoring electrodes in multiple sensing locations, the properties of the material 2 in each sensing location may be monitored.

Because the mobile phase flows through the column 3, each sensing location A, B, C has a temporal response to the chemical process. For example, as the mobile phase flows through the column 3 in the flow direction Z, the mobile phase will reach the first sensing location A first, followed by reaching the second sensing location B and subsequently the third sensing location C. If the chemical process occurs between the mobile phase and a stationary phase contained within the column, then it follows that the chemical process will begin in the first sensing location A earlier than in the second sensing location B and third sensing location C. By monitoring the characteristics of the material 2 in each sensing location A, B, C over time, a measure of completion of the chemical process (e.g. the onset, occurrence, and completion of the chemical process) in each sensing location A, B, C can be determined.

Monitoring the electrical response of material 2 in the column 3 is of particular use for monitoring chemical processes because many chemical processes depend, at least in part, on electrostatic interaction between molecules. Interactions within the column 3, for example interactions between the stationary phase and mobile phase during a chemical process, can alter the electrostatic environment within the column. Therefore, by monitoring the electrical response of material 2 in a sensing location of the column 3, properties of the chemical process occurring within can be determined. The electrostatic environment and electrical response of a material may be measured using EIT as described herein. In particular, the conductivity or impedance can be used to quantify the electrical response of the material.

Other measurement systems may have different arrangements of electrodes, for example the electrodes may be arranged in an arrangement which is not circumferential. The electrodes may also be arranged in sensing location(s) which are not defined by planes or perpendicular planes of the column. The electrodes may, for example, be arranged linearly through the column or in clusters in different sensing locations. Rather than being mounted on the inner wall of the column, electrodes can be located on a lid or base of the column, or may be mounted on a probe which is inserted into the column. The methods described herein apply equally to all electrode arrangements.

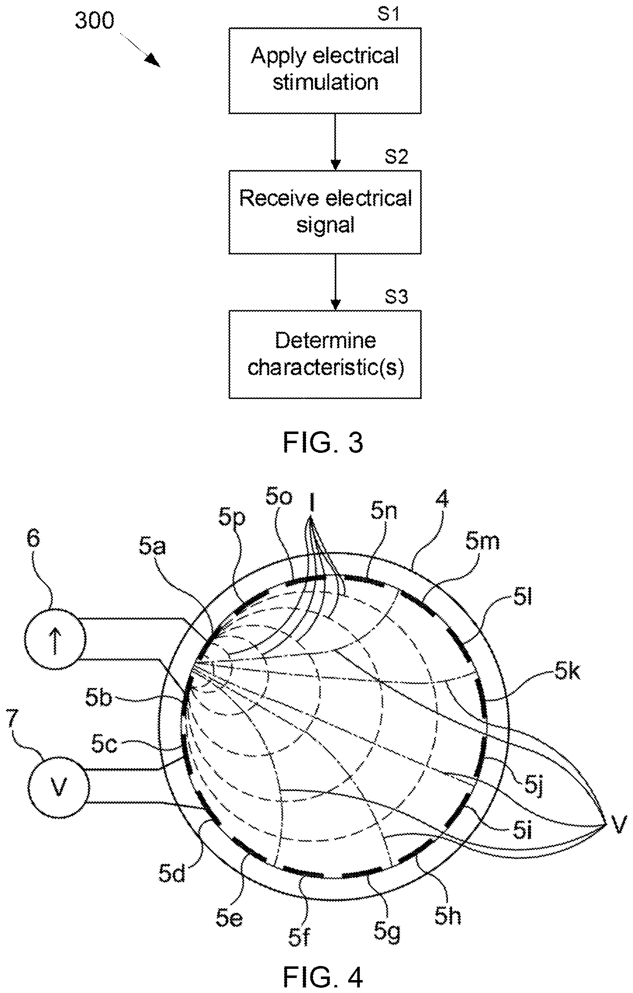

Figure 3 depicts a method 300 of monitoring a chemical process in a column using a measurement system. The method 300 will be described with reference to use with the measurement system 1 of Figure 1, but the method 300 can be used with other measurement systems.

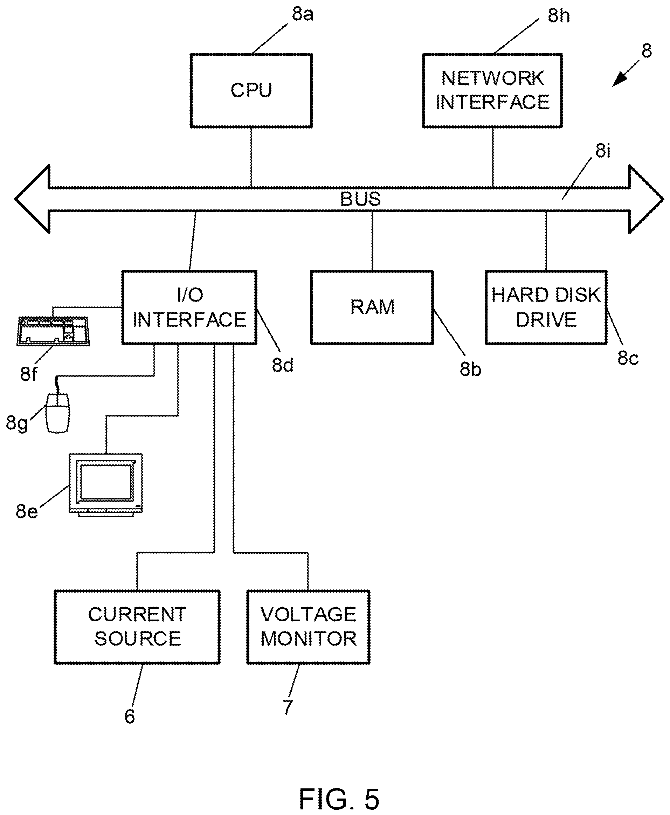

At a first step S1, an electrical stimulation is applied to the electrodes 5. At a second set S2, an electrical signal is received from the electrodes 5. At a third step, S3, one or more characteristics of the stationary phase, mobile phase and/or the chemical process are determined by processing the electrical signal(s) received from the electrodes. The steps S1, S2 of applying electrical stimulation and receiving an electrical signal are described below in more detail and with reference to Figures 4 and 5. The third step S3 of determining one or more characteristics of the stationary phase, mobile phase and/or chemical process is described further below.

Figure 4 illustrates a cross-section through the column 3 of Figure 1 through the plane which defines the sensing location A. The electrodes 5 are arranged circumferentially around the column 3. The electrodes 5 may be, for example, equally spaced around the internal surface of the column 3.

Each of the electrodes 5 is switchably connected to the current source 6. An electrode 5 (e.g. of a pair of electrodes 5) to which electrical stimulation is provided, for example using the current source 6, is referred to as an energisation electrode 5. In the arrangement of Figure 3, a first energisation electrode 5a and a second energisation electrode 5b of the electrodes 5 are connected to the current source 6. When connected, a circuit is formed by the current source 6, the first energisation electrode 5a, the material 2, and the second energisation electrode 5b. Current flows from the current source 6 into the material 2 via the first energisation electrode 5a, before returning to the current source 6, via the second energisation electrode 5b.

The current source 6 may supply an alternating current (AC). The supplied current may, for example have a frequency of around 9.6 kHz. The use of an alternating current may reduce the occurrence of electrolysis at the electrodes 5.

The current source may provide an electrical stimulation with a single frequency, or may provide an electrical stimulation with multiple frequencies, for example two frequencies. The electrical stimulation therefore comprises a first electrical stimulation with a first frequency and a second electrical stimulation with a second frequency (and additionally one or more additional electrical stimulations with one or more additional frequencies). The different frequencies may be applied at the same time (e.g. superimposed) or sequentially. Each frequency may be selected based upon a characteristic of the stationary phase and/or the mobile phase and/or a target reagent of the chemical process. The characteristic may be a sensitivity of the stationary phase and/or mobile phase and/or target reagent to that frequency of electrical stimulation. An increased sensitivity to a particular frequency may correspond to an increased material response at that frequency. For example, a larger electrical signal (e.g. amplitude and/or phase) may be output following stimulation with an electrical stimulation of a frequency associated with increased sensitivity compared to when stimulating with a different (nonsensitive) frequency. Using multi-frequency electrical stimulation may enable additional process features to be identified, for example because each frequency targets the desired component of the material within the column (e.g. stationary phase, mobile phase, target reagent) with increased sensitivity.

The sensitivity of the stationary phase, mobile phase or target reagent to a specific frequency of electrical stimulation may be determined based on known electrical characteristics of the associated materials, or determined empirically, for example in a calibration step. It should be understood that the sensitivity of the mobile phase or stationary phase will depend upon the sensitivity of the components which make up that phase. As such, when considering the sensitivity of the stationary phase and/or mobile phase, the sensitivity of one or more components of the stationary phase and/or mobile phase may be considered rather than determining the sensitivity of the phase in its entirety. More broadly, the characteristics of a phase depend upon the characteristics of the components which make up that phase, so the characteristics of one or more components of a phase may be considered rather than determining the characteristics of the entirety of the phase.

In an illustrative example, a reaction process is to be performed wherein component L in the mobile phase interacts with component M in the stationary phase to produce target component N (i.e. L + M = N). A first frequency may be selected that is sensitive to component L and a second frequency may be selected that is sensitive to component M, such that the first frequency targets the mobile phase with increased sensitivity and the second frequency targets the stationary phase with increased sensitivity. In an alternative example, a first frequency may be selected that is sensitive to component L and component M, and a second frequency may be selected that is sensitive to component M and N. In this example, the electrical signal associated with the first frequency targets both the stationary phase and the mobile phase with increased sensitivity, and the electrical signal associated with the second frequency targets the stationary phase and the target reagent with increased sensitivity. By considering the relative signal strength in each of the output electrical signals, the relative contribution of each of the mobile phase, stationary phase, and target reagent may be determined. As such, the entire process (i.e. concerning the stationary phase, the mobile phase, and the target component) can be captured with increased sensitivity.

Each of the electrodes 5 is also switchably connected to the voltage monitor 7. When connected to one of the electrodes 5 the voltage monitor is arranged to measure the electrical potential at that electrode. Each of the electrodes 5, being in electrical contact with the material 2, is at substantially the same potential as the material adjacent to each of the electrodes 5. Therefore, by measuring the electrical potential at the electrodes 5, the potential difference between different locations within the material 2 can be measured, as described in more detail below. An electrode 5 (e.g. of a pair of electrodes 5) from which an electrical signal is received, for example using the voltage monitor 5, is referred to as a monitor electrode 5.

The voltage monitor 7 may use synchronous techniques, such as, for example phase sensitive detection, to detect a signal having the same frequency as the current supplied by the current source 6. Such phase sensitive detection can provide enhanced noise immunity to wideband noise sources, by allowing detection only at the frequency supplied by the current source 6. The voltage monitor 7 may be configured to measure the magnitude of the signal received at the supply frequency. The voltage monitor 7 may also be configured to measure the phase angle of a measured signal with respect to the phase of any injected signal.

If using multiple frequencies of electrical stimulation, the received electrical signal can be demodulated and separated into multiple electrical signals each with a different frequency (or frequency band). Synchronous techniques, such as phase sensitive detection or quadrature detection, can then be used on the multiple electrical signals to extract information (e.g. amplitude and phase) from each of the multiple electrical signals, such that information is extracted for each frequency. This process may be particularly useful when multiple frequencies are applied simultaneously (e.g. superimposed). Alternatively, different frequencies may be applied sequentially (i.e. at different times), in which case the electrical signal can be separated into multiple electrical signals each with a different frequency either using the process described above, or simply by separating the electrical signals associated with different frequencies based on time. The electrical signals extracted associated with each frequency may enable improved discrimination between characteristics of and processes occurring within the stationary phase and characteristics of and processes occurring within the mobile phase.

In the arrangement of Figure 4, a first monitor electrode 5c and a second monitor electrode 5d of the electrodes 5 are connected to the voltage monitor 7. In this arrangement, the voltage monitor 7 is able to measure the potential difference between the monitor electrodes 5c and 5d, and thereby the potential difference between the regions of material 2 adjacent to the respective monitor electrodes 5c and 5d. The measured potential difference may be referred to as an electrical signal received from the electrodes. The current flow and potential difference distribution within the material 2 is described in more detail below.

Figure 5 shows the controller 8 of Figure 1 in further detail. It can be seen that the controller 8 comprises a CPU 8a which is configured to read and execute instructions stored in a volatile memory 8b which takes the form of a random access memory. The volatile memory 8b stores instructions for execution by the CPU 8a and data used by those instructions. For example, in use, measured potential difference values may be stored in the volatile memory 8b. The controller 8 further comprises non-volatile storage in the form of a solid state drive 8c. The measured potential difference values may be stored on the solid state drive 8c.

The controller 8 further comprises an I/O interface 8d to which are connected peripheral devices used in connection with operation of the controller, and with obtaining the measured potential difference values. More particularly, a display 8e is configured so as to display output from the controller 8. The display 8e may, for example, display a representation of the measured potential difference values, or a graphical user interface. Additionally, the display 8e may display images generated by processing of the measured potential difference values. Input devices are also connected to the I/O interface 8d. Such input devices include a keyboard 8f and a mouse 8g which allow user interaction with the controller 8. The current source 6 and voltage monitor 7 are also connected to the I/O interface 8d, allowing the controller 8 to control the current source 6 and the voltage monitor 7.

A network interface 8h allows the controller 8 to be connected to an appropriate computer network so as to receive and transmit data from and to other computing devices. For example, the controller 8 may be remotely controlled by a remote computer via the Internet. The CPU 8a, volatile memory 8b, solid state drive 8c, I/O interface 8d, and network interface 8h, are connected together by a bus 8i.

In use, the measurement apparatus 1 is controlled by the controller 8 to perform tomographic measurements on the material 2 contained within the region of the column 3 surrounded by the electrodes 5 (i.e. the sensing location A). Tomography refers to the use of some form of penetrating wave to deduce properties of a region of interest (e.g. a sensing location). Such tomographic sensing enables parameters, such as conductivity or more generally impedance, to be deduced relating to the material 2 in the column 3 at the sensing location. Thus, in combination with specific knowledge of the nature of the materials within the column 3 and the chemical process taking place, characteristics of the mobile phase, stationary phase, and chemical process can be determined.

In electrical impedance tomography (EIT) the penetrating waves are generated by the injection of electrical signals into the region of interest. Electrodes placed around the sensing location monitor the impedance of the material within the sensing location, by virtue of the potential differences caused by the injection of electrical signals. Both the magnitude and the phase (i.e. both the real and imaginary parts) of the monitored signals may be used.

The controller 8 initiates the performance of the first step S1 of the process 300 of Figure 3, i.e. applying an electrical stimulation to electrodes 5 of the measurement system 1. The controller 8 further initiates the performance of the second step S2 of the process 300 of Figure 3, i.e. receiving an electrical signal. In doing so, measurements are conducted to gather information related the material 2 within the sensing location A. A series of potential difference measurements are conducted, providing relationships between current injected between pairs of the stimulation electrodes 5 and the potential difference, caused by that current injection, at different pairs of the electrodes 5.

The controller 8 controls the current source 6 and voltage monitor 7. The current source 6 is controlled to apply signals to the stimulation electrodes 5, while the voltage monitor 7 is controlled to measure potential differences at the monitor electrodes 5. The measured potential differences provide a received electrical signal.

With reference to Figure 4 above, the application of a current between first and second energisation electrodes 5a, 5b, causes a potential difference distribution within the material 2. When a current is flowing between the energisation electrodes 5a, 5b, a plurality of current paths exists between the electrodes. The current density is greatest closest to the electrodes 5a, 5b, however, current will flow throughout the material 2, albeit with a reduced current density. Dashed lines I indicate several current paths within the material 2, in response to the application of energisation to the electrodes 5a, 5b.

The flow of current throughout the material 2 causes a corresponding potential difference distribution throughout the material 2, current flowing from a higher potential to a lower potential. This potential difference distribution can be understood with reference to dashdot lines V, which represent lines of isopotential within the material 2. That is, all points on each of the lines V have the same electrical potential as each of the other points on the same line V (and a different potential to all points on each of the other lines V). The electrical potential within the material 2 gradually decreases from a highest value immediately adjacent to the first energisation electrode 5a, to a lowest value immediately adjacent to the second energisation electrode 5b. While it is not possible to directly measure the potential at all points within the material 2, the above illustrated potential difference distribution allows measurements conducted between electrodes which are distant from the energisation electrodes to provide information regarding the potential difference distribution. Moreover, non-uniformities in the conductivity of the material 2 cause disturbances to the potential difference distribution, which disturbances can be monitored by their effect on the potential difference values measured at the electrodes 5. It can be seen, therefore, that by measuring the magnitude of the potential difference between electrodes 5c and 5d, information relating to the potential difference distribution within the material 2 can be gathered. Similarly, by measuring the magnitude of the potential difference between the electrodes 5d and 5e, further information relating to the potential difference distribution within the material 2 can be gathered. This process can be repeated for each of the adjacent pairs of electrodes which are not energisation electrodes (i.e. 5c-5d, 5d-5e, 5e-5f, ..., 5o-5p). Where there are 16 electrodes, this results in 13 monitor electrode pair measurements for each energisation configuration. Thus, while the electrodes 5c and 5d are illustrated as monitor electrodes in Figure 4, by measuring the potential difference between each of the adjacent pairs of the electrodes 5c-5p, a map of the potential difference within the material 2 when electrodes 5a and 5b are energisation electrodes can be created.

Once each of the pairs of monitor electrodes has been measured, as described above, the energisation configuration is switched such that a different pair of electrodes is the energisation electrodes. For example, the first and second energisation electrodes may be switched to become the electrodes 5b and 5c respectively. A current is applied, by the current source 6, between the electrodes 5b, 5c, as described above with reference to the electrodes 5a, 5b, and the electrical potential is measured by the voltage monitor 7 at each of the 13 adjacent pairs of monitor electrodes (5d-5e, 5e-5f, ..., 5o-5a).

In the above described sensor configuration, having 16 electrodes 5, there are 16 possible energisation electrode configurations, and 13 monitor electrodes configurations for each of those 16 energisation electrode configurations, resulting in 208 unique measurement configurations. However, while 208 unique measurement configurations exist, where a measurement configuration is a direct inverse of an earlier measurement configuration (e.g. where the energisation and monitor electrodes are simply reversed), the measurement configuration can be omitted, requiring 104 independent measurements to be taken to provide a 'complete' set of measurements. Such a 'complete' set of measurements may be referred to simply as an electrical signal which itself comprises multiple electrical signals.

The second step S2 described above is illustrated with reference to a single sensing location. However, the second step S2 may further include receiving an electrical signal from a second (or other additional) sensing location. Furthermore, the above-described steps S1 and S2 use an intra-location sensing scheme, i.e. the energisation electrodes and monitor electrodes are from the same set of electrodes arranged at a single sensing location. However, the concepts and processes are equally applicable to inter-location sensing schemes. For example, when used in combination with a measurement system which comprises electrodes at multiple sensing locations (e.g. the measurement system 10 of Figure 2), the step S1 of method 300 may comprise applying an electrical stimulation to a first set of electrodes in a first sensing location and receiving an electrical signal from a second, different set of electrodes in a second sensing location (and optionally also receiving an electrical signal from the first set of electrodes).

The steps S1, S2 can be repeated multiple times to obtain a temporal dataset. For example, the steps S1, S2 described above can be performed in a first period of time to generate an electrical signal associated with that first period of time. The steps S1, S2 can then be performed again during a second period of time to generate electrical signals associated with the second period of time. The steps S1, S2 can be repeated for multiple time periods, in order to gain a dataset, where each data point of the data set represents an electrical signal associated with a particular time period. In this way, the electrical signals can be monitored over time. The dataset which arises from such measurements may be referred to as a temporal dataset. By obtaining a temporal dataset, changes in the properties of the material 2, and hence changes in the chemical process, may be determined.

Returning to the method 300 of monitoring a chemical process, as depicted in Figure 3, the method further comprises a third step S3 in which one or more characteristics of the stationary phase, mobile phase and/or the chemical process are determined by processing the electrical signal(s) received from the electrodes.

Processing the electrical signals can comprise performing operations on the electrical signals as received. Alternatively, processing the electrical signals can comprise performing operations on the electrical signals to generate intermediate data, and processing said intermediate data to determine the characteristics. For example, processing the electrical signals can include generating impedance data from the electrical signals and determining characteristics based on the impedance data. Generating impedance data from the electrical signals is described below in more detail.

The received electrical signal can be converted, by conventional tomographic techniques, to form impedance data for the region of interest. Step S3 may include first generating, based on the received electrical signal, a set of impedance values for sub-regions of the material 2 within the sensing location. Step S3 may also include generating a single impedance value representing the impedance of the sensing location. The single impedance value representing the impedance of the sensing location may be generated by taking a spatial average of impedance values over all of the sub-regions.

Known algorithms, for example analytical algorithms, exist for converting individual potential measurements to a two-dimensional or three-dimensional map of the electrical impedance. For example, a two-dimensional map may be particularly appropriate when using an intra-location sensing scheme, and a three-dimensional map (e.g. a volumetric representation) may be particularly appropriate when using an inter-location sensing scheme. These algorithms can be applied by the controller 8 to generate the map of the electrical impedance of the material 2 within the sensing location(s). The set of impedance values for sub-regions of the material 2 may be referred to as a tomogram. It should be noted that, while such data may be used to generate an image of the material in the region of interest (for example using image reconstruction), an image need not be generated. Rather, the tomogram comprises a two-dimensional data set (e.g. map) representing impedance values for sub-regions (e.g. pixels) of the region of interest.

Each sub-region may have an equal area in a plane of the column 3 perpendicular to the flow direction Z, that area being a fraction of the area of the cross-section of the column 3.The dimension of the electrodes 5 along the length of the column 3 (e.g. in the flow direction Z) determines the effective depth of each of the sub-regions. Therefore, the impedance value associated with each sub-region is an average impedance across the depth of the sub-region (and thus the depth of the sensor electrodes 5). It will be appreciated that fringing effects can result in material immediately adjacent to each of the sub-regions influencing the flow of current within the sub-regions; however, this effect is considered to have a negligible impact on the measured impedance.

The impedance data may be complex with an imaginary and real component. The impedance data can be processed such that only the real part of the impedance data (i.e. relating to conductivity) may be used or only the imaginary part of the impedance data (i.e. relating to phase) may be used. Such data may be referred to as conductivity data and phase data, respectively.

This application generally relates to methods of using the electrical signals described above for monitoring the chemical process and the material within the column. The methods include various ways of processing the electrical signals to determine a characteristic of the chemical process (i.e. performing step S3 of the method 300 of Figure 3). Such methods will be described by way of illustrative examples in more detail below.

For ease of illustration, the methods are described with reference to an example implementation of a column process with a stationary phase and mobile phase. In particular, the example implementation is a process which is used for a pharmaceutical synthesis process. The stationary phase in the example implementation is in the form of resin beads which are coated with proteins and impurities. In use, a mobile phase including proteins and impurities which can selectively interact with the proteins and impurities on the resin beads is flowed through the resin beads so as to synthesise a desired molecule. However, it should be understood that the methods described herein are equally applicable to other implementations, for example to other chemical processes with different stationary phases and mobile phases.

The chemical process in the example implementation comprises a number of stages which can include: wash, equilibration, load, elution, strip, clean-in-place (CIP), storage.

The wash stage comprises introducing a washing agent (e.g. cleaning liquid or buffer) to the column. The washing agent may also be referred to as a mobile phase, but the mobile phase in the wash stage performs a different task compared to the eluent. The wash stage can be performed to remove any unwanted components from the column (e.g., following a load phase a wash stage can be performed to remove the portion of the mobile phase which has not selectively interacted with the stationary phase).

The equilibration stage is a type of wash stage. The equilibration stage is typically performed at the start of a process so as to flush unwanted residual chemicals which may be still present following a previous stage or process. The column is typically flushed with a buffer chemical during an equilibration stage. The buffer chemical may be referred to as a mobile phase.

The load stage comprises introducing the mobile phase in the form of an eluent to the column. The eluent is a mobile phase which has the components required for the chemical process (e.g. the synthesis process) in a solvent or solvent mixture. The mobile phase can be introduced by being provided (e.g. injected) into an entrance at the top of the column. The mobile phase subsequently flows through the column during the load stage. The elution stage comprises introducing a substance (also known as an elution buffer) to the column which breaks the bond between the stationary phase and the component of the mobile phase which has selectively interacted with the stationary phase. The substance is in liquid form (i.e. a solvent or solvent mixture) and flows through the column. In this way, the target molecule which has been synthesised using this chemical process can be separated from the stationary phase and collected at an exit of the column. The substance may also be referred to as a mobile phase.

The strip phase is a type of wash stage. The strip phase comprises the removal of product(s) which are tightly bound to the stationary phase, and is typically performed following the elution stage. The strip phase is typically performed to prevent proteins or other molecules from precipitating and fouling the column. The strip phase is performed by providing a strong cleaning agent, for example a buffer with a higher pH than the elution buffer, to the column. The cleaning agent may be referred to as a mobile phase. High concentrations of NaOH acid may be used as the cleaning agent in a strip phase.

The storage phase comprises preparing the column for storage, for example for storing the column until it is next needed for performing a chemical process. The storage phase comprises filling the column with a storage buffer. The storage buffer may be referred to as a mobile phase. The storage buffer is selected so as to preserve the stationary phase.

The column may then be retained in a stable environment until it is next needed for a chemical process.

The CIP stage generally comprises a wash stage, but the washing agent is designed to remove all components other than the stationary phase from the column. The CIP stage is generally performed as a final stage to clean the column prior to a second iteration of the synthesis process (or a different chemical process) being performed.

Each of the stages may be performed no times, a single time, or multiple times depending on the selected parameters of the chemical process. Furthermore, each stage may be considered a chemical process itself, or may be considered part of the overall chemical process of synthesising a target molecule.

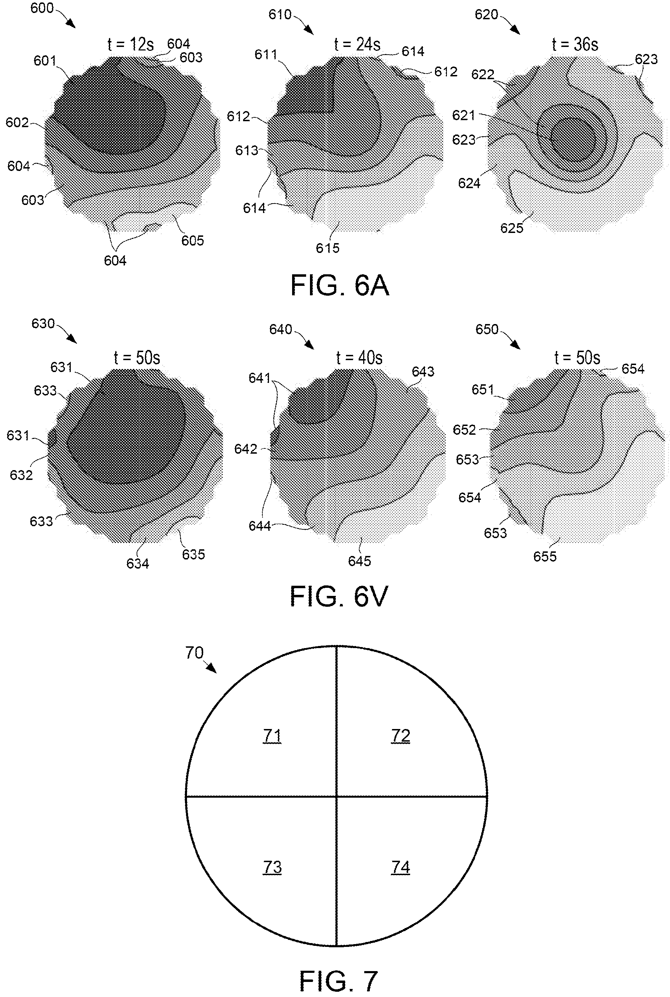

Figures 6A and 6B illustrates a series of tomograms 600, 610, 620, 630, 640, 650 generated using a measurement apparatus. The measurement apparatus has a set of electrodes arranged at a plane of a column apparatus, for example as illustrated in Figure 1. An electrical stimulation is applied to the electrodes and an electrical signal received, as described above. The electrical signal is then converted into impedance data which is represented in Figures 6A and 6B in the form of image-based tomograms.

While the sensing locations have a depth along the axis of the column, the tomograms are shown in cross-section at a particular plane, i.e. the plane at which the electrodes are arranged. The tomograms are also generally circular in shape, corresponding to the circular cross-sectional shape of the column. However, the tomograms are generated using conductivity values associated with sub-regions of the sensing location. For the calculations in this example, each sub-region used in this example is assumed to be square in shape, and therefore the tomograms appear pixelated and non-smooth at the edges of the tomograms.

The tomograms are shown for two different stages of a chemical process: Figure 6A shows a load stage and Figure 6B shows a wash stage. Figure 6A shows three tomograms 600, 610, 620 each representing conductivity data generated using electrical signals received in a particular time period. That is, each tomogram 600, 610, 620 is associated with electrical stimulation applied and electrical signals received during a particular time period. Each time period is associated with a time t, which can represent, for example, the start of the time period. The left-most tomogram 600 occurs at time t = 12 s). Each subsequent tomogram 610, 620 to the right occurs at a later time. In particular, the second tomogram 610 and third tomogram 620 occur at times t = 24s and t = 36s, respectively. Similarly, Figure 6B shows three tomograms 630, 640, 650 each representing conductivity data generated using electrical signals received at times t = 20s, t = 40s and t = 50s, respectively).

Each tomogram 600, 610, 620, 630, 640, 650 represents the conductivity at the sensing location, where the conductivity values are illustrated using a contour plot. The contours lines correspond to lines of constant conductivity within the tomogram at a number of discrete conductivity values. Areas bound by the contour lines, shown as shaded regions in Fig 6A and 6B, correspond to areas of the sensing location where the conductivity value is between the discrete conductivity values which bound that area. Such areas may be referred to as sub-regions.

In Figure 6A, the first tomogram 610 has a first area 601 in which the conductivity is less than 2.45 mS/cm, a second area 602 in which the conductivity is between 2.45 mS/cm and 2.60 mS/cm, a plurality of third areas 603 in which the conductivity is between 2.60 mS/cm and 2.75 mS/cm, a plurality of fourth areas 604 in which the conductivity is between 2.75 mS/cm and 2.90 mS/cm, and a fifth area 605 in which the conductivity is over 2.90 mS/cm. The second tomogram 620 has a first area 611 in which the conductivity is less than 3.05 mS/cm, a plurality of second areas 612 in which the conductivity is between 3.05 mS/cm and 3.17 mS/cm, a third area 613 in which the conductivity is between 3.17 mS/cm and 3.29 mS/cm, a plurality of fourth areas 614 in which the conductivity is between 3.29 mS/cm and 3.40 mS/cm, and a fifth area 615 in which the conductivity is over 3.40 mS/cm. The third tomogram 620 has a first area 621 in which the conductivity is less than 3.53 mS/cm, a plurality of second areas 622 in which the conductivity is between 3.53 mS/cm and 3.61 mS/cm, a plurality of third areas 623 in which the conductivity is between 3.61 mS/cm and 3.70 mS/cm, a fourth area 624 in which the conductivity is between 3.70 mS/cm and 3.78 mS/cm, and a fifth area 625 in which the conductivity is over 3.78 mS/cm.

In Figure 6B, the first tomogram 630 has a plurality of first areas 631 in which the conductivity is less than 1.22 mS/cm, a second area 632 in which the conductivity is between 1.22 mS/cm and 1.28 mS/cm, a plurality of third areas 633 in which the conductivity is between 1.28 mS/cm and 1.34 mS/cm, a fourth area 634 in which the conductivity is between 1.34 mS/cm and 1.40 mS/cm, and a fifth area 635 in which the conductivity is over 1.40 mS/cm. The second tomogram 640 has a plurality of first areas 641 in which the conductivity is less than 1.74 mS/cm, a second area 642 in which the conductivity is between 1.74 mS/cm and 1.79 mS/cm, a third area 643 in which the conductivity is between 1.79 mS/cm and 1.84 mS/cm, a plurality of fourth areas 644 in which the conductivity is between 1.84 mS/cm and 1.89 mS/cm, and a fifth area 645 in which the conductivity is over 1.89 mS/cm. The third tomogram 650 has a first area 651 in which the conductivity is less than 1.98 mS/cm, a second area 652 in which the conductivity is between 1.98 mS/cm and 2.01 mS/cm, a plurality of third areas 653 in which the conductivity is between 2.01 mS/cm and 2.04 mS/cm, a plurality of fourth areas 654 in which the conductivity is between 2.04 mS/cm and 2.06 mS/cm, and a fifth area 655 in which the conductivity is over 2.06 mS/cm.

In an ideal process, the mobile phase should flow through the stationary phase with a generally flat flow profile. As such, in an ideal process, the conductivity in the sensing location would be uniform across the sensing location at a given time. Uniformity can be represented in a contour tomogram as a tomogram with only one area and no contour lines, indicating that only one conductivity value (or a small band of conductivity values) is measured in the sensing location at a given time. In real apparatus, for example due to channelling effects, rather than a truly flat uniform flow profile another flow profile may be seen, for example wherein the mobile phase flows through the centre of the column faster than around the edges of the column. In such cases, in an ideal process the conductivity in the sensing location may be rotationally symmetric around the sensing location. Rotationally symmetric flow profiles may also be referred to as uniform.

It can be seen that the tomograms 600, 610, 620 in Figure 6A show non-uniformity and asymmetry. That is, some sub-regions of the tomograms 600, 610, 620 have a higher conductivity compared to other sub-regions of the same tomogram, and the conductivity within the sensing location differs circumferentially as well as radially. For example, the first tomogram 600 has sub-regions 604, 605 in the lower right portion of the tomogram 600 with a higher (larger, more positive) conductivity than sub-regions 601, 602 in the central region and upper left portion of the tomogram 600. Said higher conductivity indicates that the mobile phase has a higher flow rate in the associated sub-regions 604, 605, for example because the mobile phase (which has a higher conductivity than the stationary phase in this stage) is more concentrated in these sub-regions 604, 605 due to the higher flow rate. That is, the flow profile in the load stage at t = 12s is non-uniform. A similar profile is seen in the second tomogram 610, wherein the sub-portions 614, 615 in the lower right portion of the tomogram 610 have a higher conductivity than sub-regions 611, 612 in the upper right and central regions of the tomogram 610, indicating a faster flow rate in the lower eight hand portion of the column. That is, the flow profile in the load stage at t = 24s is also non-uniform. In the third tomogram 620, the areas 621, 622, 623, 624, 625 are more symmetrical compared to the areas in the first and second tomograms 600, 610, indicating that the flow profile has improved over time. However, the sub-region 625 in the lower right portion of the third tomogram 620 has a higher conductivity than the areas 621, 622, 623 in the top right and central portions of the third tomogram 620, indicating that the asymmetrical (non-uniform) flow profile is still present at t = 36s.

A similar distribution of conductivities can be seen in the tomograms 630, 640, 650 in Figure 6B. That is, areas in the lower right portion 634, 635, 644, 645, 655 of the tomograms 630, 640, 650 have a higher conductivity than the corresponding areas in the upper right and central portions 631, 632, 641, 642, 643, 651, 652, 653 of the tomograms 630, 640, 650. As such, the non-uniform flow profile seen in the load stage (in Fig 6A) is also seen in the wash stage in Figure 6B.

It should be understood that the locational terms 'lower right' and 'top right' are used in reference to the tomograms as they appear on the page, but that in use a column will typically be upright and hence different locational terms may be used to describe the distribution and flow of the mobile phase in the column.

The stationary phase in a column has certain packing characteristics, for example packing density, packing porosity, and a uniformity of both density and porosity (e.g. uniformity or homogeneity of the density or porosity throughout the column). Packing characteristics can simply be referred to as packing. In an ideal set-up, the beads are packed with uniform packing (e.g. uniform porosity and uniform density) through the column so as to maintain a consistent reaction rate between the mobile phase and stationary phase. However, in many real-life situations the packing may be less than ideal, for example with non-uniform porosity. Non ideal (or less than ideal) packing may be referred to as sub-optimal packing. The resin beads may have been packed suboptimally initially, or the packing characteristics may have degraded over time. If sub-optimal packing is known about, then action can be taken, for example by repacking or replacing the stationary phase, or by adjusting the chemical process to compensate for the sub-optimal packing characteristics.

The non-uniform conductivity determined using the tomograms can imply that the stationary phase has a non-uniform packing within the sensing location, hence allowing the mobile phase to flow through different sub-regions of the sensing location with a different flow rate. Alternatively, the non-uniform conductivity determined using the tomograms can imply that the stationary phase has a non-uniform packing in a location upstream of the sensing location, causing the mobile phase to flow through different sub-regions of the upstream location with a different flow rate and hence reach different sub-regions of the sensing location at different times.

Using the conductivity data associated with sub-regions of the sensing location, many spatial distribution characteristics associated with the mobile and stationary phases can be determined. For example, determining the spatial distribution of the mobile phase can enable determination of the flow rate in different sub-regions of the sensing location (i.e. the flow profile) and the flow distribution across the sensing location. Determining the spatial distribution of the stationary phase can enable determination of the uniformity, distribution, density, and porosity of packing of the stationary phase.

Qualitative information regarding the spatial distribution of the mobile phase and stationary phase can be determined by viewing the image-based tomograms. Quantitative data regarding the spatial distribution of the mobile phase and stationary phase can be determined using the magnitude of the conductivity in sub-regions of the tomograms, i.e. using the conductivity data itself. Many known methods and algorithms can be used to determine spatial distribution characteristics based upon this conductivity data. Methods for such a determination will not be described in detail here, but methods of determining a density of a material using EIT are described in detail in WO 2016/038391.

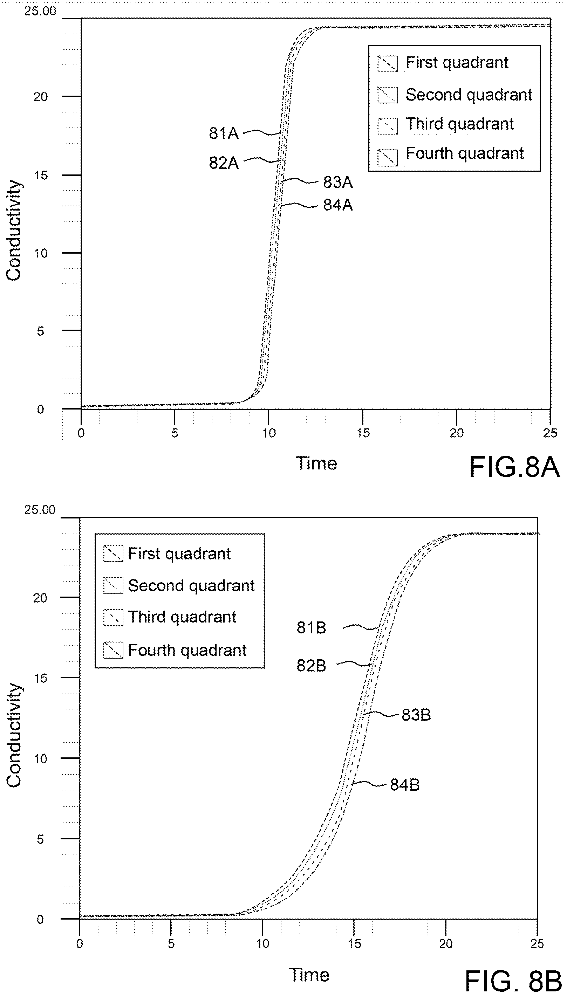

Figures 7, 8A and 8B illustrate a method determining a spatial distribution of the mobile and/or stationary phase. Figure 7 schematically illustrates a tomogram 70, for example one of the tomograms of Figure 6A or 6B. The tomogram 70 is segmented into quadrants 71, 72, 73, 74, each quadrant representing a quadrant of the sensing location. The conductivity data which forms the tomogram is similarly segmented into portions, each portion associated with one of the quadrants 71, 72, 73, 74. As such, each quadrant 71, 72, 73, 74 of the tomogram 70 contains conductivity data associated with sub-regions located in each associated quadrant of the sensing location. It should be understood that, while quadrants are used in this illustrative example, the tomogram may be segmented in any other way. That is, the tomogram may be segmented into two or more portions with any shape and arrangement (e.g. sectors, segments, or any other portion shape).

A single conductivity value is generated for each quadrant 71, 72, 73, 74, for example by taking a weighted average of all the conductivity values in the corresponding quadrant (i.e. the conductivity value associated with each of the sub-regions within the quadrant). The conductivity of each quadrant can be monitored over time and used to determine spatial distribution characteristics of the mobile and/or stationary phase in the manner described above. The conductivity of each quadrant can also be compared with the conductivity of other quadrants in order to determine spatial distribution characteristics.

Figures 8A and 8B depict the conductivity of four quadrants of a tomogram over time, in a column with uniform packing in the sensing location and a column with sub-optimal packing in the sensing location, respectively. The graphs in Figures 8A and 8B depict conductivity curves, each representing the conductivity of one quadrant, over a period of time. That is, a first curve 81A represents the conductivity of a first quadrant 71 of the tomogram 70 of Figure 7. Similarly, the second, third and fourth curves 82A, 83A, 84A each represent the conductivity of a second, third and fourth quadrant 72, 73, 74 of the tomogram 70 of Figure 7, respectively. The period of time is 25 seconds.

Each of Figures 8A and 8B are depicted during a 'rising edge' transition, where the conductivity in the sensing location is changing. Such a rising edge transition may occur, for example, over a time in which there is initially no mobile phase in the sensing location and subsequently the mobile phase flows into the sensing location. Alternatively, a rising edge transition may occur over a time in which a chemical process begins and completes. In a further alternative, a rising or falling edge transition may occur over a time in which flow of a first mobile phase is changed to flow of a second mobile phase (which transition may in turn be indicative of completion of a chemical process). For ease of visualisation, the conductivities of each curve 81A, 82A, 83A, 84A in Figure 8A are normalised between their minimum and maximum conductivity values, allowing the difference in shape between each curve 81A, 82A, 83A, 84A to be clearly seen and compared. Similarly, the conductivities of each curve 81B, 82B, 83B, 84B in Figure 8B are also normalised between their minimum and maximum conductivity values. As such, the conductivity represented in Figures 8A and 8B is in arbitrary units and a scale is provided as a visualisation tool.

In Figure 8A, the conductivity curves 81A, 82A, 83A, 84A all generally follow the same path. That is, the shape of the curve, including the gradient, rate of change of gradient, maximum and minimum conductivity are generally equal in all quadrants. This indicates that the rate of flow of the mobile phase, and hence the packing of the stationary phase, is generally uniform across all four quadrants.

The curves in Figure 8B depicts conductivity curves, each representing the conductivity of one quadrant, over a period of time. A first curve 81B represents the conductivity of a first quadrant 71 of the tomogram 70 of Figure 7. Similarly, the second, third and fourth curves 82B, 83B, 84B each represent the conductivity of a second, third and fourth quadrant 72, 73, 74 of the tomogram 70 of Figure 7, respectively. In Figure 8B, the conductivity curves 81B, 82B, 83B, 84B follow different paths. In particular, the first curve 81B begins to rise faster (i.e. has a faster increase in gradient) compared to the second, third and fourth curves 82B, 83B, 84B. This indicates that the rate of flow of the mobile phase is faster in the first quadrant compared to the other quadrants. Correspondingly, this indicates that the packing in the sensing location is sub-optimal due to non-uniformity between the quadrants. As described above, known techniques may be used to determine spatial distribution characteristics of the stationary phase using the conductivity data, for example determining the density, porosity, distribution of the stationary phase within the sensing location. As such, in addition to determining that the packing is sub-optimal, quantitative information regarding the packing characteristics may be determined.

In addition to characteristics of the stationary phase and mobile phase, characteristics of the chemical process itself can be determined using tomograms and curves such as those in Figures 6A, 6B, 8A and 8B. For example, by considering the tomograms 600, 610, 620 over time shown in Figure 6A, it can be seen that the conductivity increases in the lower right corner of the sensing location earlier than in other portions of the sensing location. As such, this indicates that the chemical process begins in this lower right portion of the sensing location earlier than in other portions. Comparatively, the first curve 81B of Figure 8B increases faster than the curves 82B, 83B, 84B associated with the other quadrants, indicating that the chemical process begins occurring earlier in the first quadrant compared to the other quadrants. The gradient of increase of conductivity may also be used as an indicator of the rate at which the chemical process is occurring (i.e. a process rate), with a higher gradient indicating a more rapidly occurring process. The progress of the chemical process may be referred to as a characteristic of a chemical interaction between the solid stationary phase and the liquid mobile phase.

The tomograms 600, 610, 620, 630, 640, 650 in Figures 6A and 6B and the curves 81A-84A, 81B-84B in Figures 8A and 8B, while illustrated graphically, take the form of series of datasets. Determining characteristics based upon the datasets can be performed generally by determining a relationship between the data points in each dataset, and determining a characteristic based on the relationship. The relationship can include characteristics which describe the data mathematically, for example relating to the maximum, minimum, peak width, peak height, gradient, deviation, skew etc. As described in the examples above, such relationships can be compared to known relationships (e.g. theoretical or empirical data relationships) or they can be compared to relationships of other datasets (e.g. in the situation where datasets of different quadrants were compared). In another example, machine learning can be used to determine characteristics based on the conductivity data. That is, a machine learning model can be trained to associate relationships of datasets with characteristics, and subsequently determine a characteristic based on a dataset.

The above examples described with reference to Figures 6A, 6B, 7, 8A and 8B demonstrate the determination of characteristics of the stationary phase, mobile phase and chemical process by monitoring a single sensing location of a measuring system.

In another example, characteristics of the stationary phase, mobile phase and chemical process can be determined by monitoring multiple sensing locations. In this example, the measurement system comprises eight (8) sets of electrodes, each arranged at one of eight (8) sensing locations spaced along the flow direction of a column. In particular, each set of electrodes is located in a plane of the column, each plane being spaced from adjacent planes along the flow direction. The sensing locations are referenced with symbols A, B, C, D, E, F, G, H, where sensing location A is located proximal to an input of or entrance to the column (e.g. where the mobile phase is introduced into the column) and sensing location H is located proximal to an output of the column (e.g. where the mobile phase is removed from the column after it has flowed through the column and sequentially through each of sensing locations A-H).

Each sensing location A-H is monitored over a plurality of time periods. That is, each of the sensing locations A-H has an electrical stimulation applied during each of a plurality of time periods and an electrical signal received during each of the plurality of time periods. The electrical signal for sensing location A-H during each time period is converted into conductivity data. In particular and as described above, a tomogram is generated for each sensing location at each time period, and a single conductivity value generated based on the tomogram. As such, for each sensing location A-H there is generated a series of conductivity values representative of the conductivity in the sensing location A-H for each of a plurality of time periods. Each series of conductivity values can be referred to as a temporal dataset.

An inter-location sensing scheme is used. That is, an electrical stimulation is applied to pairs of energisation electrodes in the first sensing location A, an electrical signal is received from pairs of monitor electrodes in the first sensing location A, and conductivity data associated with the first sensing location A is generated. Similarly, at each of the other sensing locations B-H, an electrical stimulation is applied to pairs of energisation electrodes in the sensing location, an electrical signal is received from pairs of monitor electrodes in the corresponding sensing location, and conductivity data associated with the corresponding sensing location is generated.

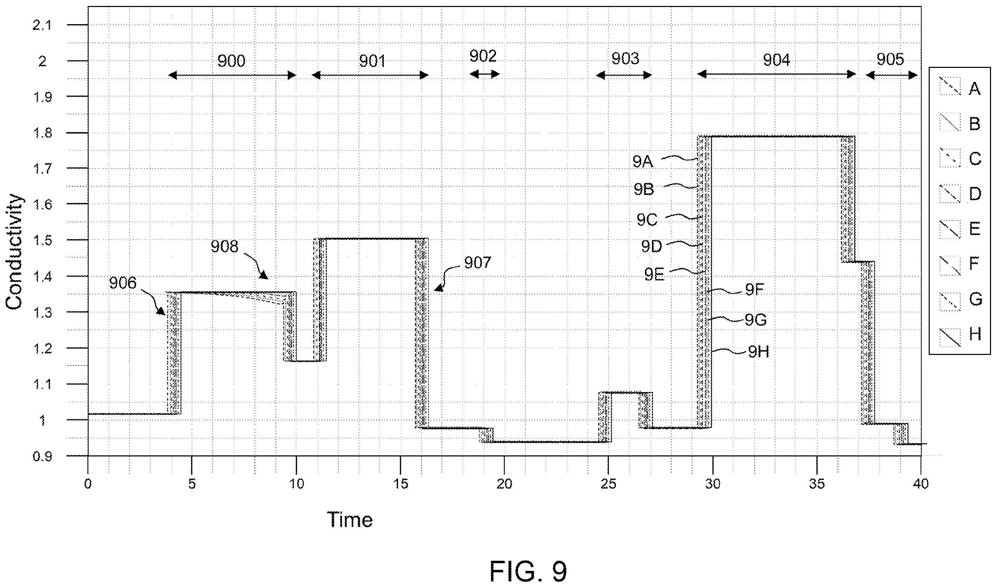

Figure 9 depicts the conductivity of each sensing location A-H of the column during a chemical process. The chemical process comprises a load stage 900, a wash stage 901, an elution stage 902, a strip stage 903, a CIP stage 904 and a storage stage 905. These stages 900-905 occur over a period of time of 40s. Eight conductivity curves 9A-H are depicted, each representing the conductivity in one of the sensing locations A-H. That is, a first conductivity curve 9A represents the conductivity in the first sensing location A and second, third, fourth, fifth, sixth, seventh and eight conductivity curves 9B-H represent the conductivity in the second, third, fourth, fifth, sixth, seventh and eight sensing locations B-H, respectively.

The conductivity in each of the sensing location varies over time. In general, the conductivity changes dependent on the stage of the chemical process. As such, on a global level, the conductivity in each sensing location at each time is similar. However, there are smaller variations between the conductivity in each sensing location at each time, and it is these variations which can be used to determine characteristics of the chemical process, stationary phase and mobile phase.

Variations are typically seen at transitions between phases, for example a rising edge transition 906 at the start of the load stage 900 or a falling edge transition 907 at the end of the wash stage 901. Variations may also be seen during a transition, for example a drop-off phenomenon 908 occurs during the load stage 900. During this drop-off phenomenon 908, the conductivity of the upstream sensing locations (i.e. the first, second, third and fourth sensing locations A-D) experience an increase in conductivity at the rising edge transition 906 at the start of the stage 900, but experience a reduction (or drop-off) in conductivity later in the stage 900. The reduction is greatest for the first sensing location A, and reduces as the mobile phase moves downstream. The drop-off phenomenon 908 is indicative of the reaction process occurring in the column during the loading stage. In this example, the target dynamic bonding capacity of the column is 50% and therefore the bonding between components of the mobile phase and the stationary phase (i.e. the reaction process) occurs primarily within the upstream sensing locations A-D. The drop-off in conductivity seen in the drop-off phenomenon 908, which occurs primarily in the upstream sensing locations A-D is indicative of the reaction process occurring in those sensing locations A-D. By monitoring phenomena such as the drop-off phenomenon 908, the effectiveness and/or progress of a process (e.g. a reaction process) within the column can be determined. That is, characteristics of a chemical interaction between the solid stationary phase and the liquid mobile phase (and in particular, components of the liquid mobile phase) can be determined by processing the electrical signals received from the sets of electrodes at the sensing locations A-D.

The chemical process may also comprise, or be referred to as, a chromatography process. During the loading stage of one such chromatography process (e.g. stage 900 illustrated in Figure 9), the mobile liquid phase may contain a mixture of molecules (for example, proteins, oligonucleotides, impurities... etc.) that can have different levels of physicochemical affinity with the solid stationary phase when they are loaded in the column. The higher the affinity, the stronger the attraction between the molecules and the resin within the stationary phase. After the loading stage, different liquid mobile phases (e.g. stage 901 illustrated in Figure 9) can be injected into the column to interact with molecules with various affinity levels, to achieve the separation or synthesis processes within the column. Different liquid mobile phases may be referred to as a first mobile phase, a second mobile phase, etc. Transitions between those phases may be monitored to provide process insights.

The system described herein can thus determine one or more characteristics of a chemical or physicochemical interaction between the solid stationary phase and the liquid mobile phase. Such characteristics may be determined based upon analysis of electrical signals obtained during a transition between different mobile phase components (e.g. a first liquid mobile phase and a second liquid mobile phase) flowing within the apparatus. Such characteristics may also be determined based upon analysis of electrical signals obtained by monitoring and/or identifying a transition during the flow of a single liquid mobile phase flowing within the apparatus. For example, the drop-off phenomenon 908 shown in Figure 9 may allow the effectiveness and/or progress of a process (e.g. a loading process, or a reaction process) within the column to be determined.

Alternatively, or in addition, monitoring such a drop-off phenomenon may also allow the monitoring of a loading or separation process, specifically by determining the percentage of dynamic binding capacity (DBC). DBC is a measure of the maximum amount of a target material (e.g. a protein) that can be loaded into the column (i.e. bound to the stationary phase) at particular operating conditions, before significant loss occurs by unbound material outflow. Therefore, the progress of loading can be characterised as a percentage of a maximum loading (i.e. a percentage of the DBC). If the loading as a percentage of DBC is too high, the column is substantially saturated and product loss is likely to occur. If the loading as a percentage of DBC is too low, the column is being underutilised. Advantageously the presently-described system allows accurate monitoring of the loading process so as to achieve an optimal percentage of DBC loading.

The behaviour of the conductivity in each sensing location at the transitions between adjacent stages of the chemical process can yield important information relating to the chemical process and material within the column. Specific examples of monitoring these transitions are described below.

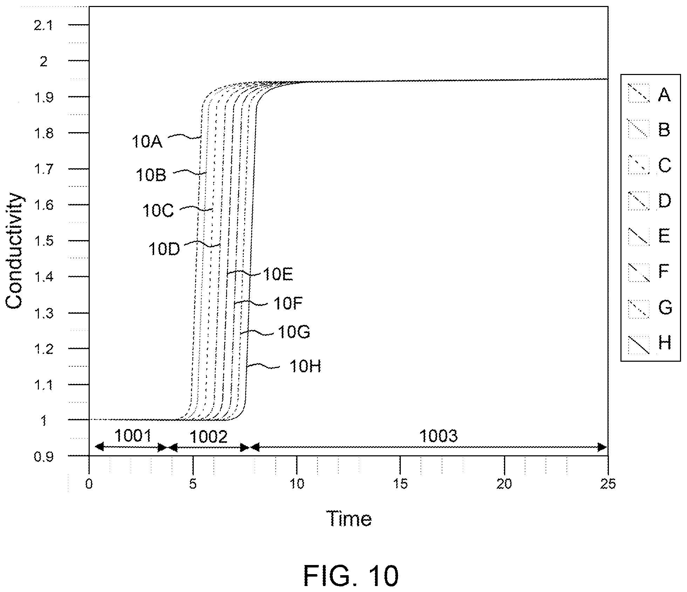

Figure 10 depicts the conductivity of each sensing location A-H of the measurement system during the onset of a wash stage. The electrical signals from the sensing locations are monitored over 25 seconds, and a corresponding conductivity value determined for each sensing location for each frame. During the period of time depicted in Figure 10 (25s), the mobile phase (in the form of a washing agent) is travelling through the column. Eight conductivity curves 10A-H are depicted, each representing the conductivity in one of the sensing locations A-H. That is, a first conductivity curve 10A represents the conductivity in the first sensing location A and second, third, fourth, fifth, sixth, seventh and eight conductivity curves 10B-H represent the conductivity in the second, third, fourth, fifth, sixth, seventh and eight sensing locations B-H, respectively. Each curve 10A-H in Figure 10 graphically illustrates the change in conductivity of each sensing location over time during the wash stage. The conductivities of all sensing locations are normalised to their minimum and maximum values.

The rate of change of the conductivities can be used to determine a measure of completion of the chemical process in each sensing location. In particular, the rate of change can be represented by the gradient of the conductivity, although other measures can be used to represent a rate of change.

In a first phase 1001 of the wash stage (approximately between t = 0s and t = 3.5s), the gradient of the conductivity in each sensing location over time is essentially zero. A substantially zero gradient indicates that the conductivity in a sensing location is substantially constant, and therefore that the chemical process (i.e. the washing process which occurs during the wash stage) is not occurring. In this first phase 1001, the mobile phase has not yet reached any of the sensing locations and hence the chemical process has not yet begun.

In a second phase 1002 of the wash stage, the conductivities in each sensing location begin to rise. That is, the gradient of the conductivity data increases from essentially zero to a non-zero value. A non-zero gradient indicates that the conductivity in a sensing location is changing, and therefore that the chemical process (i.e. the washing process which occurs during the wash stage) is occurring. It can be seen in Figure 10 that the first conductivity curve 10A indicates that the first sensing location A (that is, the sensing location closest to the entrance of the column) experiences an increase in conductivity first, and the rise occurs approximately between t = 3.5s and t = 7.5s. Each subsequent conductivity curve 10B-H indicates that their corresponding sensing location B-H along the column experiences a subsequent increase in conductivity at a time following the increase of the previous adjacent sensing location. As such, as can be expected, it can be determined that the chemical process begins in the first sensing location A and continues sequentially though each subsequent sensing location B-H. The second phase 1002 indicated in Figure 10 illustrates the second phase 1002 of the first curve 10A, but it should be understood that each curve has its own second phase which is delayed in time compared to the previous curve. The conductivities in each sensing location A-H increase with a relatively large gradient to reach a maximum conductivity during their associated second phase. The rate of change of conductivity (e.g. represented by the gradient) can be used in calculations to determine a process rate.

In a third phase 1003 of the wash stage, the conductivity in each sensing location A-H remains substantially constant around this maximum conductivity. That is, the gradient is zero (or close to zero). In this third phase 1003, the substantially zero gradient indicates that the process has completed. In particular, it implies that any washing performed during the wash stage (e.g. the removal of unwanted components) is complete. The chemical process may be described as being steady-state when the conductivity is substantially constant. Steady state represents that no significant changes to the environment are taking place. The third phase 1003 in Fig 10 is indicated for the first sensing location A, and subsequent sensing locations will each start their third phase at a later time.

In this way, the rate of change of conductivity in each sensing location can be used to determine a measure of completion of the chemical process in the corresponding sensing location. A rate of change which is substantially zero can represent that a process has not started or is complete, and a rate of change which is substantially greater than zero can represent a process that is in progress and hence incomplete. It should be understood that, in real systems, there will typically be smaller fluctuations in measurements and that the rate of change may never be precisely zero. Rather, a threshold value may be selected such that rates of change below the threshold indicate a non-started or complete process and rates of change above the threshold indicate an ongoing process.

In this example, the wash stage was arranged to occur over a time period of more than 25s. However, it can be seen that the washing process has completed in all sensing locations by approximately 10s. All sensing locations are substantially steady-state for the duration of the final 15s of the washing process shown in Fig 10. An overly long stage can waste both time and resources (e.g. because more washing agent than is needed is introduced to the column). In order to save time and resources, the chemical process can be optimised by shortening the duration to only as long as required. For example, by monitoring in real-time, the process can be performed until it reaches steady-state, indicating that it is complete, at which point it can be terminated (e.g. by bringing forward an end time of the process). In another example, the process may have originally been arranged to run for 25s, but at 25s the determined characteristic indicates that the process is incomplete (i.e. still in progress). In this instance, the end point of the process can be moved back until a time at which the process is determined to be complete. Such methods allow active management of the process in real-time. Active management in this way can ensure that a process is run for the amount of time required, and not longer or shorter, by being responsive to the changing conditions in the column.

Rather than considering the rate of change of the conductivities, if the desired or target conductivity is known, then this information can be used to determine a measure of completion of the process. For example, if it is known that the conductivity within the sensing locations should be, for example, 5 mS/cm following completion of a chemical process, then this known conductivity value of 5 mS/cm may be set as a predetermined value. The conductivities in each sensing location can be compared to this predetermined value in order to determine whether the process is complete in each sensing location. That is, when the conductivity in a sensing location is equal to the predetermined value (or differs from the predetermined value by less than a threshold amount), then it can be determined that the chemical process in that sensing location is complete. This method can be used in combination with the above-described method of using rates of change, for example to help discern between situations where the chemical process has not yet started and situations where the chemical process is complete, which both correspond to a rate of change of substantially zero, but will typically be associated with different conductivities.

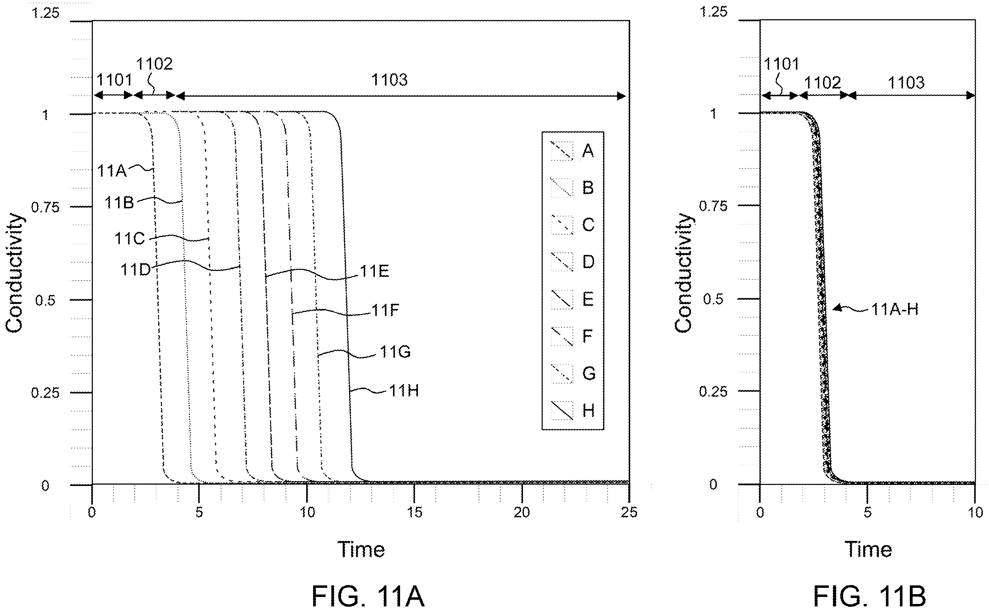

Figure 11A depicts the conductivity of each sensing location A-H in a falling edge transition of a chemical process. A falling edge transition is a transition between stages where the conductivity in the sensing locations falls from a first value to a second, smaller value. In particular, the falling edge transition depicted in Figure 11A corresponds to an elution stage wherein sodium chloride solution flows through the column. The electrical signals from the sensing locations are monitored over 25s, and a corresponding conductivity value determined for each sensing location for each time. The conductivities of all sensing locations are normalised between their maximum and minimum values. Eight conductivity curves 11A-H are depicted, each representing the conductivity in one of the sensing locations A-H. That is, a first conductivity curve 11A represents the conductivity in the first sensing location A and second, third, fourth, fifth, sixth, seventh and eight conductivity curves 11B-H represent the conductivity in the second, third, fourth, fifth, sixth, seventh and eight sensing locations B-H, respectively.

Each conductivity curve 11A-H in Figure 11A represents the conductivity of a sensing location as a chemical process occurs. In a first phase 1101, the conductivity for each sensing location A-H has a generally maximum value at t = 0. At this maximum value, the rate of change is substantially zero, indicating that the chemical process is at steady state. In a second phase 1102, occurs change occurs in each plane and the conductivity in each respective plane decreases (i.e. with a negative non-zero rate of change) until it reaches a minimum value. This second phase 1102 is the falling edge transition. Once the conductivity has reached the minimum value, the rate of change returns to substantially zero in a third phase 1103, indicating that the chemical process is complete. By considering the rate of change of conductivity during the second phase (i.e. the falling edge transition), characteristics of the chemical process, mobile phase and/or stationary phase can be determined. The second phase 1102 indicated in Figure 11A is illustrated with respect to the falling edge transition of the first curve 11A. However, it should be understood that each conductivity curve 11A-H has its own second phase which is delayed in time compared to the one illustrated in Figure 11A. Figure 11B depicts the curves 11A-H for each sensing location A-H overlaid (with the time data normalised such that each curve's falling edge transition centred at the same time of approximately t = 4s).

It is the 'shape' of the conductivity curve throughout the falling edge transition which is of interest, and especially the shape of the falling edge transition of one sensing location compared to that of another sensing location. The 'shape' can be seen graphically in Figures 11A and 11B, but can be considered non-graphically too. The shape of the falling edge transition is essentially a relationship between the data points of the conductivity data for each sensing location. The relationship can be represented using data relationship markers such as gradient, rate of change of gradient, skew, deviation etc.

The curves for each sensing location in Figure 11A have substantially the same relationship throughout the falling edge transition. The strong uniformity between curves is particularly evident in Figure 11B which shows the curves overlaid.

In fact, Figures 11A and 11B illustrate the conductivity of sensing locations of a column containing a stationary phase with optimal packing characteristics. In particular, the packing is generally uniform throughout the column. The strong uniformity between the conductivity curves of each sensing location reflect the uniformity of the packing within the column. That is, because the stationary phase is generally uniform in each of the sensing locations, the chemical process occurs generally uniformly in each sensing location, and hence results in uniformity between the conductivity curves in a falling edge transition.

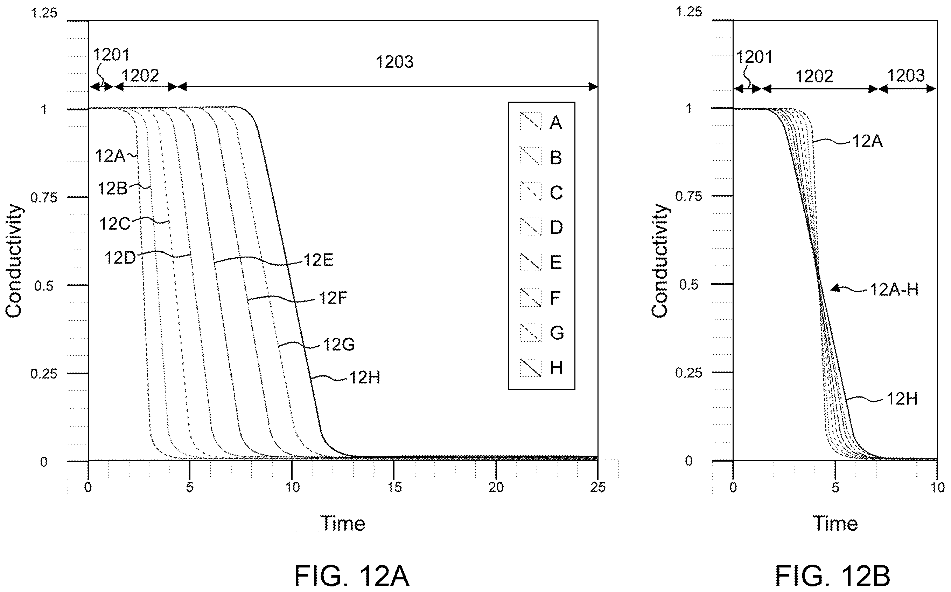

Figures 12A and 12B, on the other hand, depict the conductivity of each sensing location during a falling edge transition for a column containing a stationary phase with sub-optimal packing characteristics. This is a different but substantially identical column compared to the column represented in Figures 11A and 11B, which has been packed with the same stationary phase but which, due to machine or human error or due to degeneration over time, has different packing characteristics in each sequential sensing location. The conductivities for Figures 12A and 12B are generated in the same way to that described with reference to Figures 11A and 11B. Eight conductivity curves 12A-H are depicted in Figures 12A and 12B, each representing the conductivity in one of the sensing locations A-H. That is, a first conductivity curve 12A represents the conductivity in the first sensing location A and second, third, fourth, fifth, sixth, seventh and eight conductivity curves 12B-H represent the conductivity in the second, third, fourth, fifth, sixth, seventh and eight sensing locations B-H, respectively. A first phase 1201, second phase 1202 and third phase 1203 are indicated in Figures 12A and 12B, which are equivalent to the first, second and third phases 1101, 1102, 1103 described above with reference to Figures 11A and 11B.

While the curves 11A-H for each sensing location have substantially the same relationship in Figures 11A and 11B, the curves 12A-H for each sensing location in Figures 12A and 12B have substantially different relationships. In particular, the falling edge transition associated with the first sensing location A (i.e. located proximal to the entrance of the column) occurs over the shortest period of time and hence with the steepest gradient. The falling edge transition associated with the first sensing location A is also largely symmetrical before and after its midway point. As the sensing locations proceed through the column along the flow direction, their corresponding conductivity data has a shallower gradient. The difference in gradients between each curve 12A-H may be referred to as a non-uniformity between curves 12A-H.

Each of the curves 12A-H in Figures 12A and 12B are substantially symmetrical about a midway point. However, in other columns (e.g. with other packing characteristics), the curves may be asymmetrical. The amount of asymmetry in a first curve may differ from the amount of asymmetry in a second curve. Differences in asymmetry between each curve 12A-H may also be referred to as a non-uniformity between curves.

Non-uniformity between the conductivity curves 12A-H of each sensing location in Figures 12A and 12B is representative of non-uniformity of the material and chemical process within each sensing location. As such, identification of these non-uniformities can be used to indicate sub-optimal packing in the column. Furthermore, successively changing relationships (e.g. the successively reducing gradient with successive planes) indicates that the packing progressively changes (e.g. becomes less optimal) throughout the column.

In this way, by considering the conductivity in multiple sensing locations of a column, and in particular by considering the relationship between the data points of the conductivity, a condition associated with the packing of the stationary phase can be determined. The condition can be an indication of optimal packing or sub-optimal packing. In addition to an indication of the packing of the stationary phase, other characteristics of the stationary phase, for example a spatial distribution, can be determined as described above.

The above example described how to determine characteristics of the stationary phase by comparing the relationship of conductivity data of a first plane with the relationship of conductivity data of a second (and other additional) plane. However, the determination can alternatively be performed by comparing the conductivity data of a single plane with reference conductivity data. The reference conductivity data could have been gathered by generating conductivity data of a column known to have optimal packing (i.e. empirically derived) such as that illustrated in Figures 11A and 11B, or could be a theoretically derived data set based on known material properties. The reference conductivity data may be based upon standard data relationships, for example a Gaussian curve or derivative thereof, exponential function or other function.

Furthermore, and as described above, machine learning can be used to determine characteristics based on the relationship between data points of the conductivity data. That is, a machine learning model can be trained to associate relationships between data points of the conductivity data with characteristics, and subsequently determine a characteristic based on a new conductivity dataset.

The method described above with reference to Figures 11A, 11B, 12A and 12B describe determining characteristics associated with the chemical process and stationary phase using a falling edge transition. The use of the falling edge transition is illustrative in nature, and the method can similarly be used with other transitions, for example a rising edge transition such as that depicted in Figure 10.

The identification or characterisation of a transition may allow the interface between different phases of a multi-phase chemical process to be monitored. Moreover, the identification or characterisation of a transition may allow the interface between different liquid mobile phases to be characterised. That is, rather than only being able to identify the presence or absence of a liquid, it has been realised that the above described methods can provide sufficient sensitivity to identify a transition between different liquids, and to generate process insights on the basis of such an identification. It will be appreciated that a multi-phase chemical process may also be referred to as a chemical process.

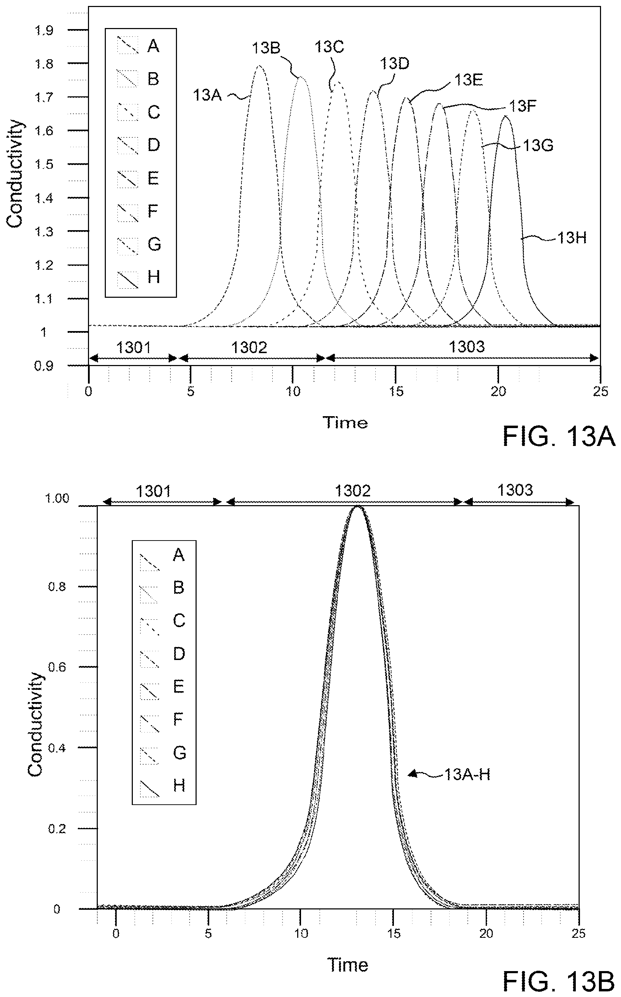

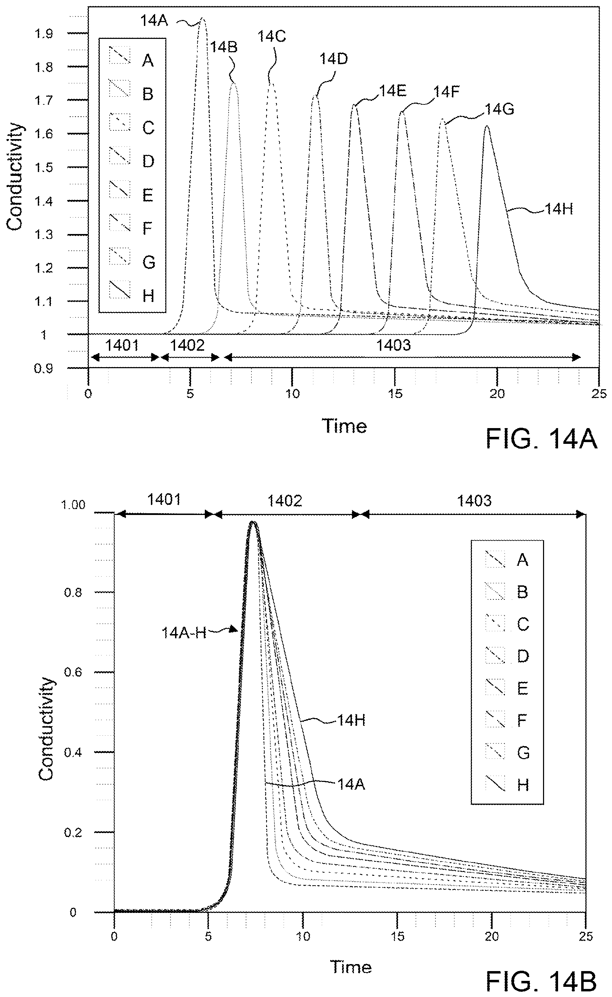

Below, and with reference to figures 13A, 13B, 14A and 14B, a similar method is described but performed as a stand-alone calibration process, rather than during the chemical process itself. The calibration process could be construed as a chemical process itself. However, the calibration process enables a column to be characterised in a controlled manner.

In the calibration process, a pulse of fluid is introduced into the column for the purposes of calibration. The pulse can be a predetermined amount of fluid which is introduced to the column and allowed to flow through the column. The pulse can hence be referred to as a mobile phase. The pulse can be introduced in isolation of other fluids, or can be introduced in addition to an existing fluid flowing through the column. For example, a particular component (e.g. a marker) may be introduced to the mobile phase for a predetermined amount of time, resulting in a predetermined amount of mobile phase having the particular component and hence particular material properties which are different to the mobile phase without the additional component. The predetermined amount of fluid in the pulse is relatively small, such that the pulse is only present in each sensing location for a relatively short period of time. The pulse is selected primarily for the purposes of determining a characteristic of the stationary phase. The pulse may be, for example, a saline solution referred to as saline.

Figures 13A and 13B depict curves 13A-H representing the conductivity at each of eight sensing locations A-H of a column similar to that described with reference to Figures 11A and 11B. The column contains a stationary phase with optimum packing characteristics. The conductivity is monitored in each sensing location A-H as the pulse travels through the sensing locations A-H. Eight conductivity curves 13A-H are depicted, each representing the conductivity in one of the sensing locations A-H. That is, a first conductivity curve 13A represents the conductivity in the first sensing location A and second, third, fourth, fifth, sixth, seventh and eight conductivity curves 13B-H represent the conductivity in the second, third, fourth, fifth, sixth, seventh and eight sensing locations B-H, respectively. A first phase 1301, second phase 1302 and third phase 1303 are indicated in Figures 13A and 13B, which are equivalent to the first, second and third phases 1101, 1102, 1103 described above with reference to Figures 11A and 11B, but in relation to a peak transition rather than a falling edge transition.

In a first phase 1301, the conductivity in each sensing location is at an initial minimum value. The conductivity is generally unchanging during the first phase 1301 because the pulse has not yet reached the sensing location and hence no chemical process has begun yet. During a second phase 1302, the pulse begins to enter the sensing location, flows through the sensing location and exits the sensing location. As the pulse begins to enter the plane, the conductivity increases. The conductivity increases until it reaches a maximum (at which point a maximum amount of saline is present in the plane) before decreasing again to the minimum value as the pulse exits the sensing location. The conductivity curves representing the conductivity data of each sensing location hence form a 'peak' shape during the second phase 1302. In a third phase 1303, the conductivity has returned to a final value which is substantially equivalent to the initial minimum value of the first phase. The conductivity is generally unchanging during the third phase 1303 because the pulse has exited the sensing location and hence no chemical process is occurring. The conductivity curves for each sensing location are shown sequentially in Figure 13A, and overlaid in Figure 13B (by normalising the curves in time such that they each reach their maximum value at the same time of approximately t = 12.5s, and also normalising in height between their minimum and maximum conductivity values).

As seen in Figure 13A, although there is some slight flattening (i.e. reduction in maximum conductivity) as the curves progress from the first curve 13A (i.e. associated with the first sensing location A closest to the entrance of the column) to the eighth curve 13H (i.e. associated with the eighth sensing location H closest to the exit of the column), the curves 13A-H are generally uniform in shape. That is, the curves 13A-H (and therefore the temporal change in conductivity in each of the sensing locations A-H) are substantially homogeneous. Furthermore, while there is a slight difference in shape (i.e. a difference in gradient and rate of change of gradient) before and after the peak, the shape of each curve is substantially symmetrical about its central maximum value. Such symmetrical curves and uniformity between the conductivity data of each sensing location indicates uniformity of the material and the chemical process within each sensing location. As such, this uniformity can be used to indicate uniform packing within the column.

Figures 14A and 14B depict the conductivity at each of eight sensing locations of a column similar to that described with reference to Figures 12A and 12B. That is, a different but substantially identical column compared to the column represented in Figures 13A and 13B, which has been packed with the same stationary phase but which, due to machine or human error or due to degeneration over time, has different packing characteristics in each sensing location. Eight conductivity curves 14A-H are depicted, each representing the conductivity in one of the sensing locations A-H. That is, a first conductivity curve 14A represents the conductivity in the first sensing location A and second, third, fourth, fifth, sixth, seventh and eight conductivity curves 14B-H represent the conductivity in the second, third, fourth, fifth, sixth, seventh and eight sensing locations B-H, respectively. A first phase 1401, second phase 1402 and third phase 1403 are indicated in Figures 14A and 14B, which are equivalent to the first, second and third phases 1101, 1102, 1103 described above with reference to Figures 11A and 11B, but in relation to a peak transition rather than a falling edge transition.

The curves 14A-H in Figures 14A and 14B show significantly less uniformity compared to the curves 13A-H in Figures 13A and 13B. For example, the curves 14A-H in Figures 14A and 14B exhibit successive broadening and asymmetry in successive sensing locations. The curve shape is substantially non-symmetrical for each curve 14A-H with a substantial tail following the peak maximum value. It is noted that the second phase 1402 depicted in Figs 14A and 14B indicates a time at which the curve(s) have substantially reduced to their initial values, although the conductivity still continues to decrease at a slow rate during the third phase 1403. The reduced symmetry and successively increasing non-uniformity of curves 14A-H is representative of non-uniformity of the material and chemical process within each sensing location. As such, the reduced symmetry and uniformity can be used to indicate sub-optimal packing in the column.

When using this calibration method with a pulse, the same methods of determining characteristics of the stationary phase can be used as those described with reference to Figures 11A, 11B, 12A and 12B. For example, the relationship between data points of the conductivity data for each sensing location can be used to extract information regarding the chemical process, mobile phase and stationary phase in one of the ways described above. Furthermore, quantitative information regarding the spatial distribution of the stationary phase can be determined using known methods using the conductivity data.

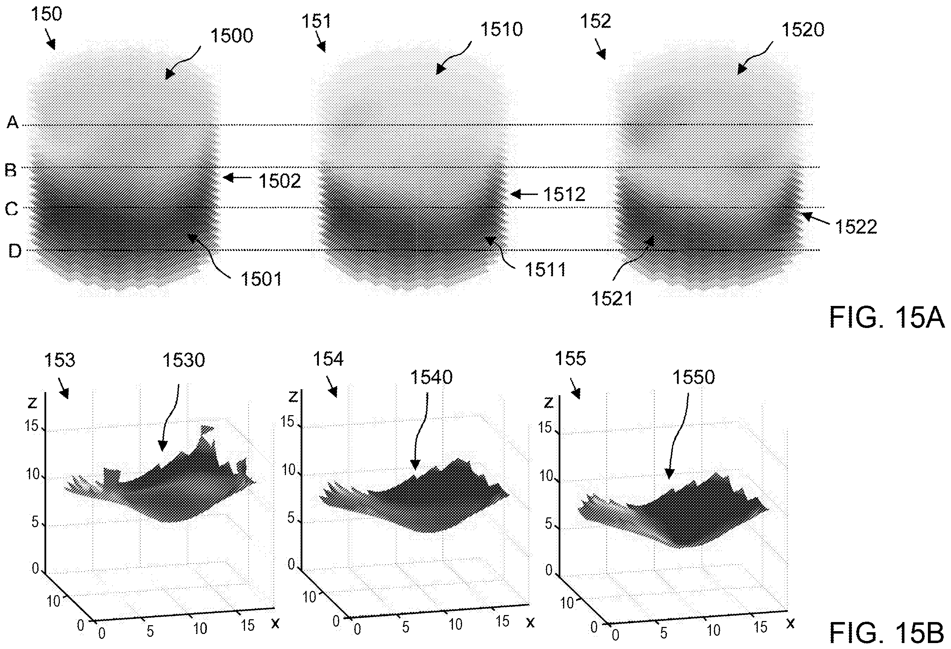

Figures 15A and 15B illustrate volumetric representations of the conductivity within a volume of a column. The column in this example has a measurement system with four sets of electrodes, each arranged at one of four sensing locations A-D of the column. The column has an arrangement comparable to that depicted in Figure 2, but with four sensing locations A-D rather than three. Alternatively, the volumetric representations of Figure 15A and 15B could have be generated using a measurement system with more than four sensing locations (i.e. more than four sets of electrodes), and the volumetric representation generated using four of the more than four sets of electrodes.

The volume is defined by the four sensing locations A-D. That is, the volume includes each of the sensing locations A-D and the volume between the sensing locations A-D. The location of the four sensing locations A-D is indicated in Figure 15A, with dotted lines provided as a visual guide. The four sensing locations are located at approximately 15, 10, 5 and 0 on the z-axis (which represents distance along the flow direction) in Figure 15B.

In order to generate the volumetric representation, electrical stimulation is applied to a first of the four sets of electrodes and an electrical signal received from all of the four sets of electrodes in response to the applied electrical stimulation. The electrical signals are then converted into impedance data, for example as described above by determining the impedance of sub-regions of the volume. In this example, conductivity values are generated for each sub-region. A volumetric representation can then be generated based on the conductivity of each sub-region.

A volumetric representation can also be generated (alternatively or in combination with the above method) by applying electrical stimulation to a pair of electrodes where a first of the pair is in a first of the four sets of electrodes and a second of the pair is in a second of the four sets of electrodes, and/or receiving an electrical stimulation from a pair of electrodes where a first of the pair is in a first of the four sets of electrodes and a second of the pair is in a second of the four sets of electrodes.

Figure 15A depicts the conductivity of each sub-region of the volume in image form, and in particular in a three-dimensional map. Each voxel of the cylinder depicted corresponds to a calculated conductivity of a sub-region of the volume. Three volumetric representations 150, 151, 152 are represented, wherein a first volumetric representation corresponds to a time of t = 100s, a second volumetric representation corresponds to a time of t = 110s, and the third volumetric representation corresponds to a time of t = 121s.

The first volumetric representation 150 features an upper portion 1500 and a lower portion 1501. The upper portion 1500 is paler in colour than the lower portion 1501, which represents that the upper portion 1500 of the first volumetric representation 150 has a higher conductivity than the lower portion 1501. The higher conductivity in the upper portion 1500 indicates that the upper portion, and in particular the upstream sensing location A of the column contains the mobile phase. The lower conductivity in the lower portion 1501 indicates that the mobile phase has not yet travelled downstream to the downstream sensing locations C and D. A transition region 1502 is seen between the upper and lower portions 1500, 1501. The transition region 1502 is located around the second sensing location B.

Similar to the first volumetric representation 150, the second volumetric representation 151 features an upper portion 1510 and a lower portion 1511 wherein the upper portion 1510 is paler in colour than the lower portion 1511 representing that the upper portion 1510 has a higher conductivity than the lower portion 1511. In fact, the upper portion 1510 of the second volumetric representation 151 has a higher conductivity than the upper portion 1500 of the first volumetric representation 150. This is due to the progression of the chemical process such that, in the 10s between the first volumetric representation 150 and second volumetric representation 151, more of the mobile phase has travelled into the upstream sensing locations (e.g. location A) and hence increased the conductivity. A transition region 1512 is also present between the upper and lower portions 1510, 1511, but the transition region 1512 is more downstream within the column compared to the transition region 1502 of the first volumetric representation 150, indicating that the mobile phase has travelled further downstream.

The third volumetric representation 152 features an upper portion 1520 and a lower portion 1521, wherein the upper portion 1520 has a higher conductivity than the lower portion 1511 indicating that the lower portion 1511 still contains little to no mobile phase. However, the transition region 1522 between the upper and lower portions 1520, 1521 is further downstream in the third volumetric representation 152 compared to the second volumetric representation 151, indicating that the mobile phase has again travelled further downstream. Furthermore, some non-uniformity can be seen in the upper portion 1502, which can indicate non-uniform flow profile and sub-optimal packing characteristics of the stationary phase, as described further above.

Figure 15B depicts contour plots 153, 154, 155 representative of the volumetric representations 150, 151, 152. A first, second and third contour plot 153, 154, 155 correspond to (i.e. correspond to the same time as) the first, second and third volumetric representations 150, 151, 152. Each contour plot 153, 153, 155 features a contour 1530, 1540, 1550 which corresponds to portions of the material in the volume which have equal conductivity. In particular, the conductivity represented by the contour is a conductivity set (e.g. by an operator or by predetermined rules in appropriate computer software) based on predefined transition process information. In particular, the transition process information is associated with the transition regions 1502, 1512, 1522 such that the contours 1530, 1540, 1550 are indicative of the position of the mobile phase as it flows through the column. It can be seen, as can be expected from the volumetric representations 150, 151, 152, that the contours 1530, 1540, 1550 sequentially move downstream as time progresses, indicating the rate of flow of the mobile phase. From the contour plots 153, 154, 155, the flow profile or flow distribution can be determined. A uniform flow profile would lead to a flat contour plot. However, given that the contours 1530, 1540, 1550 have curvature and features, this implies that the mobile phase is flowing through the column at different rates in different sub-regions. In particular, the curvature is indicative of a channelling effect. As described above, determining characteristics of the mobile phase and its flow profile through the column can be used to determine characteristics of the stationary phase and the chemical process itself.

In this example, an inter-location sensing scheme is used. Beneficially, this allows sub-regions between the sensing locations to be probed, as the received electrical signals have travelled between sensing locations. As such, monitoring of the chemical process is not limited to areas in which electrodes have been placed. Rather, features, changes and processes occurring between the sensing locations can be identified. For example, as can be seen in Figure 15A, the transition region 1502 is located between the second and third sensing locations B, C but can be captured and monitored using the intra-location sensing scheme.

An intra-location sensing scheme may also be used to determine a volumetric representation. However, the inter-location sensing scheme is more sensitive to changes and processes occurring between sensing locations.

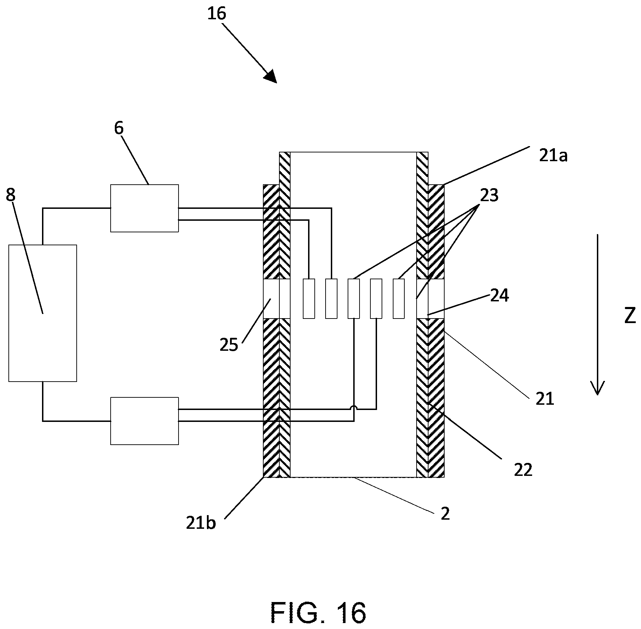

Referring to Figure 16, an alternate measurement system 16 is schematically shown in a half-sectioned view. The measurement system 16 is arranged to monitor a chemical process occurring in a removable column apparatus 22, referred to as removable column 22, detachably received in a housing 21. The chemical process takes place in material 2 contained in removable column 22.

The housing 21 defines an inner receiving surface, in the form of a 'well', in which the removable column is received. This is achieved by means of complementary geometry between the housing 21 and removable column 22.

Removable column 22 in combination with housing 21 forms an apparatus generally of the type labelled 3 in Figure 1. Figure 16 is described with reference to Figure 1 and like parts are labelled accordingly.

The chemical process is similar in nature to that described for the embodiment of Figure 1: a fluid mobile phase flowing through the column in direction 'Z' over a stationary phase. This results in physicochemical processes including isolation/separation or chemical reaction.

Measurement system 16 comprises an EIT sensor which has a plurality of column electrodes 23, circumferentially arranged about the removable column 22 each one being in electrical communication with a corresponding one of a plurality of column contacts 24 , partially defining the outer surface of the removable column 22, When the removable column 22 is received in the housing 21, a set of housing contacts 25, which partially define the inner receiving surface of the housing, and column contacts 24 engage each other such that each one of the housing contacts 25 is in electrical communication with a corresponding one of the column electrodes 23.

In an alternative embodiment, the column electrodes could also be arranged along an axial direction.

Electrical communication between the column contacts 24, column electrodes 23, and housing contacts 25 is facilitated by positioning corresponding housing contacts 25, column contacts 24 and column electrodes 23 along a common radial line from a longitudinal axis of the column. It should be noted that other geometric arrangements are possible, if also disadvantageous.

It will be appreciated that in this embodiment, the column electrodes 23 and column contacts 24 are part of the same monolithic component, but alternative constructions involving multiple subcomponents are also possible.

Similar to earlier-described embodiments, the measurement system 16 further comprises a controller 8 controlling an energisation source 6 and a detector 7, which may be a voltage monitor. The energisation source 6 and detector 7 are arranged to connect to the housing contacts 25 so that an electrical stimulation can be applied to one or more pairs of column electrodes 23 by the energisation source 6 and a signal can be received by the detector 7, following the permeation of the electrical signal through the material 2. Thus, the embodiment is capable of determining the material characteristics in the removable column, in the manner described above with reference to Figure 3.

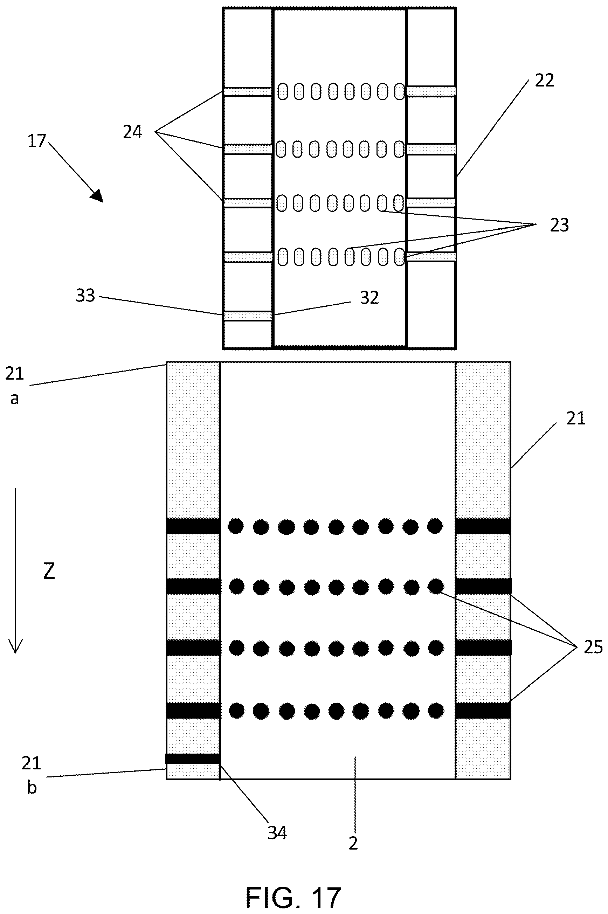

Figure 17 schematically depicts another alternative measurement system 17 capable of monitoring a chemical process occurring in a removable column 22. Removable column 22 in combination with a housing 21 forms an apparatus of the type described with reference to Figure 16, although the apparatus is distinguished by having multiple sensing locations like measurement system 10 (Figure 2), and like parts are labelled accordingly. In particular, this measurement system comprises a plurality of column electrodes 23, column contacts 24 and housing contacts 25 arranged in multiple (in this case, 4) planar sensing locations. Proper alignment between the housing and contacts may be ensured in the same manner as described in relation to the previous embodiment (Figure 16).

Figure 17 also depicts a ground electrode 32, an associated column contact 33 and an associated housing contact 34. The ground electrode 32, its associated column contact 33 and associated housing contact 34 may typically be of the same type as the other electrodes and contacts described above. The ground electrode 32, its associated column contact 33 and associated housing contact 34 may be operated to provide a voltage reference. It should be understood that measurement system 16 may also have equivalent features, although these are omitted in Figure 16.

Whilst the removable column 22 is shown removed from the housing 21, it should be understood that during measurements removable column 22 is received in the housing 21, allowing electrical communication in the manner described with reference to the system 16 shown in Figure 16. Thus, the embodiment is capable of determining the material characteristics in the manner elaborated on for the embodiment of Figure 16. Because of the multiple sensing locations, material characteristics can be further determined over the column volume, for example as described above in detail in relation to Figure 2.

Both the embodiments of Figures 16 and 17 allow easy removal of the removable column. This means previously onerous regimes of preparation can be simplified, as the columns can be easily pre-prepared - for example, packing of stationary phase is much easier with a removable column. In addition, a single instance of the present system can be used for a multiple measurement conditions, through use of multiple pre-prepared removable columns. For example, the removable columns may differ in internal diameter and/or measurement volume and/or stationary phase.

A further benefit of the current system, is that by eliminating the need to manually connect cables to electrodes, the need for technically complex and time-consuming installation is avoided, or at least reduced.

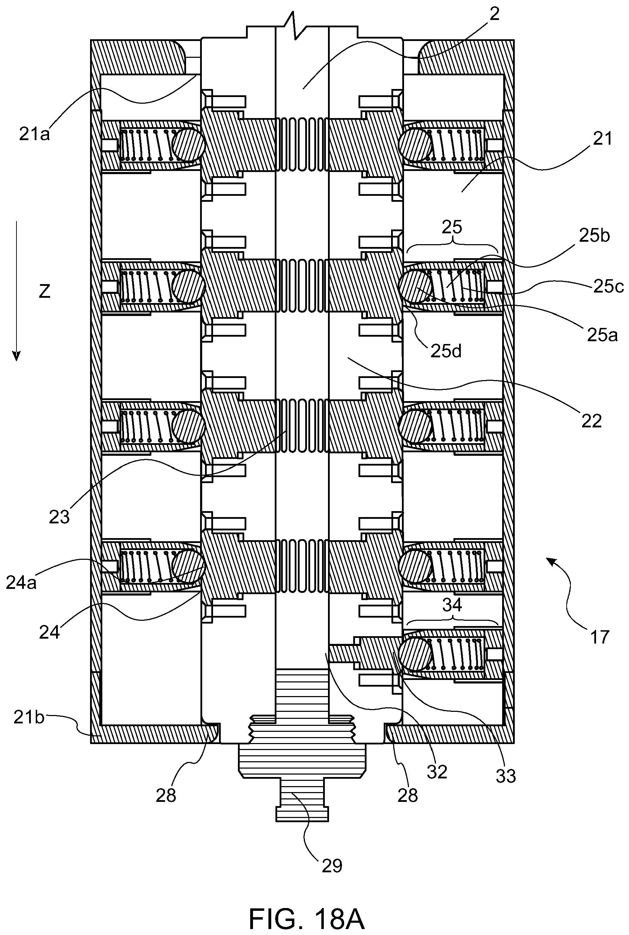

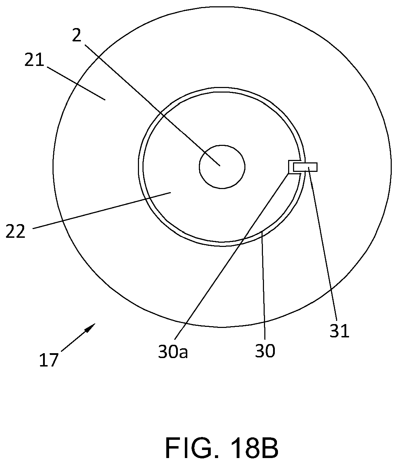

Referring now to Figure 18A and 18B, which are detailed mechanical diagrams of the measurement system 17 of Figure 17. Figure 18A shows measurement system 17 in an axial cross-section and Figure 18B shows the radial cross-section at level of the pin, with electrical components omitted. It should also be understood, that measurement system 16 of Figure 16 is-near identical regarding the mechanical details of its implementation.

The housing 21 comprises a proximal end 21a defining an entrance to the receiving well and a distal end 21b opposite. The entrance is the end of the housing 21 into which the removable column is inserted. The distal end 21b further comprises a retaining feature. In the illustrated embodiment the retaining feature comprises a circumferential lip 28 which abuts the removable column once fully inserted - thus preventing over-insertion of the column within the housing in the axial direction Z. The removable column 22 may be secured by the attachment of a collar, abutting the proximal end of the housing 21a.

In order to ensure proper angular alignment between corresponding housing contacts 25 and column contacts 24, removable column 22 and housing 21 are provided with cooperating mechanical features, shown in Figure 18B, to guide installation of removable column 22 in housing 21. For example, in the illustrated arrangement, the outer surface 30 of the removable column 22 is provided with an axial slot 30a extending along its length between the column contacts 24 and the housing 21 is provided with a protruding pin 31. The protruding pin 31 interferes with attempts at inserting the removable column 22 unless the angular alignment is correct. When the angular alignment is correct, the protruding pin 31 fits in the axial slot 30a, preventing relative rotation between the housing 21 and removable column 22 during installation.

In an embodiment, a ball detent mechanism is provided to engage corresponding housing contacts 25 and column contacts 24. Advantageously, the ball detent mechanism assures proper mechanical, and hence electrical contact, between the housing contacts 25 and the column contacts 24. The housing contacts 25 are typically secured in place by means of threads formed on the exterior engaging corresponding threads in bores provided within the housing body 21. The housing contacts 25 are plungers comprising spring-loaded metallic balls 25a captive in a cylindrical bore 25b terminating in a retaining lip 25d. The metallic balls 25a extend under spring pressure (provided by spring 25c) into conjugate depressions 24a (detents) formed on the column contacts 24. The metallic balls 25a act as an engagement surface of the housing contacts 25. Another advantage is that such a system enhances alignment by providing spring pressure resistance to relative displacement of the housing 21 and removable column 22 from proper angular alignment, or axial position.

The removable column is terminated at its exit end by an end piece adaptor 29. The end piece adaptor is connectable to a drain pipe, allowing the mobile phase to flow continuously through the column.

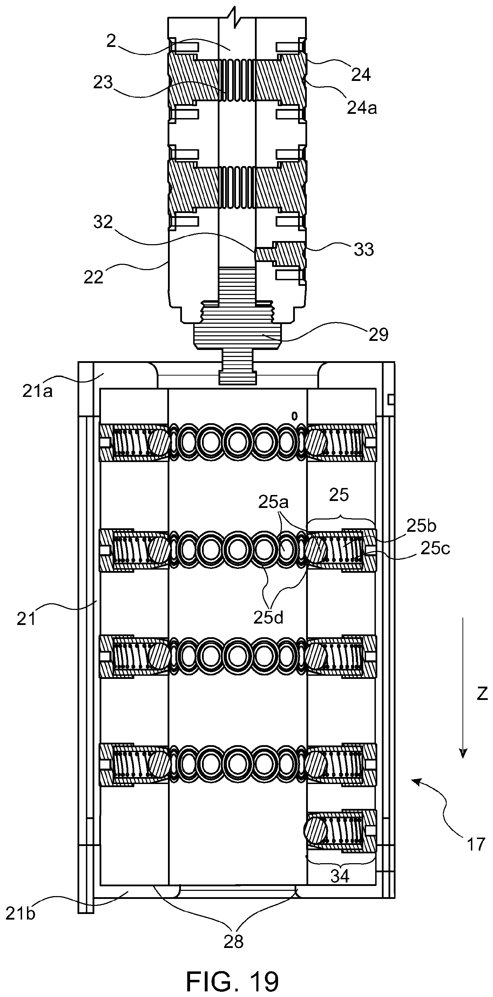

Figure 19 shows the same measurement system as that shown in Figures 18A and 18B, but with the removable column 22 removed, exposing the interior surface of the housing 21.

Given their similarities, the particulars of the measurement systems 16 and 17 in relation to their construction and use are described in combination below.

The column electrodes 23, column contacts 24 and the housing contacts 25 are typically formed from conductive materials, allowing electrical contact between the energisation source 6 and detector 7 and the material 2 within the removable column 22. The column electrodes 23 may be fabricated from a relatively chemically inert, erosion resistant material such as 316L stainless steel or any other grade of low-carbon austenitic stainless steel. Such materials allow processes to be conducted with a wide range of conditions (pH, temperature etc.) and reduce maintenance needs.

In general, for impedance tomography (EIT), the column electrodes 23 may be of uniform dimensions and laid out such that their separation is substantially equal to electrode dimensions measured in the same axis. For example, for a column of 32 cm circumference, having 16 column electrodes arranged at a sensing location, the electrodes may be around 1 cm wide and separated by around 1 cm circumferentially - that is, the electrodes and circumferential gaps may subtend approximately the same azimuthal angle with respect to the centre of their common cross section. In a further example, electrodes of around 2cm in vertical (z-direction) extent may be separated in a vertical (z-direction) by around 2cm.

The dimensional specifications described above serve only as a guideline. In practice, the dimensions can be varied to suit user requirements. For example, if higher-resolution measurements are required in any portion of the column, the vertical and/or circumferential separation, and/or the electrode dimensions, could be reduced to accommodate a greater electrode density.

Indeed, in the arrangement shown in Figures 18A, 18B and 19 the vertical separation between adjacent sensing locations is around 65% greater than the height of the electrodes, and the circumferential separation is significantly smaller than the width of the electrodes.

The column electrodes 23 themselves may be of varying geometry. In measurement system 17, the column electrodes 23 are of a vertically elongate configuration, the height being more than 7 times the width. The choice of electrode density, as dictated by electrode geometry and separation may have an effect on spatial resolution of the measurements. As such, different electrode geometry and separation may be selected for different monitoring applications.

The removable column 22 typically takes the form of a pipe-like structure of constant circular cross-section, in which chemical processes may take place. The inner diameter of the removable column 22 may, for example, be between 1cm and 1m, but may be larger or smaller. It should be noted that for a given removable column measurement system, the outer diameter of the column may be fixed in order to ensure proper engagement with the housing and the inner diameter may vary between columns. The inner diameter may be varied by the user to achieve different measurement conditions, for example mobile phase residence time.

The removable column 22 may be fabricated from a clear, tough and chemically inert polymer. Suitable materials must also be insulative, preferably having a resistivity greater than 10¹⁰ Ωm, such as Polymethyl methacrylate (PMMA) or Polycarbonate (PC).

Advantageously, this means that the removable column 22 is relatively tolerant of handling and it also facilitates visual inspection of the condition of removable column contents.

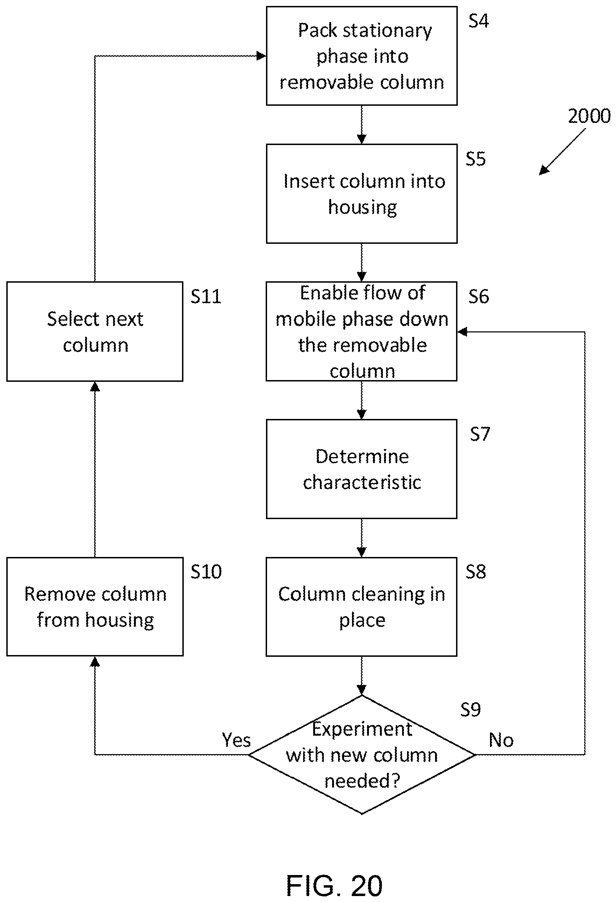

Figure 20 depicts a method 2000 of monitoring a physicochemical process in removable column apparatus such as those described with reference to Figures 16-19.

At a first step S4, a user packs stationary phase into removable column 22 while it is not inserted into the housing 21. The stationary phase may be a variety of media such as particulates or liquids, depending on the process under being monitored.

Following this, at step S5 the removable column 22 is inserted into the housing 21. In order to insert the removable column, the user may align axial slot 30a with the protruding pin 31 and push the removable column 22 into the housing 21 until it abuts the circumferential lip 28. Some pressure may be required to overcome the ball detent spring pressure of the housing contacts 25.

At a third step S6, flow of the mobile phase is enabled. For example, the user may open a valve or activate a pump to draw a fluid into the removable column 22, initiating a physicochemical process (e.g. purification or synthesis).

At step S7, a material characteristic is determined in the manner broadly described above, in relation to Figure 3. The determination may occur more or less simultaneously with step S6. Of course, a delay may also be provided before measurements are performed (e.g. to allow flow stabilisation). Moreover, several different measurements may be performed, both at individual sensing locations, and/or by performing measurements at different sensing locations.

Steps S6 and S7 may be repeated one or more times without removing the removable column 22. For example, when performing a complex synthesis process, several different sub-processes may be performed, and different measurements may be taken during each of the sub-processes.

On completion of the measurements at step S8, the removable column is cleaned in place. This may, for example, be effected by flushing or enabling a flow of a cleaning agent (e.g. sodium hydroxide solution), preferably with a pump, through the column. By flushing the stationary phase with a suitable cleaning agent, residue from the preceding measurement is removed and so the column is made ready for the next measurement.

At step S9, a determination is made as to whether further processes will require a further (or second) removable column. This might be necessary if a different removable column inner diameter and/or stationary phase will be required, or replacement of degraded or depleted stationary phase (e.g. if the stationary phase has undergone catalyst poisoning) is required.

If this is the case, the inserted removable column may be removed from the housing at step S10. This is followed by step S11 in which a second column is selected and processing may pass back to step S4 to prepare the second column for measurement. Alternatively, the second removable column could be pre-packed with stationary phase, such that S4 can be omitted. Pre packing of the second removable column might take place in advance of the initial measurements or at any other point prior to removal of the inserted column.

If a further removable column is not required, then processing can pass from step S9 directly back to step S6 and repeated processes can be performed.

It will be appreciated that these processes can be repeated many times.

In the above-described examples, the conductivity has been determined and used to determine characteristics of the chemical process, stationary phase and mobile phase. However, other associated data may be used alternatively or additionally to conductivity data. For example, complex impedance data or phase data may be used. Alternatively, the raw electrical signal may be used to determine characteristics of the chemical process, stationary phase and mobile phase. In this instance, any changes in the environment within a sensing location can be identified based on changes in the received electrical signals. Electrical capacitance tomography (ECT) also uses electrodes placed around the region of interest, but monitors electrical permittivity within the material of interest. ECT can thus be used to determine characteristics of the chemical process, stationary phase and mobile phase.

Methods have been described above which relate to the determination of characteristics of the chemical process, stationary phase and mobile phase. It should be apparent to the skilled reader that the characteristics are typically interlinked. That is, determining a characteristic of the mobile phase may be used to determine a characteristic of the chemical process and/or stationary phase, and correspondingly with the other characteristics.

It is will be appreciated by one of ordinary skill in the art that the invention has been described by way of example only, and that the invention itself is defined by the claims. Numerous modifications and variations may be made to the exemplary design described above without departing from the scope of the invention as defined in the claims. For example, the method steps may be performed in a different order and/or the method may comprise additional method steps.

The measurement system 1 of Figure 1 depicts one sensing location and the measurement system 10 of Figure 2 depicts three sensing locations. However, any number of sensing locations may be implemented, for example two sensing locations or more than three sensing locations (e.g. eight, ten, twenty sensing locations). Furthermore, while the sensing locations of Figure 2 are each centred about one of three planes A, B, C, the sensing locations may be differently arranged. For example, different sets of electrodes may be arranged generally in three different sensing locations, each set being arranged in, for example, a cluster or a line. Rather than being located on an inner wall of the column, the electrodes may be mounted on an arm which is inserted into or attached to an inner wall of the column apparatus. Where reference is made to intra-plane and inter-plane sensing schemes, it follows that in arrangements where the electrodes are arranged in a non-planar manner, such schemes may be alternatively be called intra-location and inter-location sensing schemes, indicating whether stimulation and monitoring are performed at the same sensing location or at different sensing locations, respectively.

The system described herein is described as having a current source 6 and voltage monitor 7. The current source 6 is an example of an energisation source. It will be appreciated by one of ordinary skill in the art that the measurement system may comprise any means for applying an electrical stimulation to a pair of (or multiple pairs of) electrodes (e.g. means for generating and injecting a suitable signal into the material 2). For example, rather than a current source the system may comprise a voltage source configured to apply an electrical stimulation to a pair of (or multiple pairs of) electrodes. The voltage monitor 7 is an example of a monitor operable to receive an electrical signal from a pair of (or multiple pairs of) electrodes. However, it will be appreciated that any suitable means for receiving an electrical signal may be used. The discussions above regarding the properties of the electrical stimulation (for example, alternating stimulation and associated frequencies) apply equally. These means for applying or receiving an electrical stimulation may utilise a controller such as the controller 8 described above.

Reference has been made herein to applying an electrical stimulation at one or more particular frequencies. However, rather than a specific frequency, a frequency band (i.e. range of frequencies) may be used for one or more of the frequencies.

In the above described examples, a sensor having 16 electrodes is described. However, sensors having different numbers of electrodes can also be used. A sensor may have any arbitrary numbers of electrodes. Furthermore, while a simple ring of electrodes is described above, electrodes may be arranged in any convenient pattern. The electrode pattern may be varied in dependence upon the geometry of the vessel within which it is to be used. Moreover, while columns having a circular cross-section are described above, vessels having non-circular, and irregular cross-sections are also envisioned. Where an energisation is applied between a first pair of electrodes, and an electrical parameter is monitored between a second pair of electrodes, a sensor having at least 4 electrodes should be provided. In order to improve the accuracy of the measurement process, a greater number of electrodes are generally provided. For example, a sensor having at least 8 electrodes would provide significantly higher resolution measurements than a sensor having 4 electrodes. It will be appreciated that additional electrodes can be added to increase resolution.

The measurement protocol described above requires the injection of current between pairs of adjacent electrodes, and the measurement of potential differences between pairs of the adjacent remaining electrodes. However, other measurement protocols may be used as required. For example, current may be injected, and/or potential differences measured between opposite electrodes.

In the processing described above, a regular distribution of sub-regions is provided within the region to be imaged. However, in some embodiments, an irregular distribution of sub-regions may be preferred. For example, for regions which are known to have a high solid concentration variability a higher sub-region resolution may be used than regions which are known to have a consistent solid concentration. In such an embodiment, any mean volumetric concentration can be adjusted so as to provide an accurate average (e.g. by calculating a weighted mean).

The electrodes and contacts themselves could also be alternatively constructed. In the all the examples above each electrical contact and electrode is represented as part of the same through-inserted monolithic component. Considering the removable column measurement systems such as 16 and 17, an alternative column electrode construction might be the provision of distinct column contacts, being separate subcomponents electrically connected to, the electrodes.

In the case of removable column apparatus as exemplified by measurement systems 16 and 17, it is possible to connect any number of electrode surfaces to a single housing contact (or vice versa), such that mechanically distinct electrodes (or housing contacts) function as a single unit electrically. For example, two electrode surfaces may be connected to a single column contact as opposed a single electrode surface in electrical communication with a single column contact. Alternatively, a similar effect could be achieved by configuring the housing contacts such that each contact is in communication with multiple column contacts.

Additionally, alternative means for ensuring axial alignment between the removable column and housing may be provided: for example, instead of a circumferential lip, a flange may be removably attached to a first end of the column defining an entrance to the measurement volume so that flange secures the column within the housing in the axial direction.

Alternative means are also available to ensure the angular alignment between the removable column and housing. For example, the slot could instead be cut into the housing and the pin attached to the removable column. Also, if there are multiple acceptable angular alignments, some rotationally symmetric arrangement of two or more slots and projecting elements, such as protruding pins or lugs, would achieve the desired effect. The position of the pin could also be varied. For example, the protruding pin could be provided towards the base of the housing.

Another alternative method to ensure angular alignment between the removable column and housing would be to provide the circumferential lip with an array of pits corresponding to an array of cones on the abutting surface of the removable column, or vice versa. These pits and cones would be disposed such that full insertion of the column would be prevented, if the removable column and housing were misaligned.

Although both measurement systems 16 and 17 specify the use of a ball detent mechanism to guarantee proper engagement between housing and column contacts, other mechanisms could also be implemented. One alternative would the use of a contracting housing structure, for example manually-retractable contacts or a system similar to the manner in which the chuck of a drill tightly engages its work piece. Another alternative would be the use of simple spring contacts.

Furthermore, although measurement systems 16 and 17 receive and electrically contact their constituent removable column 22 by providing the housing with a well of complementary geometry, other arrangements are possible. For example, a wire frame supporting housing contacts in a corresponding layout to the column contacts could 'cradle' the removable column whilst facilitating electrical communication.

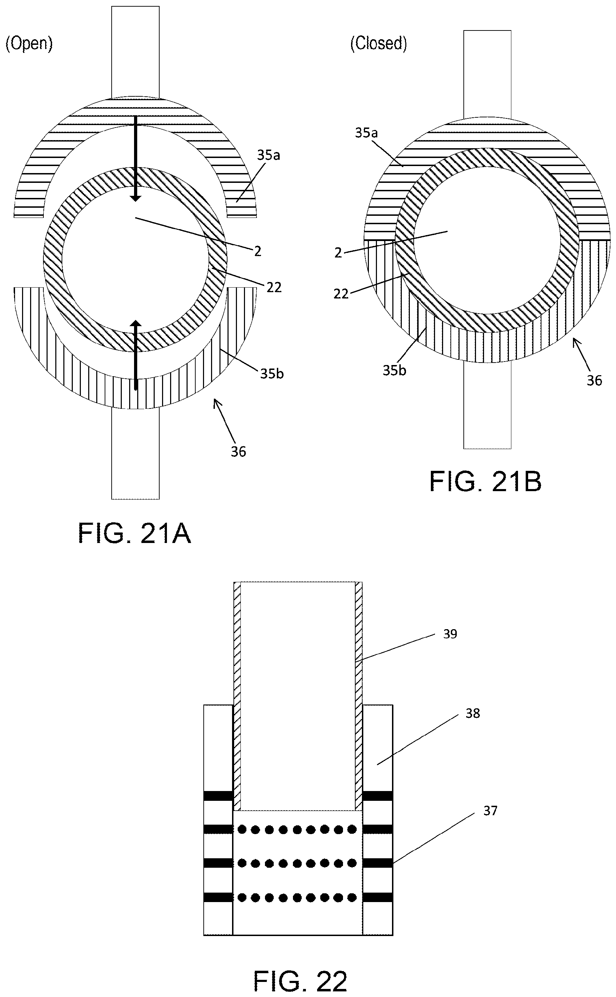

Figures 21A and 21B are simplified schematics showing another alternative housing structure 36 suitable for use in a measurement system generally as described above. The housing structure 36 comprises two movable portions 35a and 35b. The two parts are arranged to removably engage and receive the removable column 22. For example, it may be possible to mount the two housing parts to a supporting structure, for example a leadscrew, such that the movable portions 35a and 35b can be abutted together linearly. The housing structure is shown both in its open and closed configurations in Figures 21A and 21B respectively. In the open configuration the removable column 22 can be easily inserted and removed. In the closed configuration, the removable column 22 is secured and aligned by the clamping housing structure 36 in conjunction with an alignment system (not shown). Alternatively, this might be achieved by hinging the two housing parts so that the two housing parts can close around the removable column. As described in more detail below, the system may also be suitable for ECT.

In all of the above-described embodiments, the determination of the material characteristics of a material is carried out using EIT. It is appreciated, that other forms of tomography could be carried out by the above-described measurement systems, with some modification. For example, as set out previously, ECT takes measurements based on the permittivity of a material - consequently, any electrodes must be electrically insulated from the measurement volume. To achieve this, an insulative coating or layer could be inserted between the electrodes and measurement volume. To enhance the signal to noise, ratio a small separation between the electrode and material is desirable, which is achievable, for example by use of thin coatings. Also, the effectiveness of ECT tomography may be enhanced by the use of larger, and more narrowly separated electrodes in comparison to EIT systems.

Another alternative arrangement for ECT measurement systems is depicted schematically in Figure 22. The apparatus comprises electrodes 37 in a housing 38 switchably connectable to a detector and energisation source (not shown). It should be noted that the housing 38 may be, in most respects, structurally similar to the housing 21 of measurement systems 16 and 17. Housing 38 may be provided with similar alignment features, for example the above-described circumferential lip or angular alignment pin and slot. However, whereas housing 21 is provided with housing contacts, housing 38 is provided with electrodes. In addition, the housing is configured to receive a thin, insulating liner 39, in which the measured process would take place. As a result, the electrodes are electrically isolated from the measurement volume, as required in ECT.

In this way, when performing ECT measurements, it is possible for a simple removable column component (i.e. the removable insulating liner 39) to be provided for use with a measurement system, with the removable insulating liner having no electrical contacts. Such an arrangement may further simplify the installation process, since no angular alignment may be required, in view of the absence of any electrical contacts. Of course, a particular angular alignment may still be preferred, and provided for by a pin and slot arrangement, as described above.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be considered as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A method (300) of monitoring a chemical process at a plurality of sensing locations in a column apparatus (3) using a measurement system (10);
the column apparatus (3) containing a solid stationary phase and configured to receive a liquid mobile phase and enable flow of the mobile phase through the stationary phase in a flow direction; and
the measurement system comprising a first set of electrodes (5) arranged circumferentially about a first sensing location of the column apparatus and a second set of electrodes (5) arranged circumferentially about a second sensing location, the second sensing location spaced from the first sensing location in the flow direction;
wherein the method comprises:
causing the liquid mobile phase to flow through the stationary phase in the flow direction;
applying (S1) an electrical stimulation to the first set of electrodes (5);
receiving (S2) an electrical signal from the first and second sets of electrodes (5); and
determining (S3) one or more characteristics of a chemical interaction between the solid stationary phase and the liquid mobile phase by processing the electrical signal received from the first and second sets of electrodes (5).

2. The method of claim 1, wherein the method further comprises:
causing a first liquid mobile phase to flow through the stationary phase in a flow direction;
causing a second liquid mobile phase to flow through the stationary phase in the flow direction;
applying an electrical stimulation to the first and/or second set of electrodes (5);
receiving an electrical signal from the first and/or second set of electrodes (5); and
determining one or more characteristics of a transition between the first liquid mobile phase and the second liquid mobile phase in the first and/or second sensing locations by processing the electrical signal received from the first and/or second set of electrodes (5).

3. The method of claim 1 or 2, wherein the chemical process comprises a separation process, reaction process or isolation process, and optionally wherein separation and/or isolation is achieved by selection of a stationary phase having differential affinities with components of the mobile phase.

4. The method of any preceding claim, further comprising determining a spatial distribution of the mobile phase and/or stationary phase within the first and second sensing locations, and optionally further comprising:
generating a quality indication associated with the stationary phase within the first and second sensing locations based on the determined spatial distribution.

5. The method of any preceding claim, wherein determining the one or more characteristics further comprises:
generating first impedance data associated with the first sensing location based on the electrical signal received from the first set of electrodes (5), generating second impedance data associated with the second sensing location based on the electrical signal received from the second set of electrodes (5), and determining the one or more characteristics based on a comparison between the first impedance data and second impedance data; and/or
comparing the electrical signal received from the first set of electrodes (5) and the electrical signal received from the second set of electrodes (5), and determining the one or more characteristics based on the comparison; and/or
generating impedance data associated with sub-regions of a volume defined by the first sensing region and second sensing region based on the electrical signal received from the first set of electrodes (5) and the electrical signal received from the second set of electrodes (5), constructing a three-dimensional volumetric representation the volume based on the impedance data, and determining the one or more characteristics based on the three-dimensional volumetric representation.

6. The method of any preceding claim, further comprising applying an electrical stimulation to the second set of electrodes (5).

7. The method of any preceding claim, further comprising:
applying the electrical stimulation to the first set of electrodes (5) and/or the second set of electrodes (5) in a first period of time;
receiving the electrical signal from the first and/or second sets of electrodes (5) in the first period of time;
applying a second electrical stimulation to the first set of electrodes (5) and/or the second set of electrodes (5) in a second period of time following the first period of time;
receiving an electrical signal from the first and/or second sets of electrodes (5) in the second period of time;
determining the one or more characteristics based on the electrical signals received in the first and second periods of time.

8. The method of claim 7, further comprising generating a measure of completion of the chemical process in the first and/or second sensing locations, and optionally wherein determining the measure of completion comprises:
determining a rate of change based on the electrical signal from the first or second set of electrodes (5) in the first period of time and the electrical signal from the same first or second set of electrodes (5) in the second period of time; and
if the rate of change is less than a threshold, determining that the process has not started or is complete; and/or
if the rate of change is greater than a threshold, determining that the process is incomplete; and/or
determining a process rate based on the rate of change.

9. The method of claim 7 or 8, further comprising:
applying electrical stimulation to the first and/or second sets of electrodes (5) at a plurality of time periods, wherein the plurality of time periods comprises the first and second time periods and a time period in which the chemical process is known to occur;
receiving electrical signals from the first set of electrodes (5) at the plurality of time periods;
generating a first relationship between the electrical signals from the first set of electrodes (5);
receiving electrical signals from the second set of electrodes (5) at the plurality of time periods;
generating a second relationship between the electrical signals from the second set of electrodes (5); and
determining the one or more characteristics based on the first and second relationships; and optionally
wherein the method further comprises providing a pulse of a mobile phase to the column, wherein the plurality of time periods comprise a time period in which the pulse passes through the first and second sensing locations.

10. The method of any preceding claim, further comprising determining a spatial distribution of the mobile phase and/or stationary phase within the first and/or second sensing locations, wherein determining the spatial distribution further comprises:
generating impedance data associated with sub-regions of the first sensing location or second sensing location based on the electrical signal received from the first or second set of electrodes (5), respectively;
segmenting the impedance data into a first portion associated with one or more sub-regions of the first or second sensing location and a second portion associated with one or more different sub-regions of the same first or second sensing locations;
comparing the impedance data of the first portion with the impedance data of the second portion;
determining the spatial distribution based upon the comparison.

11. The method of any preceding claim, further comprising:
applying the electrical stimulation to the first set of electrodes (5) in a first period of time;
receiving the electrical signal from the first and/or second set of electrodes (5) in the first period of time;
applying a second electrical stimulation to the first set of electrodes (5) in a second period of time following the first period of time;
receiving an electrical signal from the first and/or second set of electrodes (5) in the second period of time;
determining the one or more characteristics based on the electrical signals received in the first and second periods of time.

12. The method of any preceding claim, further comprising controlling the chemical process based on the one or more characteristics.

13. The method of claim 12, wherein the one or more characteristics comprises a measure of completion of the chemical process, wherein controlling the chemical process comprises adjusting an end time of the chemical process based on the measure of completion; and/or wherein the method further comprises:
determining a spatial distribution of the mobile phase and/or stationary phase, and wherein controlling the chemical process comprises providing an indication that the spatial distribution is sub-optimal and/or adjusting a start time and/or end time of the chemical process based on the spatial distribution.

14. The method of claim 12 or 13, wherein the chemical process is controlled in real time.

15. The method of any preceding claim, wherein the applied electrical stimulation comprises a first electrical stimulation with a first frequency and a second electrical stimulation with a second frequency, wherein:
the first frequency is selected based on a characteristic of the mobile phase; and/or
the second frequency is selected based on a characteristic of the stationary phase; and/or
the first or second frequency is selected based on a characteristic of a target reagent of the chemical process.

16. The method of any preceding claim, further comprising receiving an electrical signal from one or more additional sets of electrodes (5) each arranged circumferentially about a corresponding additional sensing location spaced from the first sensing location in the flow direction, and wherein determining the one or more characteristics of the chemical interaction further comprises processing the electrical signal received from the one or more further sets of electrodes (5).

17. An apparatus comprising:
a column apparatus (3) configured to contain a stationary phase, receive a mobile phase, and enable flow of the mobile phase through the stationary phase in a flow direction (Z);
a measurement system comprising a first set of electrodes (5) arranged circumferentially about a first sensing location (A) of the column apparatus, a second set of electrodes (5) arranged circumferentially about a second sensing location (B), the second sensing location spaced from the first sensing location in the flow direction, means for applying electrical stimulation to electrodes of the first and/or second set of electrodes (5) and means for receiving an electrical signal from electrodes of the first and second set of electrodes (5); and
a processor configured to perform the method of any of any preceding claim when the column contains the stationary phase.

18. The apparatus of claim 17, wherein the first set of electrodes (5) and/or second set of electrodes (5) are arranged:
on an inner wall of the column apparatus (3); and/or
on a probe inserted into the column apparatus (3).

19. The apparatus of claim 17 or 18, wherein the sets of electrodes (5) each comprise at least four electrodes.

## Patentansprüche

1. Verfahren (300) zum Überwachen eines chemischen Prozesses an einer Vielzahl von Erfassungsstellen in einer Säuleneinrichtung (3) unter Verwendung eines Messsystems (10);
die Säuleneinrichtung (3), die eine feste stationäre Phase enthält und dafür konfiguriert ist, eine flüssige mobile Phase aufzunehmen und ein Strömen der mobilen Phase durch die stationäre Phase in einer Strömungsrichtung zu ermöglichen; und
das Messsystem, umfassend einen ersten Satz von Elektroden (5), die in Umfangsrichtung um eine erste Erfassungsstelle der Säuleneinrichtung angeordnet sind, und einen zweiten Satz von Elektroden (5), die in Umfangsrichtung um eine zweite Erfassungsstelle angeordnet sind, wobei die zweite Erfassungsstelle von der ersten Erfassungsstelle in der Strömungsrichtung beabstandet ist;
wobei das Verfahren Folgendes umfasst:
Veranlassen, dass die mobile Phase in der Strömungsrichtung durch die stationäre Phase strömt;
Anlegen (S1) einer elektrischen Stimulation an den ersten Satz von Elektroden (5);
Empfangen (S2) eines elektrischen Signals von dem ersten und dem zweiten Satz von Elektroden (5) und
Bestimmen (S3) einer oder mehrerer Eigenschaften einer chemischen Wechselwirkung zwischen der festen stationären Phase und der flüssigen mobilen Phase durch Verarbeiten des von dem ersten und dem zweiten Satz von Elektroden (5) empfangenen elektrischen Signals.

2. Verfahren nach Anspruch 1, wobei das Verfahren weiter Folgendes umfasst:
Veranlassen, dass eine erste mobile Phase in einer Strömungsrichtung durch die stationäre Phase strömt;
Veranlassen, dass eine zweite mobile Phase in der Strömungsrichtung durch die stationäre Phase strömt;
Anlegen einer elektrischen Stimulation an den ersten und/oder den zweiten Satz von Elektroden (5);
Empfangen eines elektrischen Signals von dem ersten und/oder dem zweiten Satz von Elektroden (5) und
Bestimmen einer oder mehrerer Eigenschaften eines Übergangs zwischen der ersten flüssigen mobilen Phase und der zweiten flüssigen mobilen Phase in der ersten und/oder der zweiten Erfassungsstelle durch Verarbeiten des von dem ersten und/oder dem zweiten Satz von Elektroden (5) empfangenen elektrischen Signals.

3. Verfahren nach Anspruch 1 oder 2, wobei der chemische Prozess einen Trennprozess, einen Reaktionsprozess oder einen Isolierungsprozess umfasst und wahlweise, wobei Trennung und/oder Isolierung durch Auswahl einer stationären Phase erreicht werden, die unterschiedliche Affinitäten zu Komponenten der mobilen Phase aufweist.

4. Verfahren nach einem vorstehenden Anspruch, weiter umfassend das Bestimmen einer räumlichen Verteilung der mobilen Phase und/oder der stationären Phase innerhalb der ersten und der zweiten Erfassungsstelle und wahlweise weiter umfassend:
Erzeugen einer Qualitätsanzeige, die mit der stationären Phase innerhalb der ersten und der zweiten Erfassungsstelle verknüpft ist, basierend auf der bestimmten räumlichen Verteilung.

5. Verfahren nach einem vorstehenden Anspruch, wobei das Bestimmen des oder der Merkmale weiter Folgendes umfasst:
Erzeugen von ersten Impedanzdaten, die mit der ersten Erfassungsstelle verknüpft sind, basierend auf dem elektrischen Signal, das von dem ersten Satz von Elektroden (5) empfangen wird; Erzeugen von zweiten Impedanzdaten, die mit der zweiten Erfassungsstelle verknüpft sind, basierend auf dem elektrischen Signal, das von dem zweiten Satz von Elektroden (5) empfangen wird; und Bestimmen des einen oder der mehreren Merkmale basierend auf einem Vergleich zwischen den ersten Impedanzdaten und den zweiten Impedanzdaten und/oder
Vergleichen des von dem ersten Satz von Elektroden (5) empfangenen elektrischen Signals und des von dem zweiten Satz von Elektroden (5) empfangenen elektrischen Signals und Bestimmen der einen oder der mehreren Eigenschaften basierend auf dem Vergleich und/oder
Erzeugen von Impedanzdaten, die mit Teilbereichen eines Volumens verknüpft sind, das durch den ersten Erfassungsbereich und den zweiten Erfassungsbereich definiert ist, basierend auf dem von dem ersten Satz von Elektroden (5) empfangenen elektrischen Signal, und dem von dem zweiten Satz von Elektroden (5) empfangenen elektrischen Signal; Konstruieren einer dreidimensionalen volumetrischen Darstellung des Volumens basierend auf den Impedanzdaten und Bestimmen der einen oder der mehreren Eigenschaften basierend auf der dreidimensionalen volumetrischen Darstellung.

6. Verfahren nach einem vorstehenden Anspruch, weiter umfassend das Anlegen einer elektrischen Stimulation an den zweiten Satz von Elektroden (5).

7. Verfahren nach einem vorstehenden Anspruch, weiter umfassend:
Anlegen der elektrischen Stimulation an den ersten Satz von Elektroden (5) und/oder den zweiten Satz von Elektroden (5) in einem ersten Zeitraum;
Empfangen des elektrischen Signals von dem ersten und/oder dem zweiten Satz von Elektroden (5) im ersten Zeitraum;
Anlegen einer zweiten elektrischen Stimulation an den ersten Satz von Elektroden (5) und/oder den zweiten Satz von Elektroden (5) in einem zweiten Zeitraum, der dem ersten Zeitraum folgt;
Empfangen eines elektrischen Signals von dem ersten und/oder dem zweiten Satz von Elektroden (5) im zweiten Zeitraum;
Bestimmen der einen oder der mehreren Eigenschaften basierend auf den in dem ersten und dem zweiten Zeitraum empfangenen elektrischen Signalen.

8. Verfahren nach Anspruch 7, weiter umfassend das Erzeugen eines Vollendungsmaßes des chemischen Prozesses in der ersten und/oder der zweiten Erfassungsstelle und wahlweise, wobei das Bestimmen des Vollendungsmaßes Folgendes umfasst:
Bestimmen einer Änderungsrate basierend auf dem elektrischen Signal von dem ersten oder dem zweiten Satz von Elektroden (5) im ersten Zeitraum und dem elektrischen Signal von demselben ersten oder zweiten Satz von Elektroden (5) im zweiten Zeitraum und,
falls die Änderungsrate geringer ist als ein Schwellenwert, Feststellen, dass der Prozess nicht begonnen hat oder vollendet ist; und/oder
falls die Änderungsrate größer ist als ein Schwellenwert, Feststellen, dass der Prozess unvollständig ist; und/oder
Bestimmen einer Prozessrate basierend auf der Änderungsrate.

9. Verfahren nach Anspruch 7 oder 8, weiter umfassend:
Anlegen elektrischer Stimulation an den ersten und/oder den zweiten Satz von Elektroden (5) zu einer Vielzahl von Zeiträumen, wobei die Vielzahl von Zeiträumen den ersten und den zweiten Zeitraum sowie einen Zeitraum, in dem der chemische Prozess bekanntermaßen stattfindet, umfasst;
Empfangen elektrischer Signale von dem ersten Satz von Elektroden (5) zu der Vielzahl von Zeiträumen;
Herstellen einer ersten Beziehung zwischen den elektrischen Signalen von dem ersten Satz von Elektroden (5);
Empfangen elektrischer Signale von dem zweiten Satz von Elektroden (5) zu der Vielzahl von Zeiträumen;
Herstellen einer zweiten Beziehung zwischen den elektrischen Signalen von dem zweiten Satz von Elektroden (5); und
Bestimmen der einen oder mehreren Eigenschaften basierend auf der ersten und der zweiten Beziehung und wahlweise,
wobei das Verfahren weiter das Bereitstellen eines Impulses einer mobilen Phase für die Säule umfasst, wobei die Vielzahl von Zeiträumen einen Zeitraum, in dem der Impuls die erste und die zweite Erfassungsstelle durchläuft, umfasst.

10. Verfahren nach einem vorstehenden Anspruch, weiter umfassend das Bestimmen einer räumlichen Verteilung der mobilen Phase und/oder der stationären Phase innerhalb der ersten und/oder der zweiten Erfassungsstelle, wobei das Bestimmen der räumlichen Verteilung weiter Folgendes umfasst:
Erzeugen von Impedanzdaten, die mit Teilbereichen der ersten Erfassungsstelle oder der zweiten Erfassungsstelle verknüpft sind, jeweils basierend auf dem von dem ersten oder dem zweiten Satz von Elektroden empfangenen elektrischen Signal (5);
Segmentieren der Impedanzdaten in einen ersten Abschnitt, der mit einem oder mehreren Teilbereichen der ersten oder der zweiten Erfassungsstelle verknüpft ist, und einen zweiten Abschnitt, der mit einem oder mehreren anderen Teilbereichen derselben ersten oder zweiten Erfassungsstelle verknüpft ist;
Vergleichen der Impedanzdaten des ersten Abschnitts mit den Impedanzdaten des zweiten Abschnitts;
Bestimmen der räumlichen Verteilung basierend auf dem Vergleich.

11. Verfahren nach einem vorstehenden Anspruch, weiter umfassend:
Anlegen der elektrischen Stimulation an den ersten Satz von Elektroden (5) in einem ersten Zeitraum;
Empfangen des elektrischen Signals von dem ersten und/oder dem zweiten Satz von Elektroden (5) im ersten Zeitraum;
Anlegen einer zweiten elektrischen Stimulation an den ersten Satz von Elektroden (5) in einem zweiten Zeitraum, der dem ersten Zeitraum folgt;
Empfangen eines elektrischen Signals von dem ersten und/oder dem zweiten Satz von Elektroden (5) im zweiten Zeitraum;
Bestimmen der einen oder der mehreren Eigenschaften basierend auf den in dem ersten und dem zweiten Zeitraum empfangenen elektrischen Signalen.

12. Verfahren nach einem vorstehenden Anspruch, weiter umfassend das Steuern des chemischen Prozesses basierend auf den einen oder den mehreren Eigenschaften.

13. Verfahren nach Anspruch 12, wobei die eine oder die mehreren Eigenschaften ein Vollendungsmaß des chemischen Prozesses umfassen, wobei das Steuern des chemischen Prozesses das Anpassen einer Endzeit des chemischen Prozesses basierend auf dem Vollendungsmaß umfasst und/oder wobei das Verfahren weiter Folgendes umfasst:
Bestimmen einer räumlichen Verteilung der mobilen Phase und/oder der stationären Phase, und wobei das Steuern des chemischen Prozesses das Bereitstellen eines Hinweises darauf, dass die räumliche Verteilung suboptimal ist, und/oder das Anpassen einer Startzeit und/oder Endzeit des chemischen Prozesses basierend auf der räumlichen Verteilung umfasst.

14. Verfahren nach Anspruch 12 oder 13, wobei der chemische Prozess in Echtzeit gesteuert wird.

15. Verfahren nach einem vorstehenden Anspruch, wobei die angelegte elektrische Stimulation eine erste elektrische Stimulation mit einer ersten Frequenz und eine zweite elektrische Stimulation mit einer zweiten Frequenz umfasst, wobei:
die erste Frequenz basierend auf einer Eigenschaft der mobilen Phase ausgewählt wird und/oder
die zweite Frequenz basierend auf einer Eigenschaft der stationären Phase ausgewählt wird und/oder
die erste oder die zweite Frequenz basierend auf einer Eigenschaft eines Zielreagens des chemischen Prozesses ausgewählt wird.

16. Verfahren nach einem vorstehenden Anspruch, weiter umfassend das Empfangen eines elektrischen Signals von einem oder mehreren zusätzlichen Sätzen von Elektroden (5), die jeweils in Umfangsrichtung um eine entsprechende zusätzliche Erfassungsstelle herum angeordnet sind, die von der ersten Erfassungsstelle in der Strömungsrichtung beabstandet ist, und wobei das Bestimmen der einen oder der mehreren Eigenschaften der chemischen Wechselwirkung weiter das Verarbeiten des von dem einen oder den mehreren weiteren Sätzen von Elektroden (5) empfangenen elektrischen Signals umfasst.

17. Einrichtung, umfassend:
eine Säuleneinrichtung (3), die dafür konfiguriert ist, eine stationäre Phase zu enthalten, eine mobile Phase aufzunehmen und ein Strömen der mobilen Phase durch die stationäre Phase in einer Strömungsrichtung (Z) zu ermöglichen;
ein Messsystem, umfassend einen ersten Satz von Elektroden (5), die in Umfangsrichtung um eine erste Erfassungsstelle (A) der Säuleneinrichtung angeordnet sind, einen zweiten Satz von Elektroden (5), die in Umfangsrichtung um eine zweite Erfassungsstelle (B) angeordnet sind, wobei die zweite Erfassungsstelle vom ersten Erfassungsstelle in der Strömungsrichtung beabstandet ist, Mittel zum Anlegen einer elektrischen Stimulation an Elektroden des ersten und/oder des zweiten Satzes von Elektroden (5) und Mittel zum Empfangen eines elektrischen Signals von Elektroden des ersten und des zweiten Satzes von Elektroden (5); und
einen Prozessor, der dafür konfiguriert ist, das Verfahren nach einem vorstehenden Anspruch durchzuführen, wenn die Säule die stationäre Phase enthält.

18. Einrichtung nach Anspruch 17, wobei der erste Satz von Elektroden (5) und/oder der zweite Satz von Elektroden (5) angeordnet sind:
an einer Innenwand der Säuleneinrichtung (3); und/oder
an einer Sonde, die in die Säuleneinrichtung (3) eingeführt wird.

19. Einrichtung nach Anspruch 17 oder 18, wobei die Sätze von Elektroden (5) jeweils mindestens vier Elektroden umfassen.

## Revendications

1. Procédé (300) de surveillance d'un processus chimique à plusieurs emplacements de détection dans un appareil à colonne (3) à l'aide d'un système de mesure (10) ;
l'appareil à colonne (3) contenant une phase stationnaire solide et étant configuré pour recevoir une phase mobile liquide et permettre l'écoulement de la phase mobile à travers la phase stationnaire dans la direction de l'écoulement ; et
le système de mesure comprenant un premier ensemble d'électrodes (5) agencées circonférentiellement autour d'un premier emplacement de détection de l'appareil à colonne et un deuxième ensemble d'électrodes (5) agencées circonférentiellement autour d'un deuxième emplacement de détection, le deuxième emplacement de détection étant espacé du premier emplacement de détection dans la direction de l'écoulement ;
dans lequel le procédé comprend :
l'écoulement de la phase mobile liquide à travers la phase stationnaire dans la direction de l'écoulement ;
l'application (S1) d'une stimulation électrique au premier ensemble d'électrodes (5) ;
la réception (S2) d'un signal électrique provenant des premier et deuxième ensembles d'électrodes (5) ; et
la détermination (S3) d'une ou plusieurs caractéristiques d'une interaction chimique entre la phase stationnaire solide et la phase mobile liquide en traitant le signal électrique reçu des premier et deuxième ensembles d'électrodes (5).

2. Procédé selon la revendication 1, dans lequel le procédé comprend en outre :
l'écoulement d'une première phase mobile liquide à travers la phase stationnaire dans une direction de l'écoulement;
l'écoulement d'une deuxième phase mobile liquide à travers la phase stationnaire dans la direction de l'écoulement ;
l'application d'une stimulation électrique à la première et/ou à la deuxième série d'électrodes (5) ;
la réception d'un signal électrique de la première et/ou de la deuxième série d'électrodes (5) ; et
la détermination d'une ou plusieurs caractéristiques d'une transition entre la première phase mobile liquide et la deuxième phase mobile liquide dans le premier et/ou le deuxième emplacement de détection par le traitement du signal électrique reçu du premier et/ou du deuxième ensemble d'électrodes (5).

3. Procédé selon la revendication 1 ou 2, dans lequel le procédé chimique comprend un processus de séparation, un processus de réaction ou un processus d'isolation, et, le cas échéant, dans lequel la séparation et/ou l'isolation est obtenue par la sélection d'une phase stationnaire présentant des affinités différentielles avec des composants de la phase mobile.

4. Procédé selon une quelconque revendication précédente, comprenant en outre la détermination d'une distribution spatiale de la phase mobile et/ou de la phase stationnaire dans les premier et deuxième emplacements de détection, et comprenant éventuellement en outre :
la génération d'une indication de qualité associée à la phase stationnaire dans les premier et deuxième emplacements de détection en fonction de la distribution spatiale déterminée.

5. Procédé selon une quelconque revendication précédente, dans lequel la détermination d'une ou plusieurs caractéristiques comprend en outre :
la génération de premières données d'impédance associées au premier emplacement de détection sur la base du signal électrique reçu du premier ensemble d'électrodes (5), la génération de deuxièmes données d'impédance associées au deuxième emplacement de détection sur la base du signal électrique reçu du deuxième ensemble d'électrodes (5), et la détermination d'une ou plusieurs caractéristiques sur la base d'une comparaison entre les premières données d'impédance et les deuxièmes données d'impédance ; et/ou
la comparaison du signal électrique reçu du premier ensemble d'électrodes (5) et du signal électrique reçu du deuxième ensemble d'électrodes (5), et la détermination d'une ou plusieurs caractéristiques sur la base de la comparaison ; et/ou
la génération de données d'impédance associées à des sous-régions d'un volume défini par la première région de détection et la deuxième région de détection sur la base du signal électrique reçu du premier ensemble d'électrodes (5) et du signal électrique reçu du deuxième ensemble d'électrodes (5), la construction d'une représentation volumétrique tridimensionnelle du volume sur la base des données d'impédance et la détermination d'une ou plusieurs caractéristiques sur la base de la représentation volumétrique tridimensionnelle.

6. Procédé selon une quelconque revendication précédente, comprenant en outre l'application d'une stimulation électrique au deuxième ensemble d'électrodes (5).

7. Procédé selon une quelconque revendication précédente, comprenant en outre :
l'application de la stimulation électrique au premier ensemble d'électrodes (5) et/ou au deuxième ensemble d'électrodes (5) dans un premier laps de temps ;
la réception du signal électrique du premier et/ou du deuxième ensemble d'électrodes (5) dans le premier laps de temps ;
l'application d'une deuxième stimulation électrique au premier ensemble d'électrodes (5) et/ou au deuxième ensemble d'électrodes (5) dans un deuxième laps de temps suivant le premier laps de temps ;
la réception d'un signal électrique du premier et/ou du deuxième ensemble d'électrodes (5) dans le deuxième laps de temps ;
la détermination d'une ou plusieurs caractéristiques à partir des signaux électriques reçus au cours des premier et deuxième laps de temps.

8. Procédé selon la revendication 7, comprenant en outre la génération d'une mesure d'achèvement du processus chimique dans le premier et/ou le deuxième emplacements de détection, et éventuellement dans lequel la détermination de la mesure d'achèvement comprend :
la détermination d'un taux de variation basé sur le signal électrique provenant du premier ou du deuxième ensemble d'électrodes (5) au cours du premier laps de temps et sur le signal électrique provenant du même premier ou deuxième ensemble d'électrodes (5) au cours du deuxième laps de temps ; et
si le taux de variation est inférieur à un seuil, la détermination que le processus n'a pas commencé ou qu'il est terminé ; et/ou
si le taux de variation est supérieur à un seuil, la détermination que le processus est incomplet ; et/ou
la détermination d'un taux de traitement basé sur le taux de variation.

9. Procédé selon la revendication 7 ou 8, comprenant en outre :
l'application d'une stimulation électrique au premier et/ou deuxième ensemble d'électrodes (5) à une pluralité de laps de temps, dans lequel la pluralité de laps de temps comprend le premier et le deuxième laps de temps et un laps de temps au cours duquel on sait que le processus chimique se produit ;
la réception de signaux électriques provenant du premier ensemble d'électrodes (5) à plusieurs laps de temps ;
la génération d'une première relation entre les signaux électriques du premier ensemble d'électrodes (5) ;
la réception de signaux électriques provenant du deuxième ensemble d'électrodes (5) à la pluralité de laps de temps ;
la génération d'une deuxième relation entre les signaux électriques provenant du deuxième ensemble d'électrodes (5) ; et
la détermination d'une ou plusieurs caractéristiques en fonction des première et deuxième relations ; et éventuellement
dans lequel le procédé comprend en outre l'application d'une impulsion d'une phase mobile à la colonne, dans lequel la pluralité de laps de temps comprennent un laps de temps pendant lequel l'impulsion traverse les premier et deuxième emplacements de détection.

10. Procédé selon une quelconque revendication précédente, comprenant en outre la détermination d'une distribution spatiale de la phase mobile et/ou de la phase stationnaire au sein du premier et/ou du deuxième emplacement de détection, dans lequel la détermination de la distribution spatiale comprend en outre :
la génération de données d'impédance associées aux sous-régions du premier emplacement de détection ou du deuxième emplacement de détection en fonction du signal électrique reçu du premier ou du deuxième ensemble d'électrodes (5), respectivement ;
la segmentation des données d'impédance en une première partie associée à une ou plusieurs sous-régions du premier ou du deuxième emplacement de détection et une deuxième partie associée à une ou plusieurs sous-régions différentes desdits premier ou deuxième emplacement de détection ;
la comparaison des données d'impédance de la première partie avec les données d'impédance de la deuxième partie ;
la détermination de la distribution spatiale à partir de la comparaison.

11. Procédé selon une quelconque revendication précédente, comprenant en outre :
l'application de la stimulation électrique au premier ensemble d'électrodes (5) dans un premier laps de temps ;
la réception du signal électrique du premier et/ou du deuxième ensemble d'électrodes (5) dans le premier laps de temps ;
l'application d'une deuxième stimulation électrique au premier ensemble d'électrodes (5) dans un deuxième laps de temps suivant le premier laps de temps ;
la réception d'un signal électrique du premier et/ou du deuxième ensemble d'électrodes (5) dans le deuxième laps de temps ;
la détermination d'une ou plusieurs caractéristiques à partir des signaux électriques reçus au cours des premier et deuxième laps de temps.

12. Procédé selon une quelconque revendication précédente, comprenant en outre la commande du processus chimique fondée sur les une ou plusieurs caractéristiques.

13. Procédé selon la revendication 12, dans lequel la ou les caractéristiques comprennent une mesure d'achèvement du processus chimique, dans lequel la commande du processus chimique comprend le réglage d'une heure de fin du processus chimique en fonction de la mesure d'achèvement ; et/ou dans lequel le procédé comprend en outre :
la détermination d'une distribution spatiale de la phase mobile et/ou de la phase stationnaire, et dans lequel la commande du processus chimique comprend la fourniture d'une indication que la distribution spatiale est sous-optimale et/ou le réglage d'une heure de début et/ou d'une heure de fin du processus chimique en fonction de la distribution spatiale.

14. Procédé selon la revendication 12 ou 13, dans lequel le processus chimique est commandé en temps réel.

15. Procédé selon une quelconque revendication précédente, dans lequel la stimulation électrique appliquée comprend une première stimulation électrique à une première fréquence et une deuxième stimulation électrique à une deuxième fréquence, dans lequel :
la première fréquence est sélectionnée en fonction d'une caractéristique de la phase mobile ; et/ou
la deuxième fréquence est sélectionnée en fonction d'une caractéristique de la phase stationnaire ; et/ou
la première ou la deuxième fréquence est sélectionnée en fonction d'une caractéristique d'un réactif cible du processus chimique.

16. Procédé selon une quelconque revendication précédente, comprenant en outre la réception d'un signal électrique provenant d'un ou plusieurs ensembles supplémentaires d'électrodes (5), chacun étant disposé circonférentiellement autour d'un emplacement de détection supplémentaire correspondant, espacé du premier emplacement de détection dans la direction d'écoulement, et dans lequel la détermination des une ou plusieurs caractéristiques de l'interaction chimique comprend en outre le traitement du signal électrique reçu du ou des ensembles supplémentaires d'électrodes (5).

17. Appareil comprenant :
un appareil à colonne (3) configuré pour contenir une phase stationnaire, recevoir une phase mobile et permettre l'écoulement de la phase mobile à travers la phase stationnaire dans une direction d'écoulement (Z) ;
un système de mesure comprenant un premier ensemble d'électrodes (5) disposées circonférentiellement autour d'un premier point de détection (A) de l'appareil à colonne, un deuxième ensemble d'électrodes (5) disposées circonférentiellement autour d'un deuxième point de détection (B), ce deuxième point de détection étant espacé du premier dans la direction de l'écoulement, des moyens pour appliquer une stimulation électrique aux électrodes du premier et/ou du deuxième ensemble d'électrodes (5) et des moyens de réception d'un signal électrique provenant des électrodes du premier et du deuxième ensembles d'électrodes (5) ; et
un processeur configuré pour exécuter le procédé selon une quelconque revendication précédente lorsque la colonne contient la phase stationnaire.

18. Appareil selon la revendication 17, dans lequel le premier ensemble d'électrodes (5) et/ou le deuxième ensemble d'électrodes (5) sont agencés :
sur une paroi intérieure de l'appareil à colonne (3) ; et/ou
sur une sonde insérée dans l'appareil à colonne (3).

19. Appareil selon la revendication 17 ou 18, dans lequel les ensembles d'électrodes (5) comprennent chacun au moins quatre électrodes.
